# EUROPEAN PATENT APPLICATION

(11) **EP 4 533 987 A1**
(43) Date of publication of application: **09.04.2025**
(21) Application number: 23851855.9
(22) Date of filing: 08.08.2023
(51) Int. Cl.: A47J 47/01, A47J 36/00, A47J 27/00

(54) **SEASONING ADDITION CONTROL METHOD AND APPARATUS, AND COOKING DEVICE AND STORAGE MEDIUM**

(30) Priority: 09.08.2022 CN 202210953321; 09.08.2022 CN 202210951444; 16.08.2022 CN 202210984023; 31.08.2022 CN 202211056655; 01.09.2022 CN 202211071813; 01.09.2022 CN 202211061205
(71) Applicant: Tineco Intelligent Technology Co., Ltd., Suzhou, Jiangsu 215168 (CN)
(72) Inventor: DONG, Guangwei, Suzhou, Jiangsu 215168 (CN); HAN, Haiqiang, Suzhou, Jiangsu 215168 (CN); MA, Liangliang, Suzhou, Jiangsu 215168 (CN); ZHOU, Mengtao, Suzhou, Jiangsu 215168 (CN); LI, Wei, Suzhou, Jiangsu 215168 (CN); WU, Rendi, Suzhou, Jiangsu 215168 (CN)
(74) Representative: Renaudo, Adrien Hanouar
(86) International application number: PCT/CN2023/111831
(87) International publication number: WO 2024/032634

(57) **Abstract**

Provided in the present application are a seasoning addition control method and apparatus, and a cooking device and a storage medium. A weighing sensor for measuring the total weight of a plurality of seasoning boxes is provided, and during the discharge process of a target seasoning box among the plurality of seasoning boxes, the discharge situation of the target seasoning box can be calculated according to a measurement result of the weighing sensor, i.e., the weighing sensor being capable of performing calculation regarding the discharge situation of the target seasoning box. Therefore, there is no need to separately provide sensors for a plurality of seasoning boxes, so as to carry out measurement, thereby reducing the number of sensors required for detecting the discharge situation of any one seasoning box, and thus reducing the cost.

## Description

### CROSS-REFERENCE TO RELATED APPLICATIONS

This application claims the priorities of the Chinese Patent Application No. 202210951444.8, filed on August 9, 2022, and entitled "Feeding Apparatus, Cooking Device and Feeding Structure"; the Chinese Patent Application No. 202211056655.1, filed on August 31, 2022, and entitled "Pipe Cleaning Method, Feeding Apparatus, Feeding System and Cooking Device"; the Chinese Patent Application No. 202211071813.0, filed on September 1, 2022, and entitled "Feeding Control Method, Feeding Apparatus, Feeding System and Cooking Device"; the Chinese Patent Application No. 202211061205.1, filed on September 1, 2022, and entitled "Feeding Control Method, Feeding Apparatus, Feeding System and Cooking Device"; the Chinese Patent Application No. 202210984023.5, and filed on August 16, 2022; and the Chinese Patent Application No. 202210953321.8, and filed on August 9, 2022, which are hereby incorporated by reference in their entireties.

### TECHNICAL FIELD

The present disclosure relates to the technical field of cooking apparatuses, and more particularly, to a feeding control method and apparatus, and a cooking device and a storage medium.

### BACKGROUND

A cooking device is an electrical device that can cook cooking ingredients. During the cooking process, the main machine controller of the cooking device can control the feeding apparatus to feed seasonings to the cooking container of the cooking device, thereby completing the cooking.

If the cooking is completed under the condition of the seasoning in the material bottle in the feeding apparatus being insufficient, the taste of the dishes prepared by this cooking device will be affected, affecting the user experience. A sensor may be provided in each material bottle in the feeding apparatus to detect the discharge amount of each material bottle. Avoid the situation where the actual discharge amount of the material bottle is not equal to the preset amount due to lack of seasonings in the material bottle or other reasons.

However, providing one separate sensor for each material bottle, leading to a large number of sensors provided in the feeding apparatus, the cost of the feeding apparatus is high accordingly.

### SUMMARY

In order to solve at least one of the above technical problems, the present application provides a feeding control method and apparatus, a cooking device and a storage medium, and the technical solution adopted is as follows.

The present application provides a feeding control method for controlling a feeding apparatus to feed seasoning to a cooking container of a cooking device, where the feeding apparatus includes a plurality of material boxes, and the method includes: obtaining discharge indication information, where the discharge indication information is used to indicate that a target material box is a material box currently discharged material in the plurality of material boxes; and calculating a current actual discharge amount of the target material box according to a detection result of a weighing sensor for detecting a total weight of the plurality of material boxes and the discharge indication information.

The present application provides a feeding apparatus for feeding seasoning to a cooking container of a cooking device, the feeding apparatus including: a plurality of material boxes; an obtaining unit, configured to obtain discharge indication information, where the discharge indication information is used to indicate that a target material box in the plurality of material boxes, and to start a discharge process; and a calculating unit, configured to calculate a current actual discharge amount of the target material box according to a detection result of a weighing sensor for detecting a total weight of the plurality of material boxes and the discharge indication information.

The present application provides a feeding apparatus, including: a processor and a memory; the memory is used to store a program, and the processor calls the program stored in the memory to execute the method described in the above embodiment.

The present application provides a computer-readable storage medium, where the computer-readable storage medium stores a program and data, and the program is executed by a processor to implement the method described in the above embodiment. The present application provides a feeding system, including a feeding apparatus and a control end, where the control end is communicatively connected with the feeding apparatus and is used to control the feeding apparatus to perform a feeding operation and implement the feeding control method as described in the above embodiment.

The present application provides a cooking device, including a cooking container, a feeding system and a feeding pipe component; where the feeding system includes a feeding apparatus and a control end, the feeding apparatus includes a plurality of material boxes and a discharge pipe corresponding to each material box, each discharge pipe is respectively connected with the feeding pipe component, so as to feed seasoning required for cooking to the cooking container through the feeding pipe component; the feeding apparatus also includes a memory and a processor, the memory is used to store a computer program, and when the computer program is executed by the processor, to implement the feeding control method as described in the above embodiment.

The present application provides a feeding apparatus, including: a material amount detection unit, a weighing sensor and a plurality of material boxes; where the weighing sensor is used to detect a total weight of the plurality of material boxes; the material amount detection unit is used to obtain discharge indication information, and calculate a current actual discharge amount of the target material box according to the discharge indication information and a detection result of the weighing sensor; the target material box is the material box currently discharge material in the plurality of material boxes indicated by the discharge indication information.

The present application provides a cooking device, including a feeding apparatus as described in the above embodiment.

The present application provides a cooking device, including a feeding apparatus and a cooking container; where, the feeding apparatus includes: a weighing component, including a weighing sensor; a plurality of material boxes, provided on the weighing component, and the weighing sensor is used to detect a total weight of the plurality of material boxes; a material amount detection unit, used to obtain discharge indication information, and calculate a current actual discharge amount of a target material box according to the discharge indication information and a detection result of the weighing sensor; the target material box is a material box currently discharge material in the plurality of material boxes indicated by the discharge indication information; at least two feeding components, the feeding component one-to-one corresponds to the material boxes, each feeding component includes a feeding pipe, a first pipe segment connecting piece, a second pipe segment connecting piece and a driving piece, the feeding pipe includes a first pipe segment and a second pipe segment, the first pipe segment connecting piece is fixed with the weighing component, a corresponding material box is connected to the first pipe segment connecting piece, the first pipe segment connects the first pipe segment connecting piece and the second pipe segment connecting piece, the second pipe segment connects the second pipe segment connecting piece and the driving piece, a downstream of the driving piece is connected to the cooking container, and the second pipe segment connecting piece is fixed with the driving piece.

The present application provides a feeding structure, including a weighing component, including a weighing sensor, where the weighing sensor is used to detect a total weight of a plurality of material boxes provided on the weighing component; a material amount detection unit, used to obtain discharge indication information, and calculate a current actual discharge amount of a target material box according to the discharge indication information and a detection result of the weighing sensor; the target material box is a material box currently discharge material in the plurality of material boxes indicated by the discharge indication information; at least two groups of feeding components, the feeding component includes a feeding pipe, a first pipe segment connecting piece, a second pipe segment connecting piece and a driving piece, the feeding pipe includes a first pipe segment and a second pipe segment, the first pipe segment connecting piece is used to connect seasoning, the first pipe segment connects the first pipe segment connecting piece and the second pipe segment connecting piece, the second pipe segment connects the second pipe segment connecting piece and the driving piece, a downstream of the driving piece is used to connect to a cooking container, the first pipe segment connecting piece is fixed with the weighing component, and the second pipe segment connecting piece is fixed with the driving piece.

### BENEFICIAL EFFECT

The embodiments of the present application have at least the following beneficial effects: a weighing sensor is provided for a plurality of material boxes to conduct a total weight detection, according to a detection result of the weighing sensor detected in the process of a target material box in the plurality of material boxes discharging, a weighing sensor of the target material box can be calculated, and the discharging condition of the target material box can be detected. There is no need to respectively provide a sensor for each material box for detection, reducing the number of sensors required for detecting the discharging condition of any material box, and reducing costs.

### BRIEF DESCRIPTION OF THE DRAWINGS

FIG. 1 is a schematic diagram of a feeding apparatus;
FIG. 2 is a schematic cross-sectional view of a material box in the feeding apparatus shown in FIG. 1;
FIG. 3 is a schematic structural diagram of a feeding apparatus of a cooking device provided in an embodiment of the present application;
FIG. 4 is a schematic structural diagram of another feeding apparatus provided in an embodiment of the present application;
FIG. 5 is a side view of a feeding apparatus shown in FIG. 4;
FIG. 6 is a schematic flow chart of a material amount detection method for a cooking device provided in an embodiment of the present application;
FIG. 7 is a schematic flow chart of a material shortage detection method provided in an embodiment of the present application;
FIG. 8 is a schematic structural diagram of a material amount detection apparatus provided in an embodiment of the present application;
FIG. 9 is a schematic structural diagram of another material amount detection apparatus provided in an embodiment of the present application;
FIG. 10 is a schematic structural diagram of a feeding apparatus provided in an embodiment of the present application;
FIG. 11 is a flow chart of a feeding control method provided in an embodiment of the present application;
FIG. 12 is a schematic diagram of a functional module of a feeding control apparatus provided in an embodiment of the present application;
FIG. 13 is another schematic structural diagram of a feeding apparatus provided in the embodiment of the present application;
FIG. 14 is a schematic diagram of a system structure of a feeding system provided in an embodiment of the present application;
FIG. 15 is a schematic structural diagram of a feeding apparatus provided in an embodiment of the present application;
FIG. 16 is a flow chart of a feeding control method provided in an embodiment of the present application;
FIG. 17 is a schematic diagram of a functional module of a feeding control apparatus provided in an embodiment of the present application;
FIG. 18 is another schematic structural diagram of a feeding apparatus provided in an embodiment of the present application;
FIG. 19 is a schematic diagram of a system structure of a feeding system provided in an embodiment of the present application;
FIG. 20 is a schematic structural diagram of a feeding apparatus provided in an embodiment of the present application;
FIG. 21 is a schematic flow chart of a pipe cleaning method provided in an embodiment of the present application;
FIG. 22 is a schematic diagram of a functional module of a pipe cleaning apparatus provided in an embodiment of the present application;
FIG. 23 is another schematic structural diagram of a feeding apparatus provided in an embodiment of the present application;
FIG. 24 is a schematic diagram of a system structure of a feeding system provided in an embodiment of the present application;
FIG. 25 is a schematic structural diagram of a feeding apparatus;
FIG. 26 is a schematic structural diagram of a material box fitted on a weighing component;
FIG. 27 is a schematic structural diagram of several feeding components;
FIG. 28 is a schematic structural diagram of a single feeding component;
FIG. 29 is an exploded schematic diagram of a single feeding component;
FIG. 30 is a schematic diagram of an arrangement of a first pipe segment connecting piece in FIG. 25;
FIG. 31 is a schematic diagram of a feeding apparatus;
FIG. 32 is a schematic structural diagram of a base for a feeding apparatus provided in an embodiment of the present application;
FIG. 33 is a schematic top view of a protective cover and a base for a feeding apparatus;
FIG. 34 is a schematic structural diagram of another feeding apparatus provided in an embodiment of the present application;
FIG. 35 is a schematic structural diagram of a feeding apparatus shown in FIG. 34 with a protective cover removed;
FIG. 36 is a schematic cross-sectional view of a feeding apparatus shown in FIG. 34; and
FIG. 37 is a partially enlarged view of a feeding apparatus shown in FIG. 36.

### DETAILED DESCRIPTION OF EXAMPLE EMBODIMENTS

To make the purpose, technical solutions and beneficial effects of the present application clearer, the present application is further described in detail below in conjunction with the accompanying drawings and specific implementation methods. It should be understood that the specific embodiments described in this specification are only for explaining the present application, and are not intended to limit the present application.

In the description of the present application, it should be understood that the terms "center", "longitudinal", "lateral", "length", "width", "thickness", "up", "down", "front", "back", "left", "right", "vertical", "horizontal", "top", "bottom", "inside", "outside", "clockwise", "counterclockwise" and the like indicate orientations or positional relationships according to the orientations or positional relationships shown in the accompanying drawings, and are only for the convenience of describing the present application and simplifying the description, and do not indicate or imply that the referred apparatus or element must have a specific orientation, be constructed and operated in a specific orientation, and therefore should not be understood as a limitation on the present application. In addition, the terms "first" and "second" are used for descriptive purposes only and cannot be understood as indicating or implying relative importance or implicitly indicating the amount of the indicated technical features. Therefore, the features defined as "first" or "second" may explicitly or implicitly include one or more of the features. In the description of the present application, "plurality" means two or more than two, unless otherwise clearly and specifically defined.

In the description of the present application, it should be noted that, unless otherwise clearly specified and limited, the terms "installed", "connected" and "connecting" should be understood in a broad sense. For example, it can be a fixed connection, a detachable connection, or an integral connection; it can be a mechanical connection, a direct connection, or an indirect connection through an intermediate medium, and it can be the internal connection between two elements or the interaction relationship between two elements. For those of ordinary skill in the art, the specific meanings of the above terms in this application can be understood according to specific circumstances.

In the present application, unless otherwise clearly specified and limited, a first feature being "on" or "under" a second feature may include the first and second features being in direct contact, or may include the first and second features not being in direct contact but being in contact through another feature between them. Moreover, a first feature being "above", "over" and "on" a second feature includes the first feature being directly above and obliquely above the second feature, or simply means that the first feature is at a horizontal height more than the second feature. The first feature being "below," "beneath," and "under" the second feature includes the first feature being directly below and obliquely below the second feature, or simply means that the first feature is at a horizontal height less than the second feature.

In the embodiment of the application, "parallel" refers to a state where the angle formed by a straight line and a straight line, a straight line and a plane, or a plane and a plane is -1° to 1°. Furthermore, "perpendicular" refers to a state where the angle formed by a straight line and a straight line, a straight line and a plane, or a plane and a plane is 89° to 91°. Equal distances or equal angles refer to a state where the tolerance range is -1% to 1%.

With the quickening pace of life and the rise of the kitchen revolution, automated cooking device will gradually become the protagonist of kitchen cooking.

Cooking device is an electrical device that can cook cooking ingredients without human supervision. After the user puts the prepared main ingredients and side ingredients into the cooking container of the cooking device and sets the program, the cooking device can automatically realize a plurality of functions such as stir-frying, frying, cooking, deep-frying, braising, steaming, boiling, baking, simmering, and stewing according to the set program, and seasonings can be fed to the cooking container of the cooking device through the feeding apparatus, thus realizing automatic cooking.

**In** order to further improve the intelligence of the cooking device and lower the user's usage threshold, it is also necessary to detect some states of the cooking device itself as much as possible. For example, some states related to the feeding apparatus, such as the installation state of the material box in the feeding apparatus, the seasonings stored in the material box, the discharge amount of the material box, the connectivity between the feeding apparatus and the main machine of the cooking device, whether there is a material shortage in the material box, etc. The feeding apparatus mainly refers to an apparatus for feeding seasonings, and of course it is not excluded that it can also be a main ingredient feeding apparatus. **In** the scenario of this embodiment, it is set that various seasonings are placed in each material box of the feeding apparatus, especially seasonings in liquid or fluid state. Seasonings include auxiliary items that people use to prepare food, such as single seasonings like soy sauce, salt, and sauce, and compound seasonings like chicken essence seasoning.

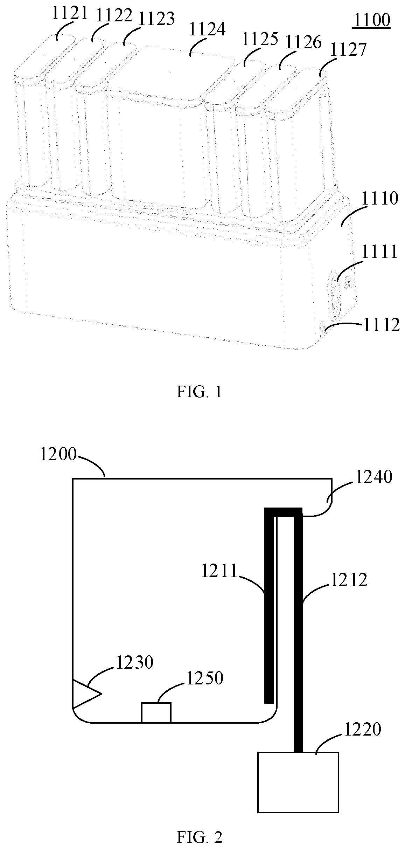

FIG. 1 is a schematic structural diagram of a feeding apparatus. The feeding apparatus 1100 can be used in a cooking device.

The feeding apparatus 1100 includes a base 1110 and a plurality of material boxes 1121 to 1127. The plurality of material boxes 1121 to 1127 are provided above the base 1110. The user puts a variety of seasonings into the individual material boxes 1121 to 1127 respectively.

A pump corresponding to each material box is provided in the base 1110. Each pump is used to extract the seasoning from its corresponding material box.

The base 1110 is provided with a material output interface 1111 and an electrical interface 1112. The seasoning extracted from the material box can be transported to the cooking container of the cooking device through the material output interface 1111 via the feeding pipe.

The cooking container may be located in the main machine of the cooking device. The main machine can supply power to the feeding apparatus 1100 through the electrical interface 1112.

Information exchange can be performed between the main machine of the cooking device and the feeding apparatus 1100 of the cooking device. The main machine and the feeding apparatus 1100 can communicate via wired or wireless means. The wireless communication means may be, but is not limited to, Bluetooth, ZigBee, wireless-fidelity (Wi-Fi), etc.

Various corresponding functions can be realized through information interaction between the main machine and the feeding apparatus 1100. For example, the processor provided on the main machine can control the feeding apparatus 1100 to automatically feed seasoning to the cooking container 121 located in the main machine, and receive the detection result of the feeding apparatus 1100 on whether there is a material shortage in the material box, according to the information interaction between the main machine and the feeding apparatus.

FIG. 2 is a schematic diagram of a material box. The material box 1200 shown in FIG. 2 may be any one of the material boxes 1121 to 1127.

As shown in FIG. 2, an internal pipe 1211 is provided inside the material box 1200, and an external pipe 1211 is provided outside the material box 1200. The bottom of the internal pipe 1211 may or may not be in contact with the bottom of the material box 1200. A position of the side wall of the material box 1200 near the top may be provided with a protrusion 1240. The top of the internal pipe 1210 is connected to the top of the external pipe 1211 through the bottom of the protrusion 1240.

The fluid in the material box 1200 may flow to the material output interface 1111 after passing through the internal pipe 1211 and the external pipe 1211. The pump 1220 corresponding to the material box 1200 can provide power for the flow of the fluid in the internal pipe 1211 and the external pipe 1211, so that the fluid in the material box 1200 flows to the material output interface 1111, that is, the material box 1200 discharging.

The material box 1200 may be provided on a loading platform of the feeding apparatus 1100. The upper surface of the loading platform may expose the upper surface of the base 1110. The bottom of the material box 1200 may be provided with a fixing apparatus 1250. The fixing apparatus 1250 may be a recessed portion provided at the bottom of the material box 1200 and recessed toward the inside of the material box 1200. The recessed portion cooperates with the raised portion provided on the loading platform, so that the relative position of the material box 1200 and the loading platform is stable. The side wall of the material box may be provided with a liquid level switch 1230. The liquid level switch 1230 includes a triangular prism structure and a photoelectric component.

The height of the triangular prism structure may be determined according to the height of the bottom of the internal pipe 1211. For example, the height of the triangular prism structure may coincide with the height of the bottom of the internal pipe 1211.

The photoelectric component includes an optical emitter and an optical receiver. The refractive indexes of the air and the fluid to the optical signal emitted by the optical emitter are different. When the amount of fluid in the material box 1200 is large and covers the triangular prism structure, the optical signal emitted by the optical emitter cannot be transmitted to the optical receiver. When the amount of fluid in the material box 1200 is small and does not cover the triangular prism structure, the optical signal emitted by the optical emitter is transmitted to the optical receiver.

The optical receiver can send optical signal reception information to the material box detection apparatus when receiving the optical signal emitted by the optical emitter. When the material box detection apparatus receives the optical signal reception information sent by the optical receiver, it can determine that the material box 1200 is in material shortage.

When the material box detection apparatus determines that the material box 1200 is in material shortage, it can send a reminder information to remind the user to refill the seasoning. Exemplarily, the material box detection apparatus can send material shortage indication information to the main machine of the cooking device to instruct the abnormal indicator light set in the main machine to flash, or instruct the control buzzer set in the main machine to sound, or instruct the speaker set in the main machine to make voice broadcast, etc., to remind the user to refill seasoning.

A triangular prism structure is provided on the inner side of the box body of the material box, which increases the difficulty of manufacturing the material box and affects the appearance of the material box.

With the improvement of living standards, more and more types of seasonings are needed to improve the taste of dishes. Providing a sensor for each material box for detection, a large number of electronic components are required in the feeding apparatus, which makes the cost of the feeding apparatus high.

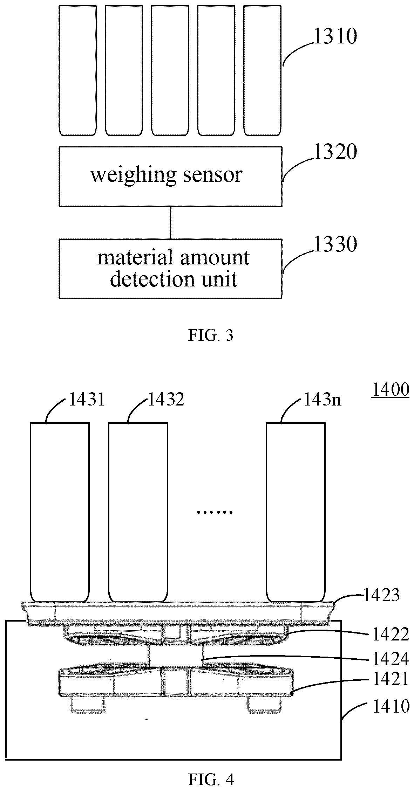

In order to solve the above problems, the embodiment of the present application provides a feeding apparatus, a material amount detection method and apparatus for a cooking device. The material amount detection method provided in the embodiment of the present application is described below in conjunction with FIGs. 3 to 6.

FIG. 3 is a schematic structural diagram of a feeding apparatus for a cooking device provided in an embodiment of the present application. The feeding apparatus is a part of a cooking device, and the cooking device is used to realize automatic cooking, and specifically can be a cooking robot.

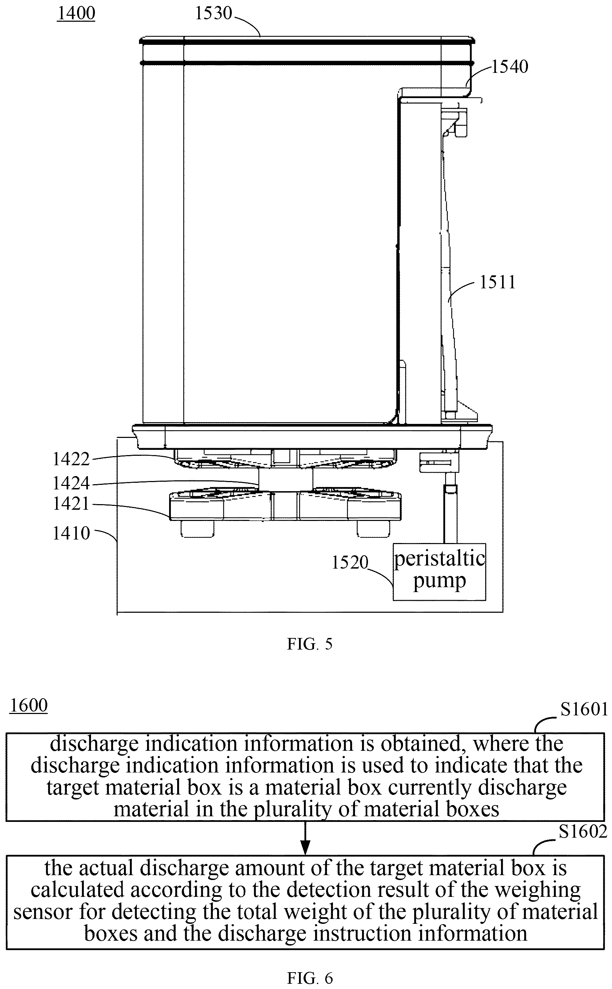

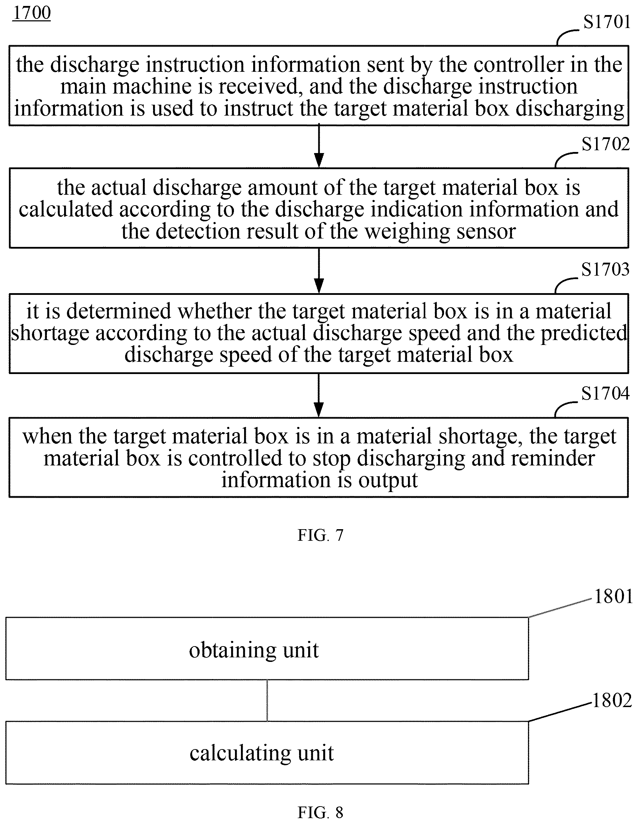

The feeding apparatus includes a plurality of material boxes 1310, a weighing sensor 1320, and a material amount detection unit 1330. The material amount detection unit 1330 may be a module responsible for material amount detection configured in the control unit of the cooking device, such as a certain software or a certain functional unit of the software. The material amount detection unit 1330 can be used to execute the material shortage detection method shown in FIG. 7 or the material amount detection method shown in FIG. 6.

The specific structure of the feeding apparatus shown in FIG. 3 can refer to the description shown in FIG. 4. The feeding apparatus 1400 includes a base 1410 and a plurality of material boxes 1431 to 143n.

A lower fixing frame 1421 and an upper fixing frame 1422 are provided inside the base 1410, and a weighing sensor 1424 is located between the lower fixing frame 1421 and the upper fixing frame 1422. The lower fixing frame 1421 is fixed inside the base 1410. The upper fixing frame 1422 is provided with a loading platform 1423. The loading platform 1423 may be fixed or placed on the upper fixing frame 1422. The upper surface of the loading platform 1423 is exposed above the base 1410.

A plurality of material boxes 1431 to 143n are placed on the loading platform 1423. Each of the plurality of material boxes 1431 to 143n is used to contain a specific seasoning. The material box sum can be referred to as a material box. The seasonings contained in each material box may all be liquid. For example, 1431 is used to contain vinegar, 1432 is used to contain salt water, and so on.

A plurality of peristaltic pumps corresponding one-to-one to the plurality of material boxes 1431 to 143n are also provided inside the base 1410.

FIG. 5 is a side view of the feeding apparatus shown in FIG. 4. As shown in FIG. 5, the peristaltic pump 1520 is a peristaltic pump corresponding to the material box 1530. The material box 1530 may be the material box 143n, and the plurality of material boxes 1431 to 143n may have the same structure.

Each peristaltic pump is used to extract the seasoning in the material box corresponding to the peristaltic pump.

A peristaltic pump uses a roller to squeeze a hose to move fluid through the hose. Just like squeezing a fluid-filled hose with your fingers, the fluid in the hose moves forward as your fingers slide forward. The peristaltic pump has high accuracy and stability in fluid extraction.

An internal pipe (not shown) is provided inside the material box 1530, and an external pipe 1511 is provided outside the material box 1530. The bottom of the internal pipe may or may not be in contact with the bottom of the material box 1530. A position of the side wall of the material box 1530 near the top may be provided with a protrusion 1540. The top of the internal pipe is connected to the top of the external pipe 1511 through the bottom of the protrusion 1540.

The feeding apparatus 1400 may further include a material amount detection unit. The material amount detection unit can execute the method shown in FIG. 3.

The weighing sensor 1320 is used to detect the total weight of the plurality of material boxes 1310; the material amount detection unit 1330 is used to obtain discharge indication information, and calculate the current actual discharge amount of the target material box according to the discharge indication information and the detection result of the weighing sensor 1330; the target material box is the material box currently discharge material in the plurality of material boxes indicated by the discharge indication information.

The way of obtaining the discharge indication information may be to generate the discharge indication information, or to receive the discharge indication information sent by other apparatuses.

For example, a control unit in the cooking device for controlling a feeding apparatus discharging may send discharge instruction information. The discharge instruction information sent by the control unit can be used to control the target material box discharging, or can be used to instruct the material amount detection unit 1330 to control the target material box discharging.

Alternatively, the feeding apparatus may include a plurality of conveying apparatuses. Different material boxes 1310 may correspond to different conveying apparatuses. Each conveying apparatus is used to discharge the material in the material box corresponding to the conveying apparatus. Each conveying apparatus can be used to send discharge indication information to the material amount detection unit 1330 when discharging the material in its corresponding material box. Therefore, the material box corresponding to the conveying apparatus that sends the discharge instruction information is the target material box. The conveying apparatus can send discharge indication information periodically or non-periodically when discharging the material in its corresponding material box. The conveying apparatus may also send a discharge stop information to the material amount detection unit 1330 when stopping discharging the material in its corresponding material box.

Alternatively, the feeding apparatus may include a discharge detection unit, and the discharge detection unit is used to detect the discharging conditions of the plurality of material boxes 1910 to determine the target material box currently discharge material in the plurality of material boxes 1910. The discharge detection unit may be used to send the discharge indication information to the material amount detection unit 1330 when determining at least one material box in the plurality of material boxes 1910 discharging. The discharge detection unit may send the discharge indication information periodically or non-periodically. The discharge detection unit may also send the discharge stop information to the material amount detection unit 1330 when detecting the target material box stopping discharging material.

The feeding apparatus shown in FIG. 3 may further include a loading platform. The loading platform is used to carry the plurality of material boxes 1310, and the weighing sensor 1320 is located below the loading platform. The weighing sensor 1320 is used to detect the total weight of the plurality of material boxes, specifically to detect the weight of the object carried by the loading platform.

By setting up a loading platform, the plurality of material boxes can be placed on the loading platform. The setting of the loading platform makes it easier to detect the total weight of the plurality of material boxes and can make the placement of plurality of material boxes more stable.

The way for determining the actual discharge amount of the target material box can be to first obtain the first weight of the current plurality of material boxes 1310 and the second weight of the plurality of material boxes 1310 after a target period according to the real-time detection result of the weighing sensor 1320 on the plurality of material boxes 1310; then, calculate the difference between the first weight and the second weight to obtain the actual discharge amount after the target period.

From the current time point to the time point after the target period has passed, that is, during the period between the first weight and the second weight detected by the weighing sensor 1320, the target material box discharging continually.

The difference between the weights of the plurality of material boxes 1310 detected by the weighing sensor 1320 at the start point and the end point of the target period, that is, the weight change of the plurality of material boxes 1310 is calculated. According to the discharge indication information, the target material box in the plurality of material boxes 1310 being discharging. Therefore, the weight reduction of the plurality of material boxes 1310 is the weight change of the target material box, which can be used as the current actual discharge amount of the target material box. Thereby, by providing a weighing sensor 1320 for a plurality of material boxes 1310, it is possible to detect the discharge amount of a certain material box therein without providing a plurality of sensors, thereby reducing the number of sensors and lowering costs.

The weighing sensor 1320 can detect the weight of plurality of material boxes periodically or non-periodically.

The material amount detection unit 1330 can be used not only to detect the material amount of a target material box in the plurality of material boxes, but also to detect whether the target material box is in material shortage. The target material box in material shortage, that is, the amount of material in the target material box cannot meet the current demand.

The material amount detection unit 1330 can determine that the target material box is in material shortage when the current actual discharge amount of the target material box is relatively small and smaller than a preset value.

Alternatively, the material amount detection unit 1330 may be used to determine whether the target material box is in material shortage according to a current actual discharge amount of the target material box and a discharge amount theoretical value of the target material box.

The material amount detection unit 1330 compares the current actual discharge amount of the target material box with the discharge amount theoretical value of the target material box, and the obtained judgment result on whether the target material box is in material shortage is more accurate.

Specifically, the material amount detection unit 1330 can be used to calculate the ratio of the difference between the first weight and the second weight to the target period to obtain the actual discharge speed of the target material box. Afterwards, the material amount detection unit 1330 can be used to determine whether the target material box is in material shortage according to the current actual discharge speed of the target material box and the discharge speed theoretical value of the target material box. Different material boxes may correspond to different discharge speed theoretical values. The discharge speed theoretical value may be preset or determined according to the flow parameter of the conveying apparatus of the target material box.

In order to determine the discharge speed theoretical value, the flow parameter of the conveying apparatus of the target material box can be obtained, and the discharge speed theoretical value calculated by weight is calculated according to the flow parameter and the density of the material stored in the target material box. The discharge speed theoretical value can be expressed as the product of the flow parameter and the density of the material stored in the target material box. Since the density of the materials stored in different material boxes may be different, even if each material box in the plurality of material boxes 1310 corresponds to the same flow parameter, when different material boxes are used as target material boxes, the discharge speed theoretical values may also be different.

The material amount detection unit 1330 may determine that the target material box is in material shortage when a difference value obtained by subtracting the actual discharge speed from the discharge speed theoretical value is greater than or equal to a preset threshold value.

The feeding apparatus also includes a peristaltic pump as a conveying apparatus, and the peristaltic pump is used to pump out the fluid in the target material box. The flow parameter is the volume of the fluid in the target material box pumped out by the peristaltic pump per unit time.

The feeding apparatus may include a plurality of peristaltic pumps corresponding to each material box in the material box 1310. Each peristaltic pump can be used to pump out the material in the corresponding material box.

When there is material in the material box, the theoretical value of the flow parameter of the peristaltic pump is almost equal to the actual value, that is, the flow parameter set for the peristaltic pump has high accuracy and stability. By using a peristaltic pump to pump out the material in the target material box, the accuracy of the result of judging whether the target material box is in material shortage can be improved.

The material box can be used to carry seasonings; the material amount detection unit 1330 can be specifically used to receive the discharge indication information sent by the controller of the cooking device, the material discharged from the target material box is used to be put into the cooking container of the cooking device, and the feeding apparatus belongs to the cooking device.

During the cooking process, the amount of various seasonings used has a great impact on the taste of the dishes. In the process of feeding seasonings in the target material box, it is detected whether the target material box is in material shortage, so that the material shortage can be handled accordingly, thereby improving the taste of the dishes and enhancing the user experience.

FIG. 6 is a schematic flow chart of a material amount detection method provided in an embodiment of the present application. The discharge amount detection method provided in this embodiment can be specifically applied to an electronic device with a discharge amount detection function. The electronic device may be located in the feeding apparatus. The feeding apparatus may include a weighing sensor and a plurality of material boxes. The feeding apparatus may be, for example, the feeding apparatus shown in FIG. 3 or FIG. 4.

The method shown in FIG. 6 includes S1601 to S1602.

In S1601, discharge indication information is obtained, where the discharge indication information is used to indicate that the target material box is a material box currently discharge material in the plurality of material boxes.

Specifically, obtaining the discharge instruction information may be generating the discharge instruction information, or may be receiving the discharge instruction information sent by other apparatuses.

The method 1600 may be used in a cooking device. The cooking device may include a cooking container and the plurality of material boxes.

That is to say, the material box can be used to carry seasonings.

In some embodiments, the apparatus executing method 1600 can generate the discharge instruction information when it is necessary to put the seasoning in the target material box into the cooking container. The discharge indication information is used to control the target material box discharging.

In other embodiments, the apparatus executing method 1600 may receive discharge instruction information sent by a controller of the cooking device, and the material discharged from the target material box is used to be put into a cooking container of the cooking device. The discharge instruction information sent by the controller can be used to control the target material box discharging. Alternatively, the discharge instruction information sent by the controller can be used to instruct the apparatus executing method 1600 to control the target material box discharging.

That is to say, the discharge indication information can be used to instruct the target material box to start discharging, that is, to instruct the target material box to start the process of discharging.

In some other embodiments, the apparatus executing method 1600 may receive the discharge indication information sent by the conveying apparatus or the discharge detection unit.

Different material boxes may correspond to different conveying apparatuses. Each conveying apparatus is used to discharge the material in the material box corresponding to the conveying apparatus. Each feeding apparatus may be used to send discharge instruction information to the apparatus executing method 1600 when discharge the material in its corresponding material box. Therefore, the material box corresponding to the conveying apparatus that sends the discharge instruction information is the target material box. The conveying apparatus can send the discharge indication information periodically or non-periodically when discharging the material in its corresponding material box.

The discharge detection unit is used to detect the discharge conditions of the plurality of material boxes to determine the target material box currently discharging in the plurality of material boxes in the plurality of material boxes 1910. The discharge detection unit can be used to send the discharge indication information to the apparatus executing method 1600 to indicate at least one material box being discharging when it is determined that at least one material box in the plurality of material boxes being discharging. The at least one material box is the target material box. The discharge detection unit may send the discharge indication information periodically or non-periodically.

The apparatus executing method 1600 may determine the target material box starting the process of discharging when receiving the discharge instruction information for the first time.

In S1602, the actual discharge amount of the target material box is calculated according to the detection result of the weighing sensor for detecting the total weight of the plurality of material boxes and the discharge instruction information.

Specifically, the time point at which the target material box starts the discharging may be determined according to the discharge indication information, that is, the time point at which the target material box starts the discharging. After the time point when the discharge instruction information starts the discharging, the target material box discharges.

The plurality of material boxes can be placed on a loading platform, the weighing sensor is located below the loading platform, the loading platform is used to carry the plurality of material boxes, and the weighing sensor is used to detect the total weight of the plurality of material boxes, specifically to detect the weight of the object carried by the loading platform.

By setting up a loading platform, the plurality of material boxes can be placed on the loading platform. The setting of the loading platform makes it easier to detect the total weight of the plurality of material boxes and can make the placement of plurality of material boxes more stable.

The current actual discharge amount of the target material box may refer to the discharge amount of the target material box in a short period of time before or after the current moment.

The weighing sensor is used to detect the total weight of the plurality of boxes. According to the real-time detection result of the weighing sensor, the first weight of the plurality of material boxes at present and the second weight of the plurality of material boxes after a target period can be obtained respectively.

That is, the weighing sensor can perform detection at present to obtain the first weight, and perform detection at a time point after a target period has passed to obtain the second weight.

Thereby, the difference between the first weight and the second weight can be calculated, and the difference can be determined as the current actual discharge amount of the target material box according to the discharge indication information.

The difference between the weights of the plurality of material boxes detected by the weighing sensor at the start point and the end point of the target period, that is, the weight change of the plurality of material boxes is calculated. According to the discharge indication information, the target material box in the plurality of material boxes being discharging. Therefore, the weight reduction of the plurality of material boxes is the weight change of the target material box, which can be used as the current actual discharge amount of the target material box. Thereby, by providing one weighing sensor for the plurality of material boxes, the discharge amount of a single material box can be detected without providing a plurality of sensors, thereby reducing the number of sensors and reducing costs.

The weighing sensor can detect the weight of the plurality of material boxes periodically or non-periodically.

The target period may be the period between the time point when the target material box starts the discharging and the time point when the weighing sensor performs the most recent detection.

Alternatively, the target period may be the period between two adjacent detections of the weighing sensor.

When the target period is the period between two adjacent detections of the weighing sensor, the target period may be random or preset. For example, the weighing sensor may perform periodic detection, and the target period may be the length of the detection period.

In some embodiments, after the target material box starts the discharging, the preset period can be used as the target period, and S 1602 can be performed periodically. After S1601, discharge stop information may also be obtained, and the discharge stop information is used to instruct the target material box to stop discharging. The weighing sensor can perform detection at the time point when the target material box stops the discharging. The time between the time point when the target material box stops the discharging and the time point when the weighing sensor performs the last detection according to the preset period in the process of the target material box discharging can be used as the target period for the last step S1602. Therefore, in the process of the target material box discharging, the discharge amount of the target material box can be continuously monitored.

The discharge stop information may be generated by the apparatus executing method 1600, or the discharge stop information may be received by the apparatus executing method 1600 from other apparatuses.

In other embodiments, the discharge indication information may indicate the duration of the discharging of the target material box. The target period may be less than or equal to the target material box discharging period.

For example, the target material box discharging period may be an integer multiple of the target period. Therefore, after the target material box starts the discharging, S 1602 can be performed periodically according to the target period. Therefore, in the process of the target material box discharging, the discharge amount of the target material box can be continuously monitored.

Alternatively, after the target material box starts the discharging, the preset period can be used as the target period and S1602 is performed multiple times periodically. The number of times S1602 is performed periodically according to a preset period can be obtained by obtaining the quotient of the period for the target material box discharging divided by the preset period. After S1602 is performed plurality of times periodically according to the preset period, the remainder of the period for the target material box discharging divided by the preset period can be used as the target period to perform S1602 again. Therefore, in the process of the target material box discharging, the discharge amount of the target material box is continuously monitored.

After each execution of S 1602, it can be determined whether the target material box is in material shortage according to the current actual discharge amount of the target material box. After S1602 is performed once, if it is determined that the current actual discharge amount of the target material box is small and is less than a preset value, it can be determined that the target material box is in material shortage. That is, when the target material box should perform discharging, the total weight of the plurality of material boxes remains almost unchanged, that is, the actual discharge amount of the target material box is very small. In this case, it can be determined that the target material box is in a material shortage.

After each execution of S 1602, it can be determined whether the target material box is in a material shortage according to the actual discharge amount of the target material box and the discharge amount theoretical value of the target material box.

The discharge amount theoretical value of the target material box may be determined according to the discharge speed theoretical value of the target material box. The discharge amount theoretical value of the target material box is the product of the discharge speed theoretical value of the target material box and the target period.

When the difference between the discharge amount theoretical value of the target material box and the actual discharge amount of the target material box is greater than or equal to a preset value, it can be determined that the target material box is in a material shortage.

Alternatively, the actual discharge speed of the target material box may be calculated according to the actual discharge amount of the target material box, and whether the target material box is in a material shortage may be determined according to the actual discharge speed of the target material box.

Specifically, the ratio of the difference between the first weight and the second weight to the target period may be calculated to obtain the actual discharge speed of the target material box. Thereby, it is possible to determine whether the target material box is in a material shortage according to the actual discharge speed of the target material box.

Whether the target material box is in a material shortage may be determined according to a discharge speed theoretical value of the target material box and an actual discharge speed of the target material box.

Alternatively, when the actual discharge speed of the target material box is 10 or less than a preset value, it can be determined that the target material box is in a material shortage.

The number of target material boxes is one or more. If all target boxes are in a material shortage, the actual discharge speed of the target boxes is almost 10. In the case where there is plurality of target material boxes, in the case where some or all of the material boxes are in a material shortage, the actual discharge speeds of the plurality of target material boxes are less than the discharge speed theoretical value of the target material boxes. Therefore, according to the discharge speed theoretical value and the actual discharge speed of the target material box, it is possible to accurately determine whether some or all of the target material boxes are in material shortage when there is a plurality of target material boxes.

Compared with the way of determining whether the target box is in material shortage according to the actual discharge amount of the target box, judging whether the target box is in material shortage according to the actual discharge speed of the target box, the judgment structure of which is not affected by the length of the target period, making the judgment result more accurate.

The period between two adjacent detections of the weighing sensor is taken as the target period to judge whether the target material box is in a material shortage, making the judgment result more timely and accurate. Thus, the execution method 1700 can respond and handle the situation of the target material box being in material shortage in a timely manner.

Specifically, when a difference between a discharge speed theoretical value of a target material box and an actual discharge speed of a target material box is greater than or equal to a preset threshold, it is determined that the target material box is in a material shortage.

The discharge speed theoretical value of the target material box can be understood as the weight of the material conveyed by the conveying apparatus of the target material box per unit time. The discharge speed theoretical value can be preset or determined according to a flow parameter. The flow parameter may be a flow rate per unit time, which is used to indicate the volume of fluid delivered by the conveying apparatus per unit time.

The flow parameter of the conveying apparatus of the target material box can be obtained. Therefore, the discharge speed theoretical value calculated by weight can be calculated according to the flow parameter and the density of the material stored in the target material box.

The flow parameter and the target material density in the material box can be preset.

The actual fluid extraction volume per unit time of the peristaltic pump has high accuracy and stability. That is to say, when the peristaltic pump is used to pump out the fluid in the target material box, the preset flow parameter and the volume of material actually pumped out per unit time by the peristaltic pump have a high degree of accuracy. Therefore, when the material in the target material box is pumped out by the peristaltic pump, the actual discharge speed of the target material box is substantially the same as the theoretical discharge speed of the target material box. This makes the judgment result on whether the target material box is in a material shortage more accurate.

In the case of using a peristaltic pump to pump out the material in the target material box, the flow parameter is the volume of the fluid in the target material box pumped out by the peristaltic pump as a conveying apparatus per unit time.

When it is determined that the target material box is in a material shortage, reminder information may be output to remind the user to refill material to the material box.

For cooking device, the apparatus executing method 1600 can output reminder information to remind the user by controlling the abnormal indicator light to flash, voice broadcast, buzzer sound, etc. Alternatively, the apparatus executing method 1600 may send reminder information to other control apparatuses, so that the other control apparatuses control the abnormal indicator light to flash, voice broadcast, buzzer sound, etc. to remind the user.

Through S1602 to S1603, a weighing sensor is provided to detect the total weight of plurality of material boxes, and the actual discharge amount of the target material box is determined according to the detection result of the weighing sensor and the target material box being discharging as indicated by the discharge indication information. Therefore, there is no need to provide a sensor for each material box, and the material amount of each material box can be detected by using fewer sensors, thereby reducing costs.

FIG. 7 is a schematic flow chart of a material shortage detection method provided in an embodiment of the present application. The method 1700 shown in FIG. 7 may be executed using a discharge amount detection apparatus provided inside the base 1410 of the feeding apparatus 1400 shown in FIGs. 4 and 5. FIG. 5 is a side view of the feeding device 1400 shown in FIG. 4.

The method 1700 shown in FIG. 7 includes S1701 to S1305.

In S1701, the discharge instruction information sent by the controller in the main machine is received, and the discharge instruction information is used to instruct the target material box discharging.

The plurality of material boxes 1431 to 143n in the feeding apparatus 1400 include a target material box. The target material box may be any one of the plurality of material boxes 1431 to 143n.

For each dish, the program in the main machine of the cooking device will set the various seasonings needed and the order in which the various seasonings are put into the cooking container of the main machine, so that the required various seasonings are put into the cooking container in sequence. When cooking a certain dish, according to the dish program settings, when the seasoning in the target material box needs to be put into the target material box, the controller in the main machine sends the discharge instruction information to the feeding apparatus 1400.

In some embodiments, the discharge indication information can be used to control the peristaltic pump corresponding to the target material box to extract the seasoning in the target material box.

In other embodiments, the feeding apparatus 1400 may further include a discharge control unit. The discharge indication information can be used to instruct the discharge control unit to control the peristaltic pump corresponding to the target material box to extract the seasoning in the target material box.

The seasoning extracted from the target material box can be transported to the cooking container of the main machine through the feeding pipe.

The discharge amount detector in the feeding apparatus 1400 can receive the discharge indication information sent by the controller in the main machine and perform S1702. In S1702, the actual discharge amount of the target material box is calculated according to the discharge indication information and the detection result of the weighing sensor 1424.

The weighing sensor 1424 is used to detect the total weight of the plurality of material boxes 1431 to 143n. When only the target box in the plurality of material boxes 1431 to 143n is discharging, the reduction in the total weight of the plurality of material boxes 1431 to 143n is the actual discharge amount of the target box.

In S1703, it is determined whether the target material box is in a material shortage according to the actual discharge speed and the predicted discharge speed of the target material box.

Peristaltic pump has high accuracy and stability in the speed at which fluid is extracted. That is to say, when the amount of seasoning in the target material box is in a normal state, the actual discharge speed of the target material box is substantially equal to the product of the flow rate of the fluid in the target material box pumped out by the peristaltic pump and the density of the material; the latter is called the discharge speed theoretical value. The discharge speed theoretical value of the fluid in the target material box pumped out by the peristaltic pump can also be understood as a predicted discharge speed or a reference flow rate.

The weighing sensor 1424 may periodically detect the total weight of the plurality of material boxes 1431 to 143n once every detection cycle, or referred to as a target period. According to the detection results of two adjacent detections of the weighing sensor 1424, the reduction in the total weight of the plurality of material boxes 1431 to 143n within the detection cycles corresponding to the two detections is calculated, and the reduction is the actual discharge amount of the target material box in the detection cycle. According to the current actual discharge amount of the target material box, it can be detected whether the current discharge operation is normal, and combined with the theoretical value of the discharge amount of the target material box, it can be determined whether the target material box is in a material shortage.

In the case of obtaining weight detection results in a certain detection period as mentioned above, in order to timely obtain the detection result of whether the target material box is in a material shortage, the weight value detected at the start point and the end point of the target period can be converted into a discharge speed as a basis for determining whether the target material box is in a material shortage.

Specifically, the ratio of the actual discharge amount of the target material in the detection cycle to the duration of the detection cycle can be calculated to obtain the actual discharge speed of the target material box. The actual discharge speed can also be understood as the actual flow rate.

For example, the length of the detection cycle may be 13 seconds (s).The actual discharge speed of the target material box in the detection cycle can be calculated by subtracting the total weight at the end of the certain detection cycle from the total weight of the plurality of material boxes 1431 to 143n at the beginning of a certain detection cycle, and dividing the difference by the length of the detection cycle 13s.

In a certain detection cycle, if the difference between the actual discharge speed and the theoretical discharge speed is greater than or equal to a preset threshold, it is determined that the target material box is in a material shortage.

In S1704, when the target material box is in a material shortage, the target material box is controlled to stop discharging and reminder information is output.

The target material box is controlled to stop discharging, that is, the peristaltic pump corresponding to the target material box is controlled to stop pumping out the fluid in the target material box.

The reminder information is used to remind the user that the target material box is in a material shortage. The user can refill seasoning to the target material box according to the reminder information.

Applying the method 1700 to the feeding apparatus shown in FIG. 4 and FIG. 5, and providing a weighing sensor for a plurality of material boxes, when a certain material box in the plurality of material boxes is discharging, the actual seasoning amount of the certain material box can be monitored according to the actual change in the total weight of the plurality of material boxes. Furthermore, whether a certain material box is in a material shortage is determined according to the difference between the actual change amount and the predicted material output amount.

Therefore, there is no need to provide structures such as a triangular prism in the material box, which simplifies the material box structure and makes the material box and the feeding apparatus more beautiful. One weighing sensor is provided to detect the discharge amount of any material box in a plurality of material boxes and determine whether there is a material shortage, so that the number of electronic components used in the feeding apparatus is reduced and the cost of the whole machine is reduced.

The above text describes the feeding apparatus and material amount detection method for cooking device, as well as the material shortage detection method provided in the embodiment of the present application in combination with FIGs. 1 to 7. The following text describes the material amount detection apparatus of the embodiment of the present application in combination with FIGs. 8 to 9. It should be understood that the descriptions of the material shortage detection method, the feeding apparatus for the cooking device and the material amount detection method correspond to the description of the material amount detection apparatus. Therefore, for the parts that are not described in detail, please refer to the description above.

FIG. 8 is a schematic structural diagram of a material amount detection apparatus provided in an embodiment of the present application. The material amount detection apparatus shown in FIG. 8 can be used in the material shortage detection method shown in FIG. 7 or the material amount detection method shown in FIG. 6. The material amount detection apparatus shown in FIG. 8 may be the material amount detection unit shown in FIG. 3.

As shown in FIG. 8, the material amount detection apparatus includes: an obtaining unit 1801 and a calculating unit 1802.

The obtaining unit 1801 is used to obtain discharge indication information, where the discharge indication information is used to indicate that the target material box is a material box currently discharge material in the plurality of material boxes.

The calculating unit 1802 is used to calculate the current actual discharge amount of the target material box according to the detection result of the weighing sensor used to detect the total weight of the plurality of material boxes and the discharge indication information.

Optionally, the calculating unit 1802 is further used to determine whether the target material box is in a material shortage according to a current actual discharge amount of the target material box and a discharge amount theoretical value of the target material box.

Optionally, the calculating unit 1802 is specifically used to obtain, according to the real-time detection result of the weighing sensor, respectively the first weight of the plurality of material boxes at present and the second weight of the plurality of material boxes after a target length of time.

The calculating unit 1802 is further used to calculate a difference between the first weight and the second weight to obtain the actual discharge amount.

Optionally, the calculating unit 1802 is further used to calculate a ratio of a difference between the first weight and the second weight to the target period to obtain an actual discharge speed of the target material box.

The calculating unit 1802 is further used to determine whether the target material box is a material shortage according to a current actual discharge speed of the target material box and a discharge speed theoretical value of the target material box.

Optionally, the obtaining unit 1801 is further used to obtain a flow parameter of a conveying apparatus of the target material box.

The calculating unit 1802 is further used to calculate the discharge speed theoretical value calculated by weight according to the flow parameter and the density of the material stored in the target material box.

The calculating unit 1802 is further used to determine that the target material box is in a material shortage when a difference value obtained by subtracting the actual discharge speed from the theoretical discharge speed is greater than or equal to a preset threshold. Optionally, the flow parameter is the volume of the fluid in the target material box pumped out by a peristaltic pump as a conveying apparatus per unit time.

Optionally, the weighing sensor is located below a loading platform, the loading platform is used to carry the plurality of material boxes, and the weighing sensor is used to detect the total weight of the plurality of material boxes, specifically to detect the weight of the object carried by the loading platform.

Optionally, the material box is used to carry seasoning.

The obtaining unit 1801 is specifically used to receive the discharge instruction sent by the controller of the cooking device, and the material discharged from the target material box is used to be put into the cooking container of the cooking device.

Please refer to FIG. 8, which is a schematic structural diagram of a material amount detection apparatus provided in an embodiment of the present application. The generating apparatus of the graphical interface code is used for the material amount detection method shown in FIG. 3 or FIG. 6.

As shown in FIG. 8, the generating apparatus of graphical interface code includes: a memory 1801, a processor 1802, a communication interface 1803 and a communication bus 1804. The memory 1801, the processor 1802, and the communication interface 1803 are connected to each other through a communication bus 1804.

The memory 1801 may be a read only memory (ROM), a static storage device, a dynamic storage device or a random access memory (RAM). The memory 1801 can store programs. When the program stored in the memory 1801 is executed by the processor 1802, the processor 1802 and the communication interface 1803 are used to execute the various steps of the material amount detection method of the embodiment of the present application.

The processor 1802 can adopt a general central processing unit (CPU), a microprocessor, an application specific integrated circuit (ASIC), a graphics processing unit (GPU) or one or more integrated circuits to execute relevant programs to realize the functions required to be performed by the units in the material amount detection apparatus of the embodiment of the present application, or to execute the material amount detection method of the method embodiment of the present application.

The processor 1802 may also be an integrated circuit chip having signal processing capabilities. During the implementation process, each step of the material amount detection method of the present application can be completed by an integrated logic circuit of hardware in the processor 1802 or instructions in software form. The above-mentioned processor 1802 can also be a general-purpose processor, a digital signal processor (DSP), an application specific integrated circuit (ASIC), a field programmable gate array (FPGA) or other programmable logic devices, discrete gate or transistor logic devices, discrete hardware components. The various methods, steps and logic diagrams disclosed in the embodiments of the present application can be implemented or executed. A general purpose processor may be a microprocessor, or the processor may be any conventional processor or the like. The steps of the method disclosed in the embodiments of the present application can be directly implemented as being executed by a hardware decoding processor, or can be implemented by a combination of hardware and software modules in the decoding processor. The software module may be located in a computer-readable storage medium that is mature in the art, such as a random access memory, a flash memory, a read-only memory, a programmable read-only memory, or an electrically erasable programmable memory, a register, or the like. The computer-readable storage medium is located in the memory 1801, and the processor 1802 reads the information in the memory 1801, and combines its hardware to complete the functions required to be performed by the units included in the material amount detection apparatus of the embodiment of the present application, or executes the material amount detection method of the method embodiment of the present application.

The communication interface 1803 uses a transceiver apparatus such as but not limited to a transceiver to implement communication between the electronic device shown in FIG. 8 and other devices or a communication network. For example, the discharge indication information may be obtained through the communication interface 1803.

The communication bus 1804 may include a path for transmitting information between the various components of the electronic device shown in FIG. 8 (e.g., the memory 1801, the processor 1802, and the communication interface 1803).

An embodiment of the present application also provides a computer-readable storage medium, which stores a program. The program is executed by a processor to implement the above-mentioned material amount detection method.

An embodiment of the present application also provides a cooking device, which includes a cooking container and the feeding apparatus mentioned above.

It should be noted that, although several modules or units for action execution are mentioned in the above detailed description, such division is not mandatory. In fact, according to the specific implementation of the present application, the features and functions of two or more modules or units described above may be embodied in one module or unit. On the contrary, the features and functions of one module or unit described above may be further divided into plurality of modules or units to be embodied.

The technical solution provided in the embodiment of the present application is explained in conjunction with specific application scenarios.

### Application scenario 1

The cooking device is activated to start cooking a dish. During the cooking process, the controller of the cooking device outputs discharge indication information to cause a target material box containing salt water in the plurality of material boxes of the feeding apparatus to discharge, and the target material box becomes the material box currently discharging. The processor calculates the current actual discharge amount of the target material box according to the detection result of the weighing sensor on the total weight of the plurality of material boxes. Thus, the discharge amount of the target material box currently being discharged can be monitored.

### Application scenario 2

The user uses the cooking device to cook the dishes. During the cooking process, the controller of the cooking device outputs discharge instruction information so that a target material box containing salt water in the plurality of material boxes of the feeding apparatus discharging. The processor calculates the current actual discharge amount of the target material box according to the detection result of the weighing sensor on the total weight of the plurality of material boxes. The processor determines that the target material box is in a material shortage when a difference between a current actual discharge amount of the target material box and a theoretical value of the discharge amount of the target material box is greater than or equal to a preset threshold.

In addition, although the steps of the method in the present application are described in a specific order in the drawings, this does not require or imply that the steps must be performed in this specific order or that all the steps shown must be performed to achieve the desired results. Additionally or alternatively, some steps may be omitted, multiple steps may be combined into one step, and/or one step may be decomposed into multiple steps.

It should be noted that the embodiments of the present application can be implemented by hardware, software, or a combination of software and hardware. The hardware part can be implemented by using dedicated logic; the software part can be stored in a memory and executed by an appropriate instruction execution system, such as a microprocessor or dedicated hardware. A person skilled in the art will appreciate that the above-described apparatus and methods may be implemented using computer executable instructions and/or contained in processor control code, for example, such code being provided on a carrier medium such as a disk, CD or DVD-ROM, a programmable memory such as a read-only memory (firmware), or a data carrier such as an optical or electronic signal carrier. The device and its modules of the present application can be implemented by hardware circuits such as very large-scale integrated circuits or gate arrays, semiconductors such as logic chips, transistors, etc., or programmable hardware devices such as field programmable gate arrays, programmable logic devices, etc., and can also be implemented by software executed by various types of processors, or by a combination of the above hardware circuits and software, such as firmware.

The present application provides a feeding control method, and the execution subject of the feeding control method can be a feeding control apparatus, or a feeding apparatus, cooking device, server equipment, physical host or user equipment (UE) and other different types of equipment integrated with the feeding control apparatus, wherein the feeding control apparatus can be implemented in hardware or software, and the UE can specifically be a terminal device such as a smart phone, a tablet computer, a laptop computer, a PDA or a desktop computer.

The feeding control method can be applied to a cooking device with cooking functions such as stir-fry machines, food processors, and cooking machines, and is used to control a feeding apparatus to feed seasonings required for cooking to a cooking container of the cooking device in the process of the cooking device cooking a target dish.

The cooking device according to the embodiment of the present application can be used to steam, fry, stew and boil various ingredients to prepare different types of dishes.

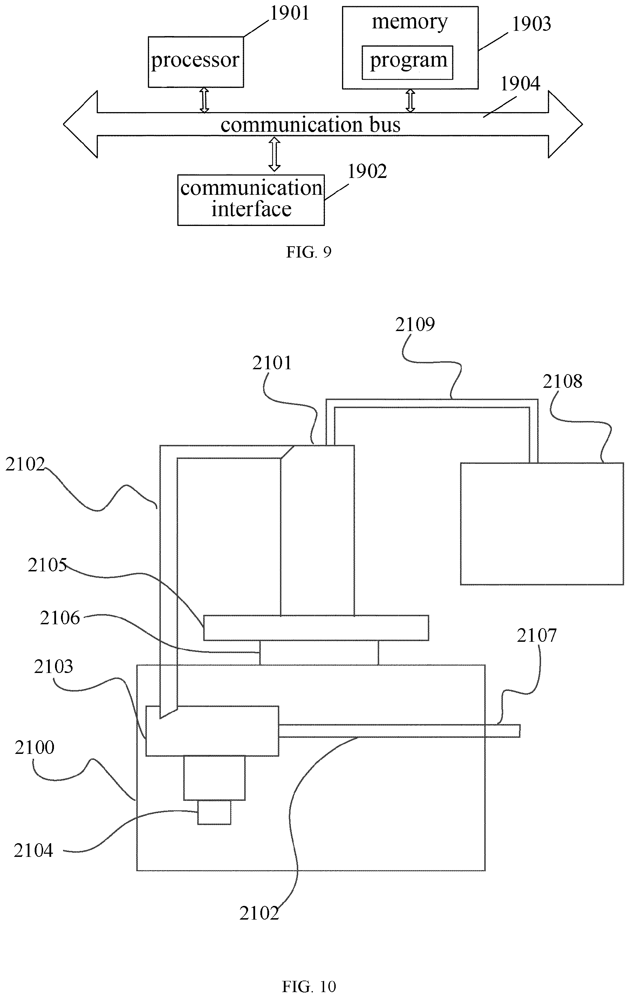

Please refer to FIG. 10, which is a structural schematic diagram of a feeding apparatus provided in an embodiment of the present application. The feeding apparatus may include at least one material box 2101 and a discharge pipe 2102 corresponding to each material box 2101, each discharge pipe 2102 is correspondingly connected to a driving unit 2103, each driving unit 2103 can be used to drive the seasoning in the corresponding material box 2101 to be discharged into a cooking container (not shown in the drawings) through the corresponding discharge pipe 2102, each driving unit 2103 can be respectively configured with a turning number detector 2104, each turning number detector 2104 can be used to detect the turning number of the corresponding driving unit 2103 in the process of driving the seasoning in the corresponding material box 2101 to be discharged through the corresponding discharge pipe 2102, each material box 2101 is also connected to a corresponding material supplement device 2108, and each material supplement device 2108 stores the same type of seasoning as the seasoning in the corresponding material box 2101.

Specifically, the feeding apparatus may include a base 2100, and each material box 2101 may be provided on the base 2100. Each discharge pipe 2102 is respectively connected to the corresponding material box 2101 for transmitting the seasoning in the corresponding material box 2101.

It can be understood that the material box 2101 can be a container for storing or containing cooking seasonings. Each material box 2101 can be configured with a container inlet and a container outlet. The stored seasonings can flow from the container inlet to the inner cavity of the material box 2101, that is, the containing cavity; when the cooking device is working and the feeding apparatus needs to provide the corresponding seasoning to the cooking container of the cooking device, the seasoning contained in the inner cavity of the material box 2101 can flow out from the container outlet.

It is worth noting that in some application scenarios, the container inlet and container outlet of the material box 2101 can be the same port. In this case, the seasoning can flow from the port into the inner cavity of the material box 2101, and can also flow out from the same port. The port setting of the material box 2101 can be determined according to the actual application scenario, and is not specifically limited here.

The seasoning stored in the material box 2101 can be liquid seasonings such as water, oil, soy sauce, vinegar, etc., or it can be a seasoning solution obtained by dissolving solid seasonings such as salt, sugar, chicken essence, etc. in water. Since more than one seasoning is usually required to cook a dish, there can be more than one material box 2101 in the embodiment of the present application. Although one material box 2101 is shown in FIG. 10, in actual applications, the specific number of material boxes 2101 can be determined according to the actual application situation, and is not limited here. In the embodiment of the present application, one end of each discharge pipe 2102 can be connected to the container outlet of the corresponding material box 2101, and the other end can be connected to the discharge pipe 2107 to be connected to the cooking container through the discharge pipe 2107. The seasoning discharged from the material box 2101 can flow to the cooking container via the discharge pipe 2102 and the discharge pipe 2107.

As shown in FIG. 10, each discharge pipe 2102 may be connected to a corresponding driving unit 2103, so that the driving unit 2103 drives the seasoning to flow in the pipe. It can be understood that each driving unit 2103 can generate negative pressure in the pipe, thereby sucking the seasoning into the discharge pipe 2102 and transporting the seasoning along the discharge pipe 2102. Therefore, the driving unit 2103 can be any existing driving pump structure, such as a peristaltic pump, an impeller pump, etc., which is not specifically limited here.

**In** the embodiment of the present application, each driving unit 2103 can also be configured with a turning number detector 2104, and each turning number detector 2104 can be used to detect the turning number of the corresponding driving unit 2103 in the process of driving the seasoning in the corresponding material box 2101 to be discharged through the corresponding discharge pipe 2102.

It can be understood that when the driving unit is working, such as a peristaltic pump motor, the turning number detector 2104 can detect the turning number of the peristaltic pump motor. Therefore, the turning number detector 2104 can be any existing encoder capable of measuring angular displacement, such as a code disk, a grating disk, etc., and the specifics are not limited here.

**In** order to reduce the volume of the feeding apparatus, the inner cavity of the base 2100 can be used to accommodate some components of the feeding apparatus. As shown in FIG. 10, the driving unit 2103, the turning number detector 2104 and part of the discharge pipe 2102 can all be provided in the inner cavity of the base 2100.

As shown in FIG. 10, each material box 2101 may also be connected to a corresponding material supplement device 2108, and each material supplement device 2108 may store seasonings of the same type as the seasonings in the corresponding material box 2101. The material box 2101 and the material supplement device 2108 may be connected via a material supplement pipe 2109.

As shown in FIG. 10, the feeding apparatus may also include a weighing component 2106, which can be used to weigh the total weight of each material box. The weighing component 2106 can be set on the base 2100 of the feeding apparatus, and each material box 2101 can be set on a loading platform 2105. The weighing component 2106 may include a weighing sensor, which is set under the loading platform 2105 and is used to weigh the total weight of the loading platform 2105 and each material box 2101 on the loading platform 2105.

It can be understood that a plurality of receiving grooves (not shown) can be provided on the loading platform 2105, each receiving groove can be used to place a corresponding material box 2101, and the receiving grooves can limit the material box 2101 to avoid collision or falling between the material boxes 2101 on the loading platform 2105 when the feeding apparatus is moved.

In the embodiment of the present application, the discharge pipe 2102 can be a pipe with an integrated structure, or can be a pipe with a split structure formed by connecting a pipe joint and multiple sections of pipes.

In a specific implementation, the driving unit 2103 adopts a peristaltic pump and the discharge pipe 2102 adopts a flexible hose. The peristaltic pump pushes the liquid in the flexible hose to flow by squeezing the flexible hose. In this way, the peristaltic pump can avoid direct contact with the liquid in the flexible hose, ensuring that the liquid is not contaminated.

In order to reduce the influence of the discharge pipe 2102 on the weighing result of the weighing sensor, in some embodiments, the discharge pipe 2102 can adopt a split structure pipe formed by a pipe joint and multiple sections of pipes, wherein the multiple sections of pipes can adopt flexible hoses. At the same time, when arranging the direction of the pipe, the friction between the pipe and the loading platform 2105 or the material box 2101 can be avoided, thereby avoiding the influence of friction on the weighing result of the weighing sensor.

According to the above-mentioned feeding apparatus, the feeding control method of the present application includes:
determining a target material box of a seasoning to be fed, a target demand amount for a target seasoning in the target material box, and a target feeding amount of the target seasoning to be fed; where the target feeding amount is not greater than the target demand amount; if the target demand amount is not less than a preset reference feeding amount, determining a total turning number of a target driving unit corresponding to the target discharge pipe of the target material box according to the target feeding amount; controlling a target material supplement device corresponding to the target material box to feed target seasoning into the target material box; controlling the target driving unit to drive the target seasoning fed in the target material box to be discharged through the target discharge pipe, and obtaining a current turning number of a target turning number detector corresponding to the target driving unit in a process of the target driving unit discharging the target seasoning fed in the target material box; and
controlling an operation of the target driving unit according to the current turning number and the total turning number.

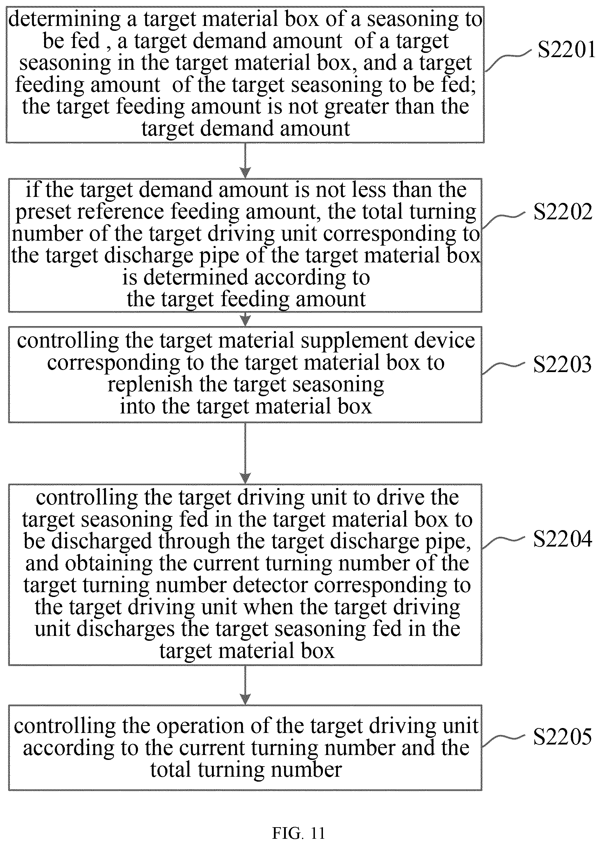

Please refer to FIG. 11, which is a flow chart of a feeding control method provided in an embodiment of the present application. It should be noted that although a logical order is shown in the flowchart diagrams, in some cases, the steps shown or described may be performed in an order different from that shown or described herein.

In an embodiment of the present application, the feeding control method can be used to control a feeding apparatus to feed seasoning to a cooking container of a cooking device. The feeding control method may include the following steps.

Step S2201, determining a target material box of a seasoning to be fed, a target demand amount of a target seasoning in the target material box, and a target feeding amount of the target seasoning to be fed; where the target feeding amount is not greater than the target demand amount.

The existing feeding apparatus determines the amount of seasoning fed to the cooking container according to the weight change of the material box. If the seasoning in the material box is less during the cooking process, the material box needs to be refilled. Since the weight of the material box changes after refilling, it is necessary to record the amount of seasoning already fed to the cooking container before refilling. In addition, during the refilling process, it is necessary to pause feeding seasoning to the cooking container. After the seasoning is fed, the driving unit is started to feed the fed seasoning to the cooking container. In this way, for seasonings with a large demand, the process of feeding seasoning to the cooking container needs to be frequently interrupted.

Therefore, in the embodiment of the present application, the target material box to be fed with seasoning can be a material box in a material shortage. Specifically, the feeding apparatus can also include a liquid level detection unit corresponding to each material box, and the feeding control apparatus can be communicated with each liquid level detection unit respectively, and each liquid level detection unit can be used to detect the seasoning liquid level in the corresponding material box.

In some embodiments of the present application, determining the target material box to be fed with seasoning may further include:
obtaining a liquid level detection signal of the seasoning liquid level in the corresponding material box detected by each liquid level detection unit; for each liquid level detection unit, if the liquid level detection signal of the liquid level detection unit indicates that the seasoning liquid level in the corresponding material box is lower than a preset shortage level, the material box corresponding to the liquid level detection unit is determined as the target material box to be fed with seasoning.

In the embodiment of the present application, the liquid level detection unit can be any existing liquid level meter, liquid level detector, liquid level detection sensor or other device or structure that can be used to detect the liquid level, and is not specifically limited here.

For each material box, a shortage level can be pre-configured for it, and the shortage level can be used to indicate whether the seasoning in the corresponding material box is lower than the minimum seasoning amount. For example, the shortage level can be located near the bottom of the material box. If the seasoning level is lower than the shortage level, it can be determined that the seasoning level in the material box is low, the stored seasoning is small, and the seasoning needs to be refilled. Therefore, the material box can be determined as the target material box; if the seasoning level is not lower than the shortage level, it can be determined that the seasoning level in the material box is not low, and the seasoning stored in the material box is sufficient for this cooking. Therefore, the material box may not be determined as the target material box.

It can be understood that the shortage liquid level can also be level with the bottom of the inner cavity of the material box. In this scenario, the liquid level detection unit can detect whether there is seasoning in the material box. Only when there is no seasoning in the material box, the material box is determined as the target material box.

In the embodiment of the present application, the material shortage liquid levels corresponding to each material box can be the same or different, and the height or position of each material shortage liquid level can be determined according to the actual application scenario, which will not be elaborated here.

Before or during cooking with the cooking device, the feeding control apparatus can obtain the liquid level detection signal of the seasoning liquid level in the material box corresponding to each liquid level detection unit. For each liquid level detection unit, if the liquid level detection signal output by it indicates that the seasoning liquid level in the corresponding material box is lower than the shortage level, then it can be considered that the seasoning liquid level in the material box is low, and then the material box can be determined as the target material box; conversely, if the liquid level detection signal indicates that the seasoning liquid level in the corresponding material box is not lower than the shortage level, then it can be considered that the seasoning liquid level in the material box is not low, and the material box is not determined as the target material box, that is, there is no need to replenish the seasoning in the material box.

In a specific implementation, when the seasoning liquid level in the material box is lower than the shortage level, the liquid level detection unit outputs a high-level liquid level detection signal, and when the seasoning liquid level in the material box is not lower than the shortage level, the liquid level detection unit outputs a low-level liquid level detection signal. Therefore, if the liquid level detection signal obtained by the feeding control apparatus is a high-level signal, it can be confirmed that the seasoning liquid level in the material box is lower than the shortage level. If the liquid level detection signal obtained by the feeding control apparatus is a low-level signal, it can be confirmed that the seasoning liquid level in the material box is not lower than the shortage level, and the target material box can be determined according to the liquid level detection signal.

In other application scenarios, a low-level liquid level detection signal can also be used to indicate that the seasoning liquid level in the material box is lower than the shortage level. At this time, a high-level liquid level detection signal is used to indicate that the seasoning liquid level in the material box is not lower than the shortage level, which will not be elaborated here.

It can be understood that the target required amount of the target seasoning in the target material box is the total weight of the target seasoning required to be fed to the cooking container for this cooking. In some embodiments, determining the target required amount of the target seasoning in the target material box may further include: obtaining a target recipe; determining a target demand for a target seasoning in a target material box according to the target recipe.

It can be understood that cooking recipes for cooking various dishes can be pre-stored in the cooking device. Each recipe can correspond to one dish. Each recipe can record the main ingredients, auxiliary ingredients, seasonings and cooking steps required for cooking the corresponding dish. For seasonings, the recipe can record the types of seasonings required and the corresponding required quantities of each seasoning.

Before cooking begins, the user can select a corresponding recipe for the cooking device according to the target dish to be cooked. After selecting the recipe, the ingredient feeding control apparatus can read the recipe to obtain information such as the type of seasoning, required amount, and cooking steps recorded therein.

In one implementation, the cooking device may be configured with an interactive interface, on which various recipes stored in the cooking device may be displayed, and the user may determine the target dish to be cooked this time by selecting a recipe on the interactive interface.

In another implementation, the cooking device can also be communicatively connected to a terminal device, which can be an existing smart terminal such as a mobile phone, a tablet computer, or a laptop computer. Network communication can be achieved between the terminal device and the cooking device through any communication method, including but not limited to mobile communications according to the 3rd Generation Partnership Project (3GPP), Long Term Evolution (LTE), and Worldwide Interoperability for Microwave Access (WiMAX), computer network communications according to the TCP/IP Protocol Suite (TCP/IP), User Datagram Protocol (UDP), or wireless network communications according to Bluetooth, Wi-Fi, Zigbee, etc.

The user can select a recipe in the corresponding program configured on the terminal device, and then the terminal device sends a communication signal to the cooking device to send the recipe information selected by the user to the cooking device, so that the cooking device obtains the recipe for this cooking.

In an embodiment of the present application, the feeding control apparatus can also be connected to the cooking device through any of the above-mentioned communication ways. When the cooking device obtains the target recipe for this cooking, the cooking device can send the information of the target recipe to the feeding control apparatus, so that the feeding control apparatus obtains the target recipe to be cooked, and then reads the target recipe, and determines the target demand amount of the target seasoning stored in the target material box according to the target recipe.

It can be understood that the seasonings stored in the material boxes and the positions of the material boxes on the tray can correspond one to one. For example, eight material boxes are provided on the tray, and the type of seasoning contained in each material box can be pre-set, that is, the position of the material box containing the seasoning is determined according to the type of seasoning contained therein.

For example, the order in which the seasonings are provided is clean water, oil, dark soy sauce, light soy sauce, salt water, chili oil, sugar water, and balsamic vinegar. The first of the eight material boxes is used to store clean water, the second is used to store oil, the third is used to store dark soy sauce, and so on. The eighth is used to store balsamic vinegar. In this way, when it is necessary to feed the corresponding seasoning to the pot body, the discharge pipe corresponding to the material box storing the seasoning can discharge the seasoning into the pot body.

If the user adjusts the order in which the seasonings are placed, that is, the position of the material box, the order stored in the cooking device can be modified accordingly to ensure that the actual order is consistent with the stored order, thereby avoiding the situation in which the seasonings are placed incorrectly.

In some other embodiments, determining the target required amount of the target seasoning in the target material box may further include:
parsing the obtained feeding instruction; and determining the target required amount of the target seasoning of the target material box according to the feeding instruction.

It can be understood that the feeding instruction can be an instruction sent by the user to the cooking device. The user can set the target required amount of the target seasoning needed to be fed for this cooking on the interactive screen or terminal device, and then send the feeding instruction carrying the target required amount to the cooking device. After obtaining the feeding instruction, the cooking device can send the feeding instruction to the feeding control apparatus, so that the feeding control apparatus can parse the feeding instruction and extract the target required amount corresponding to the target seasoning carried therein.

In the embodiment of the present application, the target feeding amount of the target seasoning to be fed may be equal to the target demand amount of the target seasoning, or may be less than the target demand amount of the target seasoning.

Specifically, before starting to feed the target seasoning to the cooking container, the target feeding amount of the target seasoning should be equal to the target demand for the target seasoning. For example, before starting to cook, if it is detected that the target material box is out of material, then the target feeding amount of the target seasoning is equal to the target demand for the target seasoning. If it is detected that the target material box is out of material when feeding the target seasoning to the cooking container, then at this time, since the target seasoning has already been fed to the cooking container, the target feeding amount of the target seasoning to be fed is less than the target demand for the target seasoning.

In some embodiments of the present application, determining the target amount of the target seasoning to be fed may further include:
obtaining an initial weight value measured by the weighing component; controlling the target driving unit to drive the target seasoning in the target material box to be discharged through the target discharge pipe; obtaining the current weight value of the target driving unit measured by the weighing component in the process of driving the target seasoning in the target material box to be discharged through the target discharge pipe; determining the target feeding amount of the target seasoning to be fed according to the target demand and the weight difference; the weight difference is the difference between the initial weight value and the current weight value.

It can be understood that the initial weight value measured by the weighing component is the total weight value of the material box before the target seasoning is fed to the cooking container. After obtaining the initial weight value, the target driving unit can be controlled to drive the target seasoning in the target material box to be discharged into the cooking container through the target discharge pipe, and in the process of discharge the target seasoning, the current weight value measured by the weighing component can be obtained in real time.

During the discharge process of the target discharge pipe, the current weight value of the weighing component is obtained in real time, which can be accessed according to a preset frequency, or the weighing component sends the current weight value to the feeding control apparatus according to a preset frequency.

As the target driving unit drives the target seasoning in the target material box to be discharged along the target discharge pipe, the target seasoning stored in the target material box gradually decreases, so that the weight value weighed by the weighing unit gradually decreases, and the reduced weight is the weight of the target seasoning discharged into the cooking container.

Therefore, the weight difference obtained by subtracting the current weight value of each weighing from the initial weight value is the weight value of the target seasoning discharged into the cooking container, and the total weight of the target seasoning required to be fed for this cooking is the target demand. Therefore, by subtracting the weight difference from the target demand, the target amount of the target seasoning to be fed can be obtained.

Step S2202: if the target demand amount is not less than the preset reference feeding amount, the total turning number of the target driving unit corresponding to the target discharge pipe of the target material box is determined according to the target feeding amount.

In the embodiment of the present application, the baseline feeding amount can be determined according to the actual application scenario. For example, the baseline feeding amount is set to 800g, 1000g, 1500g, etc. If the target demand for the target seasoning determined in step S2201 is greater than the baseline feeding amount, it can be determined that the demand for the target seasoning in this cooking is relatively large. At this time, if the amount of seasoning fed to the cooking container is determined according to the change in the weight of the material box, the cooking efficiency will be affected due to the need to frequently refill and interrupt the cooking process. Therefore, in an embodiment of the present application, the target amount of the target seasoning to be fed is converted into the total turning number of the target driving unit to deliver the target amount of the target seasoning, and the amount of seasoning fed to the cooking container is determined by the turning number of the target driving unit, which is not affected by the weight change when the target seasoning is replenished in the target material box.

Specifically, determining the total turning number of the target driving unit corresponding to the target discharge pipe of the target material box according to the target feeding amount may further include:
obtaining the target volume of the target seasoning according to the target feeding amount; and obtaining the total turning number of the target driving unit according to the target volume and the unit discharge volume of the target driving unit; where the unit discharge volume is the volume corresponding to the target seasoning discharged when the target driving unit rotates one circle.

**In** an embodiment of the present application, the target feeding amount can be divided by the density of the target seasoning to obtain the target volume corresponding to the target feeding amount. Since the unit discharge volume, that is, the volume corresponding to the target seasoning discharged when the target driving unit rotates one circle, can be obtained in advance through experiments, the target volume is divided by the pre-stored unit discharge volume to obtain the total turning number of the target driving unit to transport the target seasoning of the target feeding amount.

Step S2203, controlling the target material supplement device corresponding to the target material box to replenish the target seasoning into the target material box.

Since the target material box is a material box with a seasoning liquid level lower than the shortage level, the target capacity stored in the target material box is insufficient to cook the target dish. Therefore, the target material supplement device can be controlled to replenish the target seasoning to the target material box through the replenishing pipe. Step S2204, controlling the target driving unit to drive the target seasoning fed in the target material box to be discharged through the target discharge pipe, and obtaining the current turning number of the target turning number detector corresponding to the target driving unit when the target driving unit discharges the target seasoning fed in the target material box.

Since the amount of seasoning fed to the cooking container is determined according to the turning number of the target driving unit in the embodiment of the present application, step S2204 can be performed simultaneously with step S2203. It can be understood that step S2204 can also be performed after step S2203, and the specific amount can be determined according to actual conditions.

In the embodiment of the present application, when the target driving unit is controlled to drive the target seasoning fed in the target material box to be discharged into the cooking container through the target discharge pipe, the current turning number of the target driving unit detected by the target turning number detector can be obtained in real time.

Step S2205: controlling the operation of the target driving unit according to the current turning number and the total turning number.

It can be understood that if the current turning number is less than the total turning number, it can be determined that the amount of seasoning currently transmitted to the cooking container has not yet reached the target amount of seasoning, and therefore, the target driving unit can be controlled to continue to drive the target seasoning fed in the target material box to be discharged into the cooking container through the target discharge pipe.

If the current turning number is equal to the total turning number, it can be determined that the amount of seasoning currently transmitted to the cooking container has just reached the target amount of seasoning. At this time, the target driving unit can be turned off to stop feeding the target seasoning to the cooking container.

In an embodiment of the present application, when it is determined that the target demand is greater than or equal to the baseline feeding amount, the target feeding amount of the target seasoning to be fed is converted into the total turning number of the target driving unit. When the target feeding apparatus replenishes the target seasoning to the target material box, the operation of the target driving unit is controlled according to the current turning number and the total turning number of the target driving unit. This can avoid the problem of frequently interrupting the cooking process when replenishing the seasoning to the material box in the prior art, ensure the advancement of the cooking process, and greatly improve the cooking efficiency.

In some embodiments of the present application, the target material supplement device corresponding to the target material box is controlled to replenish the target material box with the target seasoning, and then the method may further include:
obtaining a target liquid level detection signal from a target liquid level detection unit corresponding to the target material box to detect the target seasoning liquid level in the target material box; if the target liquid level detection signal indicates that the target seasoning liquid level in the target material box is higher than the preset full liquid level, controlling the target material supplement device corresponding to the target material box to stop replenishing the target seasoning to the target material box.

In the embodiment of the present application, the liquid level detection unit can also be any existing liquid level meter, liquid level detector, liquid level detection sensor or other device or structure that can be used to detect the liquid level, and the specific details are not limited here.

For each material box, a full liquid level can be pre-configured for it, and the full liquid level can be used to indicate whether the seasoning in the corresponding material box is higher than the maximum seasoning amount. For example, the full liquid level can be located near the top of the material box. If the seasoning liquid level is not lower than the full liquid level, it can be determined that the seasoning liquid level in the material box has reached the upper limit, and the seasoning stored in the material box is sufficient. The target material supplement device can be controlled to stop replenishing the target seasoning to the target material box; if the seasoning liquid level is lower than the full liquid level, it can be determined that the seasoning liquid level in the material box has not reached the upper limit, and the target material supplement device can be controlled to continue replenishing the target seasoning to the target material box.

It can be understood that the full liquid level can also be level with the top of the inner cavity of the material box. In this scenario, the liquid level detection unit can detect whether the material box is full. Only when the material box is full of seasonings, the material supplement device will be controlled to stop replenishing seasonings to the material box.

In the embodiment of the present application, the full liquid levels corresponding to each material box may be the same or different, and the height or position of each full liquid level may be determined according to the actual application scenario, which will not be elaborated here.

During the replenishing process, the feeding control apparatus can obtain a target liquid level detection signal from the target liquid level detection unit for detecting the target seasoning liquid level in the corresponding target material box. If the target liquid level detection signal indicates that the target seasoning liquid level in the target material box is lower than the full liquid level, it can be considered that the seasoning liquid level in the target material box has not reached the upper limit, and the target material supplement device can be controlled to continue to feed the target seasoning to the target material box; conversely, if the liquid level detection signal indicates that the target seasoning liquid level in the target material box is not lower than the full liquid level, it can be considered that the target seasoning liquid level in the target material box has reached the upper limit, and the target material supplement device can be controlled to stop replenishing the target seasoning to the target material box.

In a specific implementation, when the seasoning liquid level in the material box is lower than the full liquid level, the liquid level detection unit outputs a high-level liquid level detection signal, and when the seasoning liquid level in the material box is not lower than the full liquid level, the liquid level detection unit outputs a low-level liquid level detection signal. Therefore, if the liquid level detection signal obtained by the feeding control apparatus is a high-level signal, it can be confirmed that the seasoning liquid level in the material box is lower than the full liquid level. If the liquid level detection signal obtained by the feeding control apparatus is a low-level signal, it can be confirmed that the seasoning liquid level in the material box is not lower than the full liquid level, and the target material box can be determined according to the liquid level detection signal.

In other application scenarios, a low-level liquid level detection signal can also be used to indicate that the seasoning liquid level in the material box is lower than the full liquid level. At this time, a high-level liquid level detection signal is used to indicate that the seasoning liquid level in the material box is not lower than the full liquid level, which will not be elaborated here.

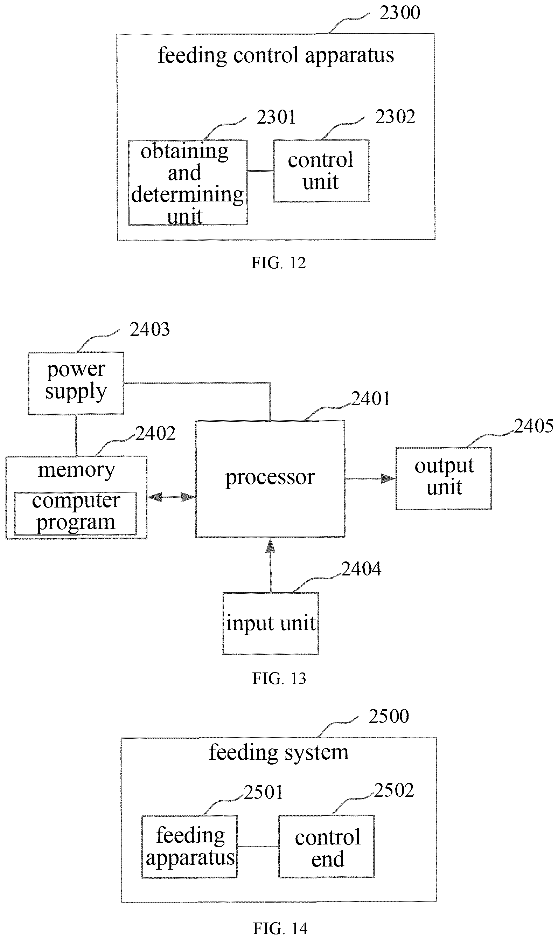

In order to better implement the feeding control method of the present application, the present application further provides a feeding control apparatus, which can be used to control the feeding apparatus to feed seasoning to the cooking container of the cooking device, as shown in FIG. 12, which is a functional module schematic diagram of the feeding control apparatus provided in an embodiment of the present application, and the feeding control apparatus 2300 may include:
an obtaining and determining unit 2301, used to determine the target material box to be supplemented with seasoning, the target demand amount of the target seasoning in the target material box, and the target feeding amount of the target seasoning to be fed; the target feeding amount is not greater than the target demand amount;
if the target demand is not less than the preset reference feeding amount, the total turning number of the target driving unit corresponding to the target discharge pipe of the target material box is determined according to the target feeding amount;
the control unit 2302 is used to control the material supplement device corresponding to the target material box to replenish the target seasoning into the target material box; control the target driving unit to drive the target seasoning fed in the target material box to be discharged through the target discharge pipe, and obtain the current running number of the target turning number detector corresponding to the target driving unit in the process of the target driving unit discharging the target seasoning fed in the target material box;
control the operation of the target driving unit according to the current turning number and the total turning number.

In some embodiments of the present application, the control unit 2302 may be specifically used to:
when the turning number is less than the total running number, the target driving unit is controlled to drive the target seasoning fed in the target material box to be discharged through the target discharge pipe;
when the turning number reaches the total running number, the target driving unit is controlled to stop driving the target seasoning fed in the target material box to be discharged through the target discharge pipe.

In some embodiments of the present application, the feeding apparatus further includes a liquid level detection unit corresponding to each material box, and the obtaining and determining unit 2301 can be specifically used for:
obtain a liquid level detection signal of each liquid level detection unit detecting the corresponding seasoning liquid level in the material box;
for each liquid level detection unit, if the liquid level detection signal of the liquid level detection unit indicates that the seasoning liquid level in the corresponding material box is lower than the preset shortage level, the material box corresponding to the liquid level detection unit is determined as the target material box to be replenished with seasoning.
In some embodiments of the present application, the obtaining and determining unit 2301 may also be used to:
   obtain the target recipe;
   determine the target required amount of the target seasoning in the target material box according to the target recipe; or,
   parse the obtained feeding instruction;
   determine the target required amount of the target seasoning in the target material box according to the feeding instruction.

In some embodiments of the present application, the feeding apparatus further includes a weighing component, which is used to weigh the total weight of each material box. The obtaining and determining unit 2301 can also be used to:
obtain the initial weight value of the weighing component;
control the target driving unit to drive the target seasoning in the target material box to be discharged through the target discharge pipe;
obtain the current weight value weighed by the weighing component in the process of the target driving unit driving the target seasoning in the target material box to be discharged through the target discharge pipe; and
determine the target amount of the target seasoning to be fed according to the target demand and the weight difference; the weight difference is the difference between the initial weight value and the current weight value.

In some embodiments of the present application, the obtaining and determining unit 2301 may also be used to:
obtain a target volume of a target seasoning according to a target feeding amount;
obtain the total turning number of the target driving unit according to the target volume and the unit discharge volume of the target driving unit; the unit discharge volume is the volume corresponding to the target seasoning discharged when the target driving unit rotates one circle.

In some embodiments of the present application, the feeding apparatus further includes a liquid level detection unit corresponding to each material box, and the control unit 2302 controls the target feeding apparatus corresponding to the target material box to replenish the target seasoning to the target material box, and then, it can also be used for:
obtain a target liquid level detection signal from a target liquid level detection unit corresponding to the target material box to detect a target seasoning liquid level in the target material box;
if the target liquid level detection signal indicates that the target seasoning liquid level in the target material box is higher than the preset full liquid level, the target material supplement device corresponding to the target material box is controlled to stop replenishing the target seasoning to the target material box.

It should be noted that in the present application, the relevant contents of the obtaining and determining unit 2301and the control unit 2302 correspond one to one with the above, and technical personnel in the relevant field can clearly understand that for the convenience and conciseness of description, the specific working process of the above-described feeding control apparatus and its corresponding unit modules can refer to the description of the feeding control method in any embodiment corresponding to FIG. 11, and the details will not be repeated here.

Based on the feeding control method in the above embodiment, the present application further provides a feeding apparatus, which includes at least one material box and a discharge pipe corresponding to each material box, each discharge pipe is connected to a driving unit, each driving unit is used to drive the seasoning in the corresponding material box to be discharged into the cooking container through the corresponding discharge pipe, each driving unit is respectively configured with a turning number detector, each turning number detector is used to detect the turning number of the corresponding driving unit in the process of driving the seasoning in the corresponding material box to be discharged through the corresponding discharge pipe, each material box is also connected to a corresponding feeding apparatus, each feeding apparatus stores the same type of seasoning as the seasoning in the corresponding material box; The feeding apparatus may further include a processor 2401 and a memory 2402. The memory 2402 may be used to store a computer program. When the computer program is executed by the processor 2401, it may be used to implement the following functions: determining a target material box of the seasoning to be fed, a target demand amount of the target seasoning in the target material box, and a target feeding amount of the target seasoning to be fed; the target feeding amount is not greater than the target demand amount;
if the target demand is not less than the preset reference feeding amount, determining the total turning number of the target driving unit corresponding to the target discharge pipe of the target material box according to the target feeding amount;
controlling the target material supplement device corresponding to the target material box to replenish the target seasoning into the target material box;
controlling the target driving unit to drive the target seasoning fed in the target material box to be discharged through the target discharge pipe, and obtaining the current running number of the target turning number detector corresponding to the target driving unit in the process of the target driving unit discharging the target seasoning fed in the target material box; and
controlling the operation of the target driving unit according to the current turning number and the total number turning.

As shown in FIG. 13, another schematic structural diagram of the feeding apparatus involved in the present application is shown. Specifically:
The feeding apparatus may include components such as a processor 2401 of one or more processing cores, a memory 2402 of one or more computer-readable storage media, a power supply 2403 and an input unit 2404. Those skilled in the art will appreciate that the structure shown in FIG. 13 does not constitute a limitation on the feeding apparatus, and the feeding apparatus may also include more or fewer components than shown in the drawings, or a combination of certain components, or a different arrangement of components. Where:
The processor 2401 is the control center of the feeding apparatus, which uses various interfaces and lines to connect the various parts of the entire feeding apparatus. By running or executing software programs and/or unit modules stored in the memory 2402 and calling data stored in the memory 2402, it performs various functions of the feeding apparatus and processes data, thereby monitoring the feeding apparatus as a whole. Optionally, processor 2401 may include one or more processing cores; processor 2401 may be a central processing unit (CPU), or other general-purpose processors, digital signal processors (DSP), application-specific integrated circuits (ASIC), field-programmable gate arrays (FPGA) or other programmable logic devices, discrete gate or transistor logic devices, discrete hardware components, etc. The general-purpose processor can be a microprocessor or any conventional processor, etc. Preferably, the processor 2401 can integrate an application processor and a modem processor, wherein the application processor mainly processes the operating system, user interface and application programs, etc., and the modem processor mainly processes wireless communications. It is understandable that the above-mentioned modem processor may not be integrated into the processor 2401.

The memory 2402 may be used to store software programs and modules. The processor 2401 executes various functional applications and data processing by running the software programs and modules stored in the memory 2402. The memory 2402 may mainly include a program storage area and a data storage area, wherein the program storage area may store an operating system, an application required for at least one function, etc.; the data storage area may store data created according to the use of the cooking device, etc. In addition, the memory 2402 may include a high-speed random access memory and may also include a non-volatile memory, such as at least one disk storage device, a flash memory device, or other volatile solid-state storage devices. Accordingly, the memory 2402 may also include a memory controller to provide the processor 2401 with access to the memory 2402.

The feeding apparatus may also include a power supply 2403 for supplying power to each component. Preferably, the power supply 2403 may be logically connected to the processor 2401 through a power management system, thereby implementing functions such as charging, discharging, and power consumption management through the power management system. The power supply 2403 may also include one or more DC or AC power supplies, recharging systems, power failure detection circuits, power converters or inverters, power status indicators, and other components.

The feeding apparatus may further include an input unit 2404 and an output unit 2405. The input unit 2404 may be used to receive input digital or character information and generate keyboard, mouse, joystick, optical or trackball signal input related to user settings and function control.

Although not shown, the feeding apparatus may also include a display unit or the like for displaying relevant information such as the seasoning amount and the feeding progress to the user, which will not be described in detail here. Specifically in the present application, the processor 2401 in the feeding apparatus will load the executable files corresponding to the processes of one or more applications into the memory 2402 according to the following instructions, and the processor 2401 will run the application stored in the memory 2402 to achieve various functions, as follows:
determining a target material box of the seasoning to be fed, a target demand amount of the target seasoning in the target material box, and a target feeding amount of the target seasoning to be fed; the target feeding amount is not greater than the target demand amount;
if the target demand is not less than the preset reference feeding amount, determining the total turning number of the target driving unit corresponding to the target discharge pipe of the target material box according to the target feeding amount;
controlling the target material supplement device corresponding to the target material box to replenish the target seasoning into the target material box;
controlling the target driving unit to drive the target seasoning fed in the target material box to be discharged through the target discharge pipe, and obtaining the current running number of the target turning number detector corresponding to the target driving unit in the process of the target driving unit discharging the target seasoning fed in the target material box; and
controlling the operation of the target driving unit according to the current turning number and the total turning number.

A person skilled in the art will appreciate that all or part of the steps in the various methods described above may be accomplished by instructions, or by controlling related hardware through instructions. The instructions may be stored in a computer-readable storage medium and loaded and executed by processor 2401.

To this end, the present application provides a computer-readable storage medium, which may include: a read-only memory (ROM), a random access memory (RAM), a disk or an optical disk, etc. Computer instructions are stored thereon, and the computer instructions are loaded by the processor 2401 to execute the steps in any one of the feeding control methods provided in the present application. For example, when the computer instructions are executed by the processor 2401, the following functions are implemented:
determining a target material box of the seasoning to be fed, a target demand for the target seasoning in the target material box, and a target feeding amount of the target seasoning to be fed; the target feeding amount is not greater than the target demand amount;
if the target demand is not less than the preset reference feeding amount, determining the total turning number of the target driving unit corresponding to the target discharge pipe of the target material box according to the target feeding amount;
controlling the target material supplement device corresponding to the target material box to replenish the target seasoning into the target material box;
controlling the target driving unit to drive the target seasoning fed in the target material box to be discharged through the target discharge pipe, and obtaining the current running number of the target turning number detector corresponding to the target driving unit in the process of the target driving unit discharging the target seasoning fed in the target material box; and
controlling the operation of the target driving unit according to the current turning number and the total turning number.

The computer instructions stored in the computer-readable storage medium can execute the steps of the feeding control method in any embodiment corresponding to FIG. 11 of the present application. Therefore, the beneficial effects that can be achieved by the feeding control method in any embodiment corresponding to FIG. 11 of the present application can be achieved. Please see the previous description for details, which will not be repeated here.

Please refer to FIG. 14, which is a system structure diagram of a feeding system provided in an embodiment of the present application. The present application also provides a feeding system 2500, which may include a feeding apparatus 2501 and a control end 2502. The feeding apparatus 2501 may include at least one material box and a discharge pipe corresponding to each material box, each discharge pipe is connected to a corresponding driving unit, each driving unit is used to drive the seasoning in the corresponding material box to be discharged into the cooking container through the corresponding discharge pipe, each driving unit is respectively configured with a turning number detector, each turning number detector is used to detect the turning number of the corresponding driving unit in the process of driving the seasoning in the corresponding material box to be discharged through the corresponding discharge pipe, each material box is also connected to a corresponding feeding apparatus, each feeding apparatus stores seasoning of the same type as the seasoning in the corresponding material box.

The control end 2502 is in communication connection with the feeding apparatus 2501, and is used to control the feeding apparatus 2501 to perform the feeding operation and implement the feeding control method corresponding to any embodiment of FIG. 11.

The control end 2502 can control the feeding apparatus 2501 to implement the feeding control method in any embodiment corresponding to FIG. 11 of the present application. Therefore, the beneficial effects that can be achieved by the feeding control method in any embodiment corresponding to FIG. 11 of the present application can be achieved. Please see the previous description for details, which will not be repeated here.

The present application also provides a cooking device, which may include a cooking container, a feeding apparatus and a feeding pipe component; where the feeding apparatus includes at least one material box and a discharge pipe corresponding to each material box, each discharge pipe is connected to a driving unit, each driving unit is used to drive the seasoning in the corresponding material box to be discharged into the cooking container through the corresponding discharge pipe, each driving unit is respectively configured with a turning number detector, each turning number detector is used to detect the turning number of the corresponding driving unit in the process of driving the seasoning in the corresponding material box to be discharged through the corresponding discharge pipe, each material box is also connected to a corresponding feeding apparatus, each feeding apparatus stores seasoning of the same type as the seasoning in the corresponding material box.

The feeding apparatus may further include a memory and a processor, wherein the memory is used to store a computer program, and when the computer program is executed by the processor, it may be used to implement the following functions:
determining a target material box of the seasoning to be fed, a target demand amount of the target seasoning in the target material box, and a target feeding amount of the target seasoning to be fed; the target feeding amount is not greater than the target demand amount;
if the target demand is not less than the preset reference feeding amount, determining the total turning number of the target driving unit corresponding to the target discharge pipe of the target material box according to the target feeding amount;
controlling the target material supplement device corresponding to the target material box to replenish the target seasoning into the target material box;
controlling the target driving unit to drive the target seasoning fed in the target material box to be discharged through the target discharge pipe, and obtaining the current running number of the target turning number detector corresponding to the target driving unit in the process of the target driving unit discharging the target seasoning fed in the target material box;
controlling the operation of the target driving unit according to the current turning number and the total turning number.

The feeding apparatus can implement the feeding control method in any embodiment corresponding to FIG. 11 of the present application. Therefore, the beneficial effects that can be achieved by the feeding control method in any embodiment corresponding to FIG. 11 of the present application can be achieved. Please see the previous description for details and will not be repeated here.

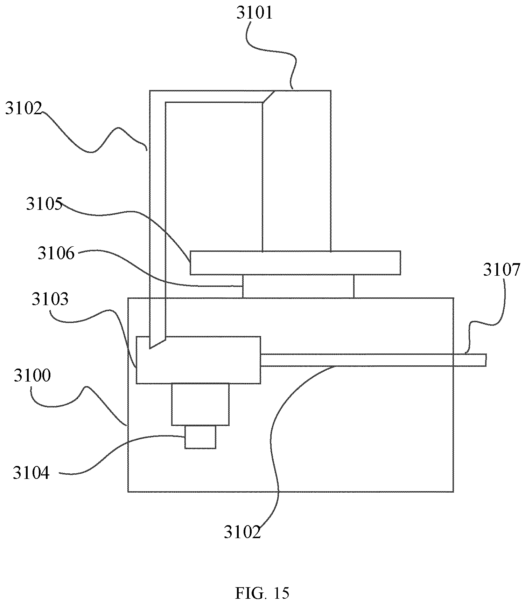

Please refer to FIG. 15, which is a structural schematic diagram of the feeding apparatus provided in an embodiment of the present application. The feeding apparatus may include a weighing component 3106, at least one material box 3101 and a discharge pipe 3102 corresponding to each material box 3101. The weighing component 3106 can be used to weigh the total weight of each material box 3101, and each discharge pipe 3102 can be used to transmit the seasoning in the corresponding material box 3101. Each discharge pipe 3102 can also be respectively configured with a flow rate detection unit 3104, and each flow rate detection unit 3104 can be used to detect the flow rate of seasoning transmitted in the corresponding discharge pipe 3102.

Specifically, the feeding apparatus may include a base 3100, and each material box 3101 may be provided on the base 3100. Each discharge pipe 3102 is respectively connected to the corresponding material box 3101 for transmitting the seasoning in the corresponding material box 3101.

It can be understood that the material box 3101 can be a container for storing or containing cooking seasonings. Each material box 3101 can be configured with a container inlet and a container outlet. The stored seasonings can flow from the container inlet to the inner cavity of the material box 3101, that is, the containing cavity; when the cooking device is working and the feeding apparatus needs to provide the corresponding seasoning to the cooking container of the cooking device, the seasoning contained in the inner cavity of the material box 3101 can flow out from the container outlet.

It is worth noting that in some application scenarios, the container inlet and container outlet of the material box 3101 can be the same port. In this case, the seasoning can flow from the port into the inner cavity of the material box 3101, and can also flow out from the port. The port setting of the material box 3101 can be determined according to the actual application scenario, and is not specifically limited here.

The seasoning stored in the material box 3101 can be liquid seasonings such as water, oil, soy sauce, vinegar, etc., or it can be a seasoning solution obtained by dissolving solid seasonings such as salt, sugar, chicken essence, etc. in water. Since more than one seasoning is usually required to cook a dish, there can be more than one material box 3101 in the embodiment of the present application. Although one material box 3101 is shown in FIG. 15, in actual applications, the specific number of material boxes 3101 can be determined according to the actual application situation, and is not limited here. In the embodiment of the present application, one end of each discharge pipe 3102 can be connected to the container outlet of the corresponding material box 3101, and the other end can be connected to the discharge pipe 3107 to be connected to the cooking container through the discharge pipe 3107. The seasoning discharged from the material box 3101 can flow to the cooking container via the discharge pipe 3102 and the discharge pipe 3107.

The weighing component 3106 can be used to weigh the total weight of each material box 3101. The weighing component 3106 can be set on the base 3100 of the feeding apparatus. Each material box 3101 can be set on a loading platform 3105. The weighing component 3106 can include a weighing sensor, which is set under the loading platform 3105 and is used to weigh the total weight of the loading platform 3105 and each material box 3101 on the loading platform 3105.

It can be understood that a plurality of receiving grooves (not shown) can be provided on the loading platform 3105, each receiving groove can be used to place a corresponding material box 3101, and the receiving grooves can limit the material box 3101 to avoid collision or falling between the material boxes 3101 on the loading platform 3105 when the feeding apparatus is moved.

In the embodiment of the present application, the discharge pipe 3102 can be a pipe with an integrated structure, or can be a pipe with a split structure formed by connecting a pipe joint and multiple sections of pipes.

In order to reduce the influence of the discharge pipe 3102 on the weighing result of the weighing component such as the weighing sensor, in some embodiments, the discharge pipe 3102 can adopt a split structure pipe formed by a pipe joint and multiple sections of pipes, wherein the multiple sections of pipes can adopt flexible hoses. At the same time, when arranging the direction of the pipe, the friction between the pipe and the loading platform 3105 or the material box 3101 can be avoided, thereby avoiding the influence of friction on the weighing result of the weighing sensor.

In the embodiment of the present application, each discharge pipe 3102 can also be respectively configured with a flow rate detection unit 3104, and each flow rate detection unit 3104 can be used to detect the flow rate of the seasoning transmitted in the corresponding discharge pipe. Specifically, the flow rate detection unit 3104 can be any existing flow detector such as an electromagnetic flowmeter, an ultrasonic flowmeter, a Coriolis mass flowmeter, etc.

In some embodiments of the present application, each discharge pipe 3102 may also be connected to a corresponding driving unit 3103, and each driving unit 3103 may be used to drive the seasoning in the corresponding material box 3101 to be discharged through the corresponding discharge pipe 3102.

It can be understood that each driving unit 3103 can generate negative pressure in the pipe, thereby sucking the seasoning into the discharge pipe 3102 and transporting the seasoning along the discharge pipe 3102. Therefore, the driving unit 3103 can be any existing driving pump structure, such as a peristaltic pump, an impeller pump, etc., which is not specifically limited here.

In a specific implementation, the driving unit 3103 adopts a peristaltic pump and the discharge pipe 3102 adopts a flexible hose. The peristaltic pump pushes the seasoning in the flexible hose to flow by squeezing the flexible hose. In this way, the peristaltic pump can avoid direct contact with the seasoning in the flexible hose, ensuring that the seasoning is not contaminated.

In some embodiments of the present application, the flow rate detection unit 3104 may include a turning number detector, and each turning number detector can be used to detect the turning number of the corresponding driving unit 3103 in the process of driving the seasoning in the corresponding material box 3101 to be discharged through the corresponding discharge pipe 3102.

It can be understood that the turning number of the peristaltic pump motor can be detected when the driving unit 3103, such as the peristaltic pump, is running. Therefore, the turning number can be any existing encoder that can measure angular displacement, such as a code disk, a grating disk, etc., and the specifics are not limited here.

In order to reduce the volume of the feeding apparatus, the inner cavity of the base 3100 can be used to accommodate some components of the feeding apparatus. As shown in FIG. 15, the driving unit 3103, the flow rate detection unit 3104 and part of the discharge pipe 3102 can all be provided in the inner cavity of the base 3100.

Based on the above-mentioned feeding apparatus, the feeding control method of the present application includes:
determining a target material box of the target seasoning to be fed, a target amount of the target seasoning, and a target seasoning flow rate corresponding to the target amount; controlling the target seasoning in the target material box to be discharged through a target discharge pipe corresponding to the target material box; obtaining a current weight value of the target seasoning in the target material box weighed by a weighing component in the process of being discharged through the target discharge pipe; if a change between the current weight value and the weight value at the previous moment is greater than a preset change threshold, obtaining the current seasoning flow rate of the target seasoning in the target material box in the process of being discharged through the target discharge pipe detected by a target flow rate detection unit corresponding to the target discharge pipe; controlling the target seasoning in the target material box to be discharged through the target discharge pipe according to the current seasoning flow rate and the target seasoning flow rate.

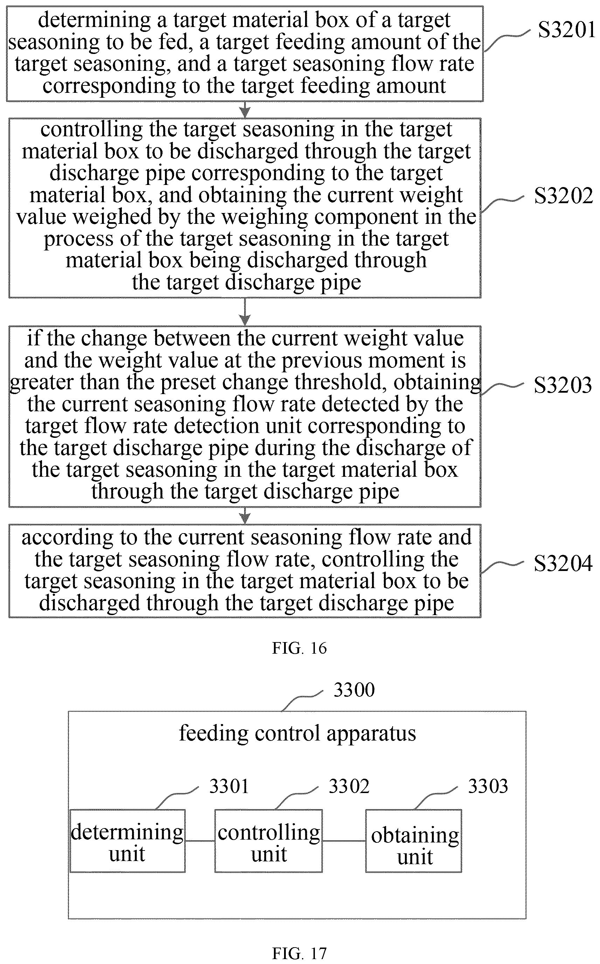

Please refer to FIG. 16, which is a flow chart of a feeding control method provided in an embodiment of the present application. It should be noted that although a logical order is shown in the flowchart diagrams, in some cases, the steps shown or described may be performed in an order different from that shown or described herein.

In an embodiment of the present application, the feeding control method can be used to control a feeding apparatus to feed seasoning to a cooking container of a cooking device. The feeding control method may include the following steps.

Step S3201, determining a target material box of a target seasoning to be fed, a target feeding amount of the target seasoning, and a target seasoning flow rate corresponding to the target feeding amount.

It can be understood that the cooking device can pre-store cooking recipes for cooking various dishes. Each recipe can correspond to a dish. Each recipe can record the main ingredients, auxiliary ingredients, seasonings and cooking steps required for cooking the corresponding dish. For seasonings, the recipe can record the types of seasonings required and the corresponding amount of each seasoning.

Before cooking begins, the user can select a corresponding recipe for the cooking device according to the target dish to be cooked. After selecting the recipe, the ingredient feeding control apparatus can read the recipe to obtain information such as the types of seasonings recorded therein and the corresponding amount of each seasoning.

In one implementation, the cooking device may be configured with an interactive interface, on which various recipes stored in the cooking device may be displayed, and the user may determine the target dish to be cooked this time by selecting a recipe on the interactive interface.

In another implementation, the cooking device can also be communicatively connected to a terminal device, which can be an existing smart terminal such as a mobile phone, a tablet computer, or a laptop computer. Network communication can be achieved between the terminal device and the cooking device through any communication method, including but not limited to mobile communications according to the 3rd Generation Partnership Project (3GPP), Long Term Evolution (LTE), and Worldwide Interoperability for Microwave Access (WiMAX), computer network communications according to the TCP/IP Protocol Suite (TCP/IP), User Datagram Protocol (UDP), or wireless network communications according to Bluetooth, Wi-Fi, Zigbee, etc.

The user can select a recipe in the corresponding program configured on the terminal device, and then the terminal device sends a communication signal to the cooking device to send the recipe information selected by the user to the cooking device, so that the cooking device obtains the recipe for this cooking.

In an embodiment of the present application, the feeding control apparatus can also be connected to the cooking device through any of the above-mentioned communication methods. When the cooking device obtains the target recipe for this cooking, the cooking device can send the information of the target recipe to the feeding control apparatus, so that the feeding control apparatus obtains the target recipe to be cooked, and then reads the target recipe, and determines the target seasoning to be fed and the target feeding amount corresponding to the target seasoning according to the target recipe.

It can be understood that the seasonings stored in the material boxes and the positions of the material boxes on the tray can correspond one to one. For example, eight material boxes are provided on the tray, and the type of seasoning contained in each material box can be pre-set, that is, the position of the material box containing the seasoning is determined according to the type of seasoning contained therein.

For example, the order in which the seasonings are provided is clean water, oil, dark soy sauce, light soy sauce, salt water, chili oil, sugar water, and balsamic vinegar. The first of the eight material boxes is used to store clean water, the second is used to store oil, the third is used to store dark soy sauce, and so on. The eighth is used to store balsamic vinegar. In this way, when it is necessary to feed the corresponding seasoning to the pot body, the discharge pipe corresponding to the material box storing the seasoning can discharge the seasoning into the pot body.

If the user adjusts the order in which the seasonings are placed, that is, the position of the material box, the order stored in the cooking device can be modified accordingly to ensure that the actual order is consistent with the stored order, thereby avoiding the situation in which the seasonings are placed incorrectly.

Therefore, in the embodiment of the present application, the seasoning, the material box and the discharge pipe are mutually corresponding and associated. After the target seasoning is obtained according to the target recipe, the corresponding target material box and the target feeding amount can be determined according to the target seasoning. In another specific implementation, the feeding control apparatus can also determine the target material box and the target feeding amount of the target seasoning to be fed according to the feeding instruction issued by the user.

The feeding instruction may be an instruction sent by the user to the cooking device. The user may set the target seasoning to be fed for this cooking and the target amount of the target seasoning on the interactive screen or terminal device, thereby sending the feeding instruction carrying the aforementioned information to the cooking device. After obtaining the feeding instruction, the cooking device may send the feeding instruction to the feeding control apparatus, so that the feeding control apparatus may parse the feeding instruction and extract the target seasoning carried therein and the target amount of the target seasoning corresponding to the target seasoning.

It can be understood that the target feeding amount refers to the weight of the target seasoning to be fed to the cooking container. Since the weighing sensor is susceptible to external interference, the addition accuracy cannot be guaranteed when relying on the weighing sensor to control the addition. Therefore, in the embodiment of the present application, the target feeding amount of the target seasoning can be converted into a target seasoning flow rate, so as to control the addition according to the target seasoning flow rate.

According to the calculation formula that weight equals volume multiplied by fluid density, under the conditions of a certain target feeding amount and density of the target seasoning, the volume of the target seasoning corresponding to the target feeding amount can be calculated, and the volume of the target seasoning can be determined as the target seasoning flow rate of the target seasoning.

Step S3202, controlling the target seasoning in the target material box to be discharged through the target discharge pipe corresponding to the target material box, and obtaining the current weight value weighed by the weighing component in the process of the target seasoning in the target material box being discharged through the target discharge pipe.

In an embodiment of the present application, the driving unit can be controlled to drive the target seasoning in the target material box to be discharged into the cooking container through the target discharge pipe. During the discharge process, as the target seasoning in the target material box is discharged, the target seasoning in the target material box decreases, and the weight of the target material box decreases. Therefore, the weight value measured by the weighing component also gradually decreases.

It can be understood that during the discharge process of the target discharge pipe, the feeding control apparatus can obtain the current weight value of the weighing component in real time. Specifically, it can access the weighing component according to a preset frequency to obtain the current weight value, or the weighing component can send the current weight value to the feeding control apparatus according to a preset frequency.

Step S3203: if the change between the current weight value and the weight value at the previous moment is greater than the preset change threshold, obtaining the current seasoning flow rate detected by the target flow rate detection unit corresponding to the target discharge pipe during the discharge of the target seasoning in the target material box through the target discharge pipe.

It can be understood that when the working parameter of the target driving unit is constant, the weight of the target seasoning delivered per unit time should be constant. Therefore, it can be known that in the process of the target driving unit driving the target seasoning in the target material box to be discharged, the change in the weight of the target material box is linear. Therefore, the weight value weighed by the weighing component changes linearly, that is, the weight value weighed by the weighing component at each current moment should be equal to or close to the difference between the weight value at the previous moment.

For example, the weight value of the weighing component at the first moment is 300g, the weight value at the second moment is 299g, the weight value at the third moment is 298g, and the weight value at the third moment is 297g, that is, the difference between the weight value at each current moment and the weight value at the previous moment is 1g, which can determine that the weighing component is working normally.

If the change between the current weight value and the weight value at the previous moment is greater than the preset change threshold, it can be said that the weighing component is working abnormally. The preset change threshold here can be determined according to multiple experiments and past experience. In different application scenarios, the change threshold may be different.

If the feeding is continued to be controlled according to the change in weight when the weighing component is malfunctioning, the actual feeding amount will be inconsistent with the target feeding amount. Therefore, when the change between the current weight value and the weight value at the previous moment is greater than the change threshold, the current seasoning flow rate in the process of the target seasoning in the target material box being discharged through the target discharge pipe detected by the target flow rate detection unit can be obtained.

In the embodiment of the present application, the target flow rate detection unit can detect the flow rate of the target seasoning flowing through the target discharge pipe when the target seasoning is transported. It only takes the target seasoning flowing in the target discharge pipe as the detection object. Therefore, compared with the weighing component, the target flow rate detection unit is less susceptible to interference from the external environment.

It can be understood that when discharging starts, the target flow rate detection unit can start working to detect the seasoning flow flowing through the target discharge pipe. During the discharge process of the target discharge pipe, the feeding control apparatus can also be communicated with the target flow rate detection unit. It can access the target flow rate detection unit according to a preset access frequency to obtain the current seasoning flow, or the target flow rate detection unit can send the detected current seasoning flow to the feeding control apparatus according to a preset sending frequency.

After obtaining the current seasoning flow rate of the target flow rate detection unit, the feeding control apparatus can control the feeding according to the current seasoning flow rate to ensure that the target seasoning amount actually fed to the cooking container is consistent with the target feeding amount.

Step S3204: according to the current seasoning flow rate and the target seasoning flow rate, controlling the target seasoning in the target material box to be discharged through the target discharge pipe.

Since the target seasoning flow rate is determined according to the target feeding amount of the target seasoning, therefore, when the current seasoning flow rate is less than the target seasoning flow rate, it can be determined that the target seasoning amount fed to the cooking container has not yet reached the target feeding amount, and the target seasoning in the target material box can continue to be controlled to be discharged into the cooking container through the target discharge pipe; and when the current seasoning flow rate reaches the target seasoning flow rate, it can be determined that the target seasoning amount fed to the cooking container has reached the ideal value, i.e., the target feeding amount, and at this time, the cooking container is stopped, i.e., the target seasoning in the target material box can be controlled to stop being discharged through the target discharge pipe, thereby completing the process of feeding the target seasoning to the cooking container.

In an embodiment of the present application, the weight change of the material box during the feeding process is detected by a weighing component. When the change between the current weight value and the weight value at the previous moment is greater than the change threshold, the current seasoning flow detected by the flow rate detection unit during the feeding process is obtained, and the feeding is controlled according to the current seasoning flow and the target seasoning flow. This can avoid the problem of the weighing component being affected by external interference and affecting the feeding accuracy, improve the feeding accuracy, and ensure the anti-interference ability and reliability of the feeding apparatus.

Next, each step shown in FIG. 16 and specific implementation methods that may be used in practical applications will be described in detail.

Since the weighing component determines the amount of feeding by detecting the weight reduction of the target seasoning in the target material box during the feeding process, it can be understood that it ensures the feeding accuracy through absolute weight control, and the target flow rate detection unit ensures the accuracy of the feeding volume according to the flow of the target seasoning, that is, the volume of the target seasoning. Therefore, in some embodiments, weighing control can be set as the main feeding control means, and flow control means can be used as an auxiliary to further ensure the accuracy of feeding.

Therefore, in some embodiments of the present application, according to the current seasoning flow rate and the target seasoning flow rate, the target seasoning in the target material box is controlled to be discharged through the target discharge pipe, and then the method may further include:
obtaining the initial weight value of the target seasoning in the target material box weighed by the weighing component before being discharged and the cumulative discharge time of the target seasoning in the target material box through the target discharge pipe; determining the overall weight loss value according to the cumulative discharge time and the preset unit time weight loss value; if the difference between the overall weight loss value and the weight difference value is less than the preset first error threshold, controlling the target seasoning in the target material box to be discharged through the target discharge pipe according to the weight difference value and the target feeding amount; the weight difference value is the difference between the initial weight value and the current weight value.

It can be understood that the initial weight value is the weight value measured by the weighing component before the discharge starts. When the target seasoning in the target material box starts to be discharged through the target discharge pipe, the feeding control apparatus can start timing synchronously, so as to obtain the cumulative discharge time at each moment in the discharge process.

Since the weight of the target material box changes linearly when the working parameter of the target driving unit is constant, the weight value measured by the weighing component also changes linearly. Therefore, the weight change of the target material box when the target driving unit drives the target seasoning to be discharged within unit time can be determined in advance before feeding materials, that is, the weight loss value per unit time is obtained, and the weight loss value per unit time is multiplied by the cumulative discharge time obtained by timing, so as to obtain the total weight of the target seasoning that should be discharged from the target material box within the cumulative discharge time, that is, the total weight that the target material box should reduce, that is, the overall weight loss value.

If the weight value of the weighing component changes suddenly due to external interference only at a certain moment or within a short period of time during the discharge process, and its weighed weight value returns to normal within the cumulative discharge time, the accuracy of the feeding can continue to be ensured according to weighing control.

Therefore, while the target seasoning in the target material box continues to be discharged according to the flow control, the weighing component can also continue to weigh the weight of the target material box to obtain the current weight value. If the weight change measured by the weighing component returns to normal within the cumulative discharge time, then the difference between the initial weight value and the current weight value, that is, the weight difference and the overall weight loss value, should be equal or not much different.

That is, when the difference between the total weight loss value and the weight difference value is less than the preset first error threshold, the feeding control means of the weighing control can be switched back to control the discharge of the target seasoning in the target material box.

It can be understood that the preset first error threshold in the embodiment of the present application can be any value such as 30, 30.31, 30.301, etc. The value of the preset first error threshold can be determined according to the accuracy of the weighing component and the actual application scenario, and is not limited here.

The feeding control means of the weighing control is switched back to control the discharge of the target seasoning in the target material box. Then, the target seasoning in the target material box can be controlled to be discharged through the target discharge pipe according to the weight difference and the target feeding amount.

Specifically, if the difference between the weight difference and the target feeding amount is greater than the preset second error threshold, it can be determined that the target seasoning amount fed to the cooking container has not yet reached the target feeding amount, and the target seasoning in the target material box can continue to be controlled to be discharged into the cooking container through the target discharge pipe; and if the difference between the weight difference and the target feeding amount is not greater than the preset second error threshold, it can be determined that the target seasoning amount fed to the cooking container has reached the ideal value, that is, the target feeding amount. At this time, the target seasoning in the target material box is controlled to stop being discharged through the target discharge pipe, and the feeding is completed.

It can be understood that the preset second error threshold in the embodiment of the present application can be any value such as 0, 0.1, 0.01, etc. The value of the preset second error threshold can be determined according to the accuracy of the weighing component and the actual application scenario, and is not limited here.

According to the description of the feeding apparatus in the foregoing embodiments, it can be known that in some embodiments, the flow rate detection unit may include a turning number detector, which can be used to detect the turning number of the corresponding driving unit in the process of driving the seasoning in the corresponding material box to be discharged through the corresponding discharge pipe. Therefore, in the embodiments of the present application, the feeding can also be controlled according to the turning number of the driving unit.

In some embodiments of the present application, after obtaining the current weight value weighed by the weighing component in the process of the target seasoning in the target material box being discharged through the target discharge pipe, the method may further include:
if the change between the current weight value and the weight value at the previous moment is greater than the change threshold, determining the total turning number of the target driving unit corresponding to the target discharge pipe according to the target seasoning flow rate; obtaining the target turning number detector corresponding to the target driving unit to detect the current turning number in the process of the target driving unit driving the target seasoning in the target material box to be discharged through the target discharge pipe; controlling the operation of the target driving unit according to the current turning number and the total turning number.

Since the change between the current weight value and the weight value at the previous moment is greater than the change threshold, it can be considered that the weighing component is working abnormally. Therefore, the total turning number of the target driving unit corresponding to the target discharge pipe can be determined according to the target seasoning flow rate.

In the embodiment of the present application, the volume corresponding to the target seasoning discharged when the target driving unit rotates one circle, that is, the unit discharge volume, can be obtained in advance through experiments. Therefore, by dividing the target seasoning flow rate by the pre-stored unit discharge flow rate, the total turning number of the target driving unit to transport the target seasoning of the target feeding amount can be obtained.

In the process of the target driving unit driving the target seasoning in the target material box to be discharged through the target discharge pipe, the feeding control apparatus can detect the current turning number of the target driving unit in real time by the target number of operation detector, and then control the operation of the target driving unit according to the current turning number and the calculated total turning number.

Specifically, if the current turning number is less than the total turning number, it can be determined that the amount of seasoning currently transmitted to the cooking container has not yet reached the target amount of seasoning, and therefore, the target driving unit can be controlled to continue to drive the target seasoning in the target material box to be discharged into the cooking container through the target discharge pipe;
if the current turning number is equal to the total turning number, it can be determined that the amount of seasoning currently transmitted to the cooking container has just reached the target amount of seasoning. At this time, the target driving unit can be turned off, and the feeding of target seasoning to the cooking container is stopped, thus completing the feeding.

In order to better implement the feeding control method of the present application, the present application further provides a feeding control apparatus, which can be used to control the feeding apparatus to feed seasoning to the cooking container of the cooking device, as shown in FIG. 17, which is a functional module schematic diagram of the feeding control apparatus provided in the embodiment of the present application, and the feeding control apparatus 3300 may include:
a determining unit 3301, used to determine a target material box of a target seasoning to be fed, a target feeding amount of the target seasoning, and a target seasoning flow rate corresponding to the target feeding amount;
a controlling unit 3302, used to control the target seasoning in the target material box to be discharged through a target discharge pipe corresponding to the target material box;
an obtaining unit 3303, used to obtain a current weight value weighed by a weighing component during target seasoning in a target material box being discharged through a target discharge pipe;
if the change between the current weight value and the weight value at the previous moment is greater than a preset change threshold, the current seasoning flow rate detected by the target flow rate detection unit corresponding to the target discharge pipe in the process of the target seasoning in the target material box being discharged through the target discharge pipe is obtained;
the controlling unit 3302, also used to control the target seasoning in the target material box to be discharged through the target discharge pipe according to the current seasoning flow rate and the target seasoning flow rate.

In some embodiments of the present application, the controlling unit 3302 may be specifically used to:
if the current seasoning flow rate is less than the target seasoning flow rate, the target seasoning in the target material box is controlled to be discharged through the target discharge pipe;
if the current seasoning flow rate reaches the target seasoning flow rate, the target seasoning in the target material box is controlled to stop being discharged through the target discharge pipe.

In some embodiments of the present application, the controlling unit 3302 controls the target seasoning in the target material box to be discharged through the target discharge pipe according to the current seasoning flow rate and the target seasoning flow rate. After that, the obtaining unit 3303 can also be used to obtain the initial weight value of the target seasoning in the target material box weighed by the weighing component before being discharged and the cumulative discharge time of the target seasoning in the target material box being discharged through the target discharge pipe;
the controlling unit 3302 may also be used to determine the overall weight loss value according to the accumulated discharge time and the preset weight loss value per unit time;
if the difference between the overall weight loss value and the weight difference is less than the preset first error threshold, the target seasoning in the target material box is controlled to be discharged through the target discharge pipe according to the weight difference and the target feeding amount; the weight difference is the difference between the initial weight value and the current weight value.

In some embodiments of the present application, the controlling unit 3302 may also be used to:
if the difference between the weight difference and the target feeding amount is greater than a preset second error threshold, the target seasoning in the target material box is controlled to be discharged through the target discharge pipe;
if the difference between the weight difference and the target feeding amount is not greater than the preset second error threshold, the target seasoning in the target material box is controlled to stop being discharged through the target discharge pipe.

In some embodiments of the present application, each discharge pipe is connected to a driving unit, each driving unit is used to drive the seasoning in the corresponding material box to be discharged through the corresponding discharge pipe, each flow detection unit includes a turning number detector, each turning number detector is used to detect the turning number of the corresponding driving unit in the process of driving the seasoning in the corresponding material box to be discharged through the corresponding discharge pipe, and the obtaining unit 3303 obtains the current weight value weighed by the weighing component in the process of the target seasoning in the target material box being discharged through the target discharge pipe. After that, the controlling unit 3302 can also be specifically used to:
if the change between the current weight value and the weight value at the previous moment is greater than the change threshold, determine the total turning number of the target driving unit corresponding to the target discharge pipe according to the target seasoning flow rate;
obtain a target turning number detector corresponding to the target driving unit to detect the current turning number of the target driving unit in the process of driving the target seasoning in the target material box to be discharged through the target discharge pipe; control the operation of the target driving unit according to the current turning number and the total turning number.

In some embodiments of the present application, the controlling unit 3302 may also be used to:
when the current turning number is less than the total turning number, the target driving unit is controlled to drive the target seasoning in the target material box to be discharged through the target discharge pipe;
when the current turning number reaches the total turning number, the target driving unit is controlled to stop driving the target seasoning in the target material box to be discharged through the target discharge pipe.

In some embodiments of the present application, the controlling unit 3302 may also be used to:
determine the total turning number according to the target seasoning flow rate and the unit discharge flow rate of the target driving unit; the unit discharge flow rate is the flow rate corresponding to the target seasoning discharged when the target driving unit rotates one circle.

In some embodiments of the present application, the determining unit 3301 may be specifically used to:
determine the target seasoning flow rate corresponding to the target feeding amount according to the target feeding amount and the target seasoning density.

In some embodiments of the present application, the determining unit 3301 may be specifically used to:
obtain the target recipe;
determine the target seasoning according to the target recipe;
determine the target material box and the target feeding amount according to the target seasoning; or,
parse the obtained feeding instructions;
determine the target material box and target material feeding amount according to the material feeding instruction.

It should be noted that in the present application, the relevant contents of the determining unit 3301, the controlling unit 3302 and the obtaining unit 3303 correspond one to one with the above, and technical personnel in the relevant field can clearly understand that for the convenience and conciseness of description, the specific working process of the above-described feeding control apparatus and its corresponding unit modules can refer to the description of the feeding control method in any embodiment corresponding to FIG. 16, and the details will not be repeated here.

Based on the feeding control method in the above embodiment, the present application further provides a feeding apparatus, which includes a weighing component, at least one material box and a discharge pipe corresponding to each material box, the weighing component is used to weigh the total weight of each material box, each discharge pipe is used to transmit the seasoning in the corresponding material box, each discharge pipe is respectively configured with a flow rate detection unit, and each flow rate detection unit is used to detect the flow rate of the seasoning transmitted in the corresponding discharge pipe;
the feeding apparatus may further include a processor 3401 and a memory 3402. The memory 3402 may be used to store a computer program. When the computer program is executed by the processor 3401, it may be used to implement the following functions: determining a target material box of a target seasoning to be fed, a target feeding amount of the target seasoning, and a target seasoning flow rate corresponding to the target feeding amount;
controlling the target seasoning in the target material box to be discharged through the target discharge pipe corresponding to the target material box, and obtaining the current weight value weighed by the weighing component in the process of the target seasoning in the target material box being discharged through the target discharge pipe;
if the change between the current weight value and the weight value at the previous moment is greater than a preset change threshold, obtaining the current seasoning flow rate detected by the target flow rate detection unit corresponding to the target discharge pipe in the process of the target seasoning in the target material box being discharged through the target discharge pipe;
controlling the target seasoning in the target material box to be discharged through the target discharge pipe according to the current seasoning flow rate and the target seasoning flow rate.

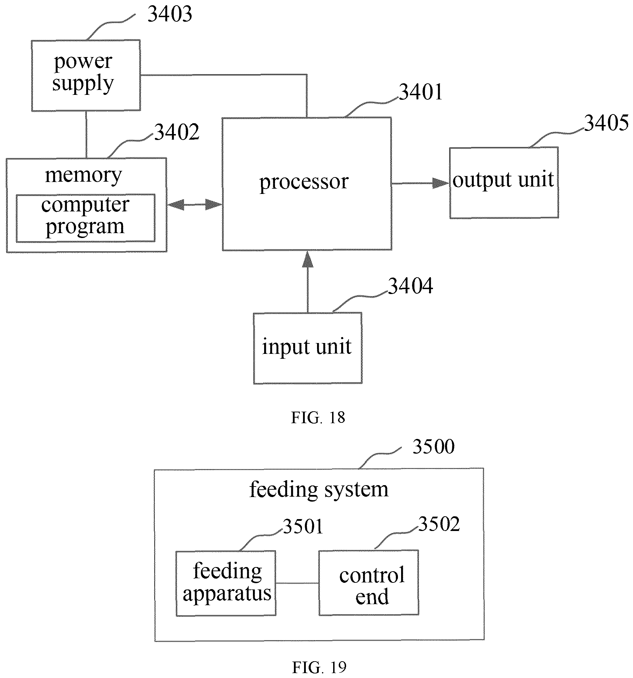

As shown in FIG. 18, another structural schematic diagram of the feeding apparatus involved in the present application is shown. Specifically:
the feeding apparatus may include components such as a processor 3401 of one or more processing cores, a memory 3402 of one or more computer-readable storage media, a power supply 3403 and an input unit 3404. Those skilled in the art will appreciate that the structure shown in FIG. 18 does not constitute a limitation on the feeding apparatus, and the feeding apparatus may also include more or fewer components than shown in the figure, or a combination of certain components, or a different arrangement of components. Where,
the processor 3401 is the control center of the feeding apparatus, which uses various interfaces and lines to connect the various parts of the entire feeding apparatus, and performs various functions of the feeding apparatus and processes data by running or executing software programs and/or unit modules stored in memory 3402, and calling data stored in memory 3402, thereby monitoring the feeding apparatus as a whole. Optionally, the processor 3401 may include one or more processing cores; the processor 3401 may be a central processing unit (CPU), or other general-purpose processors, digital signal processors (DSP), application-specific integrated circuits (ASIC), field-programmable gate arrays (FPGA) or other programmable logic devices, discrete gate or transistor logic devices, discrete hardware components, etc. The general-purpose processor can be a microprocessor or any conventional processor, etc. Preferably, the processor 3401 can integrate an application processor and a modem processor, wherein the application processor mainly processes the operating system, user interface and application programs, etc., and the modem processor mainly processes wireless communications. It is understandable that the above-mentioned modem processor may not be integrated into the processor 3401.

The memory 3402 may be used to store software programs and modules. The processor 3401 executes various functional applications and data processing by running the software programs and modules stored in the memory 3402. The memory 3402 may mainly include a program storage area and a data storage area, wherein the program storage area may store an operating system, an application required for at least one function, etc.; the data storage area may store data created according to the use of the cooking device, etc. In addition, the memory 3402 may include a high-speed random access memory and may also include a non-volatile memory, such as at least one disk storage device, a flash memory device, or other volatile solid-state storage devices. Accordingly, the memory 3402 may also include a memory controller to provide the processor 3401 with access to the memory 3402.

The feeding apparatus may also include a power supply 3403 for supplying power to each component. Preferably, the power supply 3403 may be logically connected to the processor 3401 through a power management system, thereby managing functions such as charging, discharging, and power consumption through the power management system. The power supply 3403 may also include one or more DC or AC power supplies, recharging systems, power failure detection circuits, power converters or inverters, power status indicators, and other arbitrary components.

The feeding apparatus may further include an input unit 3404 and an output unit 3405. The input unit 3404 may be used to receive input digital or character information and generate keyboard, mouse, joystick, optical or trackball signal input related to user settings and function control.

Although not shown, the feeding apparatus may also include a display unit or the like for displaying relevant information such as the seasoning amount and the feeding progress to the user, which will not be described in detail here. Specifically in the present application, the processor 3401 in the feeding apparatus will load the executable files corresponding to the processes of one or more applications into the memory 3402 according to the following instructions, and the processor 3401 will run the application stored in the memory 3402 to achieve various functions, as follows:
determining a target material box of a target seasoning to be fed, a target feeding amount of the target seasoning, and a target seasoning flow rate corresponding to the target feeding amount;
controlling the target seasoning in the target material box to be discharged through the target discharge pipe corresponding to the target material box, and obtaining the current weight value weighed by the weighing component in the process of the target seasoning in the target material box being discharged through the target discharge pipe;
if the change between the current weight value and the weight value at the previous moment is greater than a preset change threshold, obtain the current seasoning flow rate detected by the target flow rate detection unit corresponding to the target discharge pipe in the process of the target seasoning in the target material box being discharged through the target discharge pipe;
controlling the target seasoning in the target material box to be discharged through the target discharge pipe according to the current seasoning flow rate and the target seasoning flow rate.

A person skilled in the art will appreciate that all or part of the steps in the various methods described above may be accomplished by instructions, or by controlling related hardware through instructions. The instructions may be stored in a computer-readable storage medium and loaded and executed by the processor 3401.

To this end, the present application provides a computer-readable storage medium, which may include: a read-only memory (ROM), a random access memory (RAM), a disk or an optical disk, etc. Computer instructions are stored thereon, and the computer instructions are loaded by the processor 3401 to execute the steps in any one of the feeding control methods provided in the present application. For example, when the computer instructions are executed by the processor 3401, the following functions are implemented:
determining a target material box of a target seasoning to be fed, a target feeding amount of the target seasoning, and a target seasoning flow rate corresponding to the target feeding amount;
controlling the target seasoning in the target material box to be discharged through the target discharge pipe corresponding to the target material box, and obtaining the current weight value weighed by the weighing component in the process of the target seasoning in the target material box being discharged through the target discharge pipe;
if the change between the current weight value and the weight value at the previous moment is greater than a preset change threshold, obtaining the current seasoning flow rate detected by the target flow rate detection unit corresponding to the target discharge pipe in the process of the target seasoning in the target material box being discharged through the target discharge pipe;
controlling the target seasoning in the target material box to be discharged through the target discharge pipe according to the current seasoning flow rate and the target seasoning flow rate.

The computer instructions stored in the computer-readable storage medium can execute the steps of the feeding control method in any embodiment corresponding to FIG. 16 of the present application. Therefore, the beneficial effects that can be achieved by the feeding control method in any embodiment corresponding to FIG. 16 of the present application can be achieved. Please see the previous description for details, which will not be repeated here.

Please refer to FIG. 19, which is a system structure diagram of a feeding system provided in an embodiment of the present application. The present application also provides a feeding system 3500, which may include a feeding apparatus 3501 and a control end 3502. The feeding apparatus 3501 may include a weighing component, at least one material box and a discharge pipe corresponding to each material box. The weighing component is used to weigh the total weight of each material box, and each discharge pipe is used to transmit the seasoning in the corresponding material box. Each discharge pipe is respectively configured with a flow rate detection unit, and each flow rate detection unit is used to detect the flow rate of the seasoning transmitted in the corresponding discharge pipe; each discharge pipe is respectively connected to the delivery pipe component to add the seasoning required for cooking to the cooking container through the delivery pipe component.

The control end 3502 is in communication connection with the feeding apparatus 3501, and is used to control the feeding apparatus 3501 to perform the feeding operation and implement the feeding control method corresponding to any embodiment of FIG. 16. The control end 3502 can control the feeding apparatus 3501 to implement the feeding control method in any embodiment corresponding to FIG. 16 of the present application. Therefore, the beneficial effects that can be achieved by the feeding control method in any embodiment corresponding to FIG. 16 of the present application can be achieved. Please see the previous description for details, which will not be repeated here.

The present application also provides a cooking device, which may include a cooking container, a feeding apparatus and a feeding pipe component; wherein the feeding apparatus includes a weighing component, at least one material box and a discharge pipe corresponding to each material box, the weighing component is used to weigh the total weight of each material box, each discharge pipe is used to transmit the seasoning in the corresponding material box, each discharge pipe is respectively configured with a flow rate detection unit, and each flow rate detection unit is used to detect the flow rate of the seasoning transmitted in the corresponding discharge pipe; each discharge pipe is respectively connected to the feeding pipe component to add the seasoning required for cooking to the cooking container through the feeding pipe component.

The feeding apparatus may further include a memory and a processor, where the memory is used to store a computer program, and when the computer program is executed by the processor, it may be used to implement the following functions:
determining a target material box of a target seasoning to be fed, a target feeding amount of the target seasoning, and a target seasoning flow rate corresponding to the target feeding amount;
controlling the target seasoning in the target material box to be discharged through the target discharge pipe corresponding to the target material box, and obtaining the current weight value weighed by the weighing component in the process of the target seasoning in the target material box being discharged through the target discharge pipe;
if the change between the current weight value and the weight value at the previous moment is greater than a preset change threshold, obtaining the current seasoning flow rate detected by the target flow rate detection unit corresponding to the target discharge pipe in the process of the target seasoning in the target material box being discharged through the target discharge pipe;
controlling the target seasoning in the target material box to be discharged through the target discharge pipe according to the current seasoning flow rate and the target seasoning flow rate.

The feeding apparatus can implement the feeding control method in any embodiment corresponding to FIG. 16 of the present application. Therefore, the beneficial effects that can be achieved by the feeding control method in any embodiment corresponding to FIG. 16 of the present application can be achieved. Please see the previous description for details and will not be repeated here.

The present application provides a pipe cleaning method, and the execution subject of the pipe cleaning method can be a pipe cleaning apparatus, or a feeding apparatus, cooking device, server equipment, physical host or user equipment (UE) and other different types of equipment integrated with the pipe cleaning apparatus, wherein the pipe cleaning apparatus can be implemented in hardware or software, and the UE can specifically be a terminal device such as a smart phone, a tablet computer, a laptop computer, a PDA or a desktop computer.

This pipe cleaning method can be applied to the feeding apparatuses of cooking device such as stir-fry machines, food processors, and cooking machines. It is used to clean the discharge pipe of the feeding apparatus for conveying seasonings after the cooking device finishes cooking or before the cooking device is not used for a long time, so as to ensure the cleanliness and hygiene of the discharge pipe.

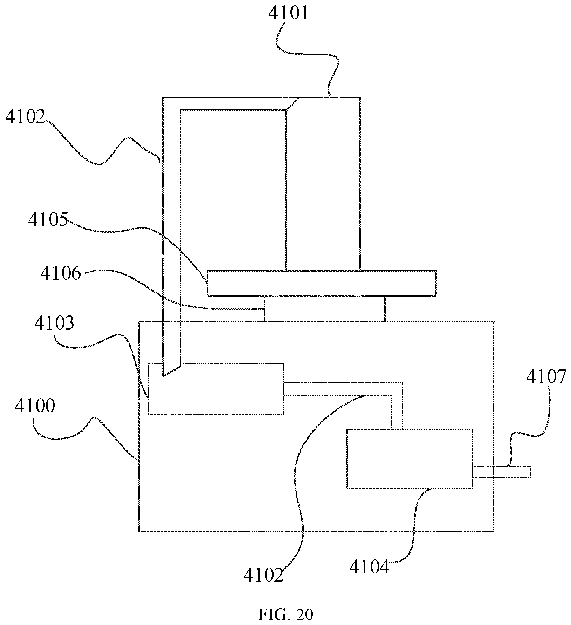

The feeding apparatus of the embodiment of the present application can feed the seasonings required for cooking to the cooking container of the cooking device during the cooking process, and can self-clean the discharge pipe after cooking is completed. Please refer to FIG. 20, which is a structural schematic diagram of a feeding apparatus provided in an embodiment of the present application. The feeding apparatus may include a weighing component 4106 and at least one material box 4101, each material box 4101 is configured with a corresponding discharge pipe 4102, and the weighing component 4106 can be used to weigh the total weight of each material box 4101.

The feeding apparatus may include a base 4100, and each material box 4101 may be provided on the base 4100. Each discharge pipe 4102 is respectively connected to the corresponding material box 4101 for transmitting the seasoning in the corresponding material box 4101.

It can be understood that the material box 4101 can be a container for storing or containing cooking seasonings. Each material box 4101 can be configured with a container inlet and a container outlet. The stored seasonings can flow from the container inlet to the inner cavity of the material box 4101, that is, the containing cavity; when the cooking device is working and the feeding apparatus needs to provide the corresponding seasonings to the cooking container of the cooking device, the seasonings contained in the inner cavity of the material box 4101 can flow out from the container outlet.

It is worth noting that in some application scenarios, the container inlet and container outlet of the material box 4101 can be the same port. In this case, the seasoning can flow from the port into the inner cavity of the material box 4101, and can also flow out from the port. The port setting of the material box 4101 can be determined according to the actual application scenario, and is not specifically limited here.

The seasoning stored in the material box 4101 can be liquid seasonings such as water, oil, soy sauce, vinegar, etc., or it can be a seasoning solution obtained by dissolving solid seasonings such as salt, sugar, chicken essence, etc. in water. Since more than one seasoning is usually required to cook a dish, there can be more than one material box 4101 in the embodiment of the present application. Although one material box 4101 is shown in FIG. 20, in actual applications, the specific number of material boxes 4101 can be determined according to the actual application situation, and is not limited here. In the embodiment of the present application, each discharge pipe 4102 can be respectively connected to the container outlet of the corresponding material box 4101 to transfer the seasoning in the corresponding material box 4101 to the cooking container or discharge the cleaning liquid in the corresponding material box 4101.

If each discharge pipe 4102 is respectively connected to a cooking container, more ports need to be reserved on the cooking container. If a large number of seasonings are required, the arrangement of the discharge pipes 4102 is complicated. Therefore, in some other application scenarios, the feeding apparatus may also include a material collection container 4104, which can be respectively connected to each discharge pipe 4102 and connected to the cooking container or other external container through a discharge pipe 4107. The seasoning transmitted from the discharge pipe 4102 to the material collection container 4104 can flow to the cooking container via the discharge pipe 4107, or the cleaning liquid transmitted from the discharge pipe 4102 to the material collection container 4104 can flow to the cooking container or other external containers connected to the discharge pipe 4107 via the discharge pipe 4107.

It can be understood that in order to avoid residual seasoning or cleaning liquid in the material collection container 4104 and the discharge pipe 4107, the material collection container 4104 can also be connected to an air pump (not shown in the drawings), which can provide power for the circulation of seasoning or cleaning liquid, and pump the seasoning or cleaning liquid in the material collection container 4104 and the discharge pipe 4107 to the cooking container.

As shown in FIG. 20, each discharge pipe 4102 can be connected to a corresponding driving unit 4103, so as to drive the seasoning or cleaning liquid to circulate in the pipe through the driving unit 4103. Since each discharge pipe 4102 is respectively connected to the material collection container 4104, the seasoning or cleaning liquid in the corresponding material box 4101 can be transported to the material collection container 4104 through the corresponding driving unit 4103, and then discharged from the material collection container 4104 through the discharge pipe 4107.

It can be understood that each driving unit 4103 can generate negative pressure in the pipe, thereby sucking the seasoning or cleaning liquid into the discharge pipe 4102 and transporting the liquid along the discharge pipe 4102. Therefore, the driving unit 4103 can be any existing driving pump structure, such as a peristaltic pump, an impeller pump, etc., which is not specifically limited here.

In order to reduce the volume of the feeding apparatus, the inner cavity of the base 4100 can be used to accommodate some components of the feeding apparatus. As shown in FIG. 20, the driving unit 4103, the material collection container 4104 and part of the discharge pipe 4102 can all be provided in the inner cavity of the base 4100.

As shown in FIG. 20, the weighing component 4106 can be provided on the base 4100 of the feeding apparatus, and each material box 4101 can be provided on a loading platform 4105. The weighing component 4106 can include a weighing sensor, which is provided under the loading platform 4105 and is used to weigh the total weight of the loading platform 4105 and each material box 4101 on the loading platform 4105.

It can be understood that a plurality of receiving grooves (not shown) can be provided on the loading platform 4105, each receiving groove can be used to place a corresponding material box 4101, and the receiving grooves can limit the material box 4101 to avoid collision or falling between the material boxes 4101 on the loading platform 4105 when the feeding apparatus is moved.

In the embodiment of the present application, the discharge pipe 4102 can be a pipe with an integrated structure, or can be a pipe with a split structure formed by connecting a pipe joint and multiple sections of pipes.

In a specific implementation, the driving unit 4103 adopts a peristaltic pump and the discharge pipe 4102 adopts a flexible hose. The peristaltic pump pushes the liquid in the flexible hose to flow by squeezing the flexible hose. In this way, the peristaltic pump can avoid direct contact with the liquid in the flexible hose, ensuring that the liquid is not contaminated.

In order to reduce the influence of the discharge pipe 4102 on the weighing result of the weighing sensor, in some embodiments, the discharge pipe 4102 can adopt a split structure pipe formed by a pipe joint and multiple sections of pipes, wherein the multiple sections of pipes can adopt flexible hoses. At the same time, when arranging the direction of the pipe, the friction between the pipe and the loading platform 4105 or the material box 4101 can be avoided, thereby avoiding the influence of friction on the weighing result of the weighing sensor.

Based on the feeding apparatus in the above embodiment, the pipe cleaning method of the present application includes:
determining the target discharge pipe to be cleaned; controlling the cleaning liquid in the target material box corresponding to the target discharge pipe to be discharged through the target discharge pipe; obtaining the current weight value measured by the weighing component in the process of the target discharge pipe discharging the cleaning liquid in the target material box; if the weight change between the current weight value and the weight value at the previous moment is less than a preset change threshold, determining the cleaning of the target discharge pipe is completed.

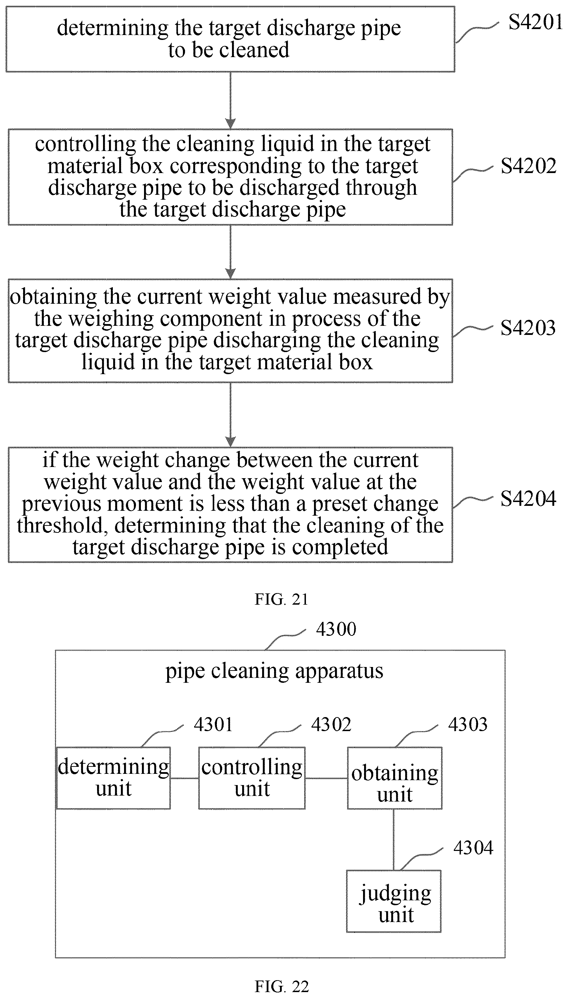

Please refer to FIG. 21, which is a flow chart of the pipe cleaning method provided in an embodiment of the present application. It should be noted that although a logical order is shown in the flowchart diagrams, in some cases, the steps shown or described may be performed in an order different from that shown or described herein.

In an embodiment of the present application, the pipe cleaning method can be used to clean the discharge pipe of a feeding apparatus, and the pipe cleaning method can include the following steps.

Step S4201, determining the target discharge pipe to be cleaned.

Since the feeding apparatus may have a plurality of material boxes, and there is a one-to-one correspondence between the material boxes and the discharge pipes, the feeding apparatus may also have a plurality of discharge pipes.

When cooking different dishes, different types of seasonings need to be added. Therefore, the usage frequencies of the discharge pipes are different. Different usage frequencies will cause the seasonings remaining on the inner wall of the discharge pipe to have different effects on the discharge pipe.

For example, most dishes require the addition of salt water when cooking, so the discharge pipe corresponding to the material box for storing salt water is used more frequently. Due to the high frequency of use, the salt water remaining on the inner wall of the discharge pipe is not easy to rot, mold, etc.; while for the discharge pipe corresponding to the material box for storing chili oil, chili oil may only be needed when cooking some dishes. Therefore, the frequency of use of the discharge pipe is relatively low. If the discharge pipe is not cleaned for a long time, the chili oil remaining on the inner wall of the discharge pipe is prone to rot, mold, etc., thereby contaminating the discharge pipe.

Therefore, in some embodiments, the pipe cleaning apparatus can determine the target discharge pipe to be cleaned according to the frequency of use of the discharge pipe. For example, an idle time threshold can be pre-configured for each discharge pipe. If the idle time of a discharge pipe, that is, the time when it has not been used, reaches the corresponding idle time threshold since the last use, the pipe cleaning apparatus automatically determines the discharge pipe as the target discharge pipe to be cleaned, and resets the accumulated idle time after cleaning so that it can be accumulated again next time.

It can be understood that in some other embodiments, the target discharge pipe can also be a discharge pipe specified by the user. For example, after cooking, the user selects the number or name of the target discharge pipe to be cleaned, and then sends a signal including the number or name to the pipe cleaning apparatus, so that the pipe cleaning apparatus can determine that the discharge pipe corresponding to the number or name is the target discharge pipe to be cleaned according to the signal.

In the embodiment of the present application, different target discharge pipes can be cleaned in sequence according to a pre-set cleaning order. It should be noted that the number of target discharge pipes to be cleaned can be determined according to actual conditions and is not specifically limited here.

Step S4202, controlling the cleaning liquid in the target material box corresponding to the target discharge pipe to be discharged through the target discharge pipe.

In an embodiment of the present application, cleaning liquid can be discharged into the target material box corresponding to the target discharge pipe in advance, so that the target material box stores cleaning liquid that can be used to clean the discharge pipe.

Therefore, when cleaning the pipe, the pipe cleaning apparatus can control the driving unit corresponding to the target discharge pipe to work, drive the cleaning liquid in the target material box to be output to the material collection container through the target discharge pipe, and then be discharged from the outlet of the discharge pipe to the cooking container or other external container.

It can be understood that the cleaning liquid can be clean water or a mixed liquid with added cleaning agent. In order to improve the cleaning effect, the cleaning liquid can also be heated clean water or mixed liquid. The specific selection can be according to the actual application scenario, and is not limited here.

Step S4203, obtaining the current weight value measured by the weighing component in process of the target discharge pipe discharging the cleaning liquid in the target material box.

Since the weighing component can be used to weigh the total weight of each material box, the driving unit connected to the discharge pipe can be configured to drive the seasoning in the material box to be discharged along the discharge pipe, and stop discharging according to the change of the weight weighed by the weighing component. Therefore, the operation of the driving unit can also be controlled according to the change of the weight measured by the weighing component, thereby controlling the delivery of the cleaning liquid by the target discharge pipe.

In the embodiment of the present application, the circulation of the cleaning liquid can be controlled according to the change in weight. Therefore, in order to clarify the weight change of the cleaning liquid during the cleaning process, the current weight value weighed by the weighing unit can be obtained in real time in the process of the target discharge pipe discharging the cleaning liquid in the target material box. It can be understood that as the target seasoning in the target material box is discharged, the weight of the target material box gradually decreases, the weight value weighed by the weighing unit gradually decreases, and the reduced weight is the weight of the cleaning liquid discharged by the target discharge pipe.

A weighing component such as a weighing sensor can periodically sample the total weight of each material box according to a preset sampling frequency. The pipe cleaning apparatus can actively obtain the current weight value weighed by the weighing component. For example, an access cycle can be set for the pipe cleaning apparatus in advance. The pipe cleaning apparatus periodically establishes a communication connection with the weighing sensor according to the access cycle, thereby obtaining the current weight value weighed by the weighing sensor.

The pipe cleaning apparatus can also obtain the current weight value measured by the weighing component passively. For example, each time the weighing sensor samples the total weight of each material box, the obtained current weight value can be sent directly to the pipe cleaning apparatus, so that the pipe cleaning apparatus can obtain the current weight value measured by the weighing sensor.

Step S4204: if the weight change between the current weight value and the weight value at the previous moment is less than a preset change threshold, determining that the cleaning of the target discharge pipe is completed.

As the cleaning liquid in the target material box is discharged in the process of conveying the cleaning liquid in the target discharge pipe, the weight of the target material box gradually decreases, and the weight value measured by the weighing unit gradually decreases. Therefore, the current weight value sampled by the weighing component each time will be less than the weight value sampled at the previous sampling moment. If there is no change or a small change between the current weight value sampled by the weighing component and the weight value sampled at the previous sampling moment, it can be determined that the cleaning liquid stored in the target material box has been completely discharged. In this way, it can be determined that the cleaning of the target discharge pipe is completed.

The preset change threshold may be any value such as 0, 0.01, 0.1, etc. In different application scenarios, the value of the change threshold may be different. The selection of the specific change threshold may be determined according to the actual application scenario and is not limited here.

In the embodiment of the present application, by controlling the cleaning liquid in the target material box corresponding to the target discharge pipe to be discharged through the target discharge pipe, the cleaning liquid can be flushed on the inner wall of the target discharge pipe in the process of conveying the cleaning liquid in the target discharge pipe, thereby cleaning the target discharge pipe, avoiding contamination of the target discharge pipe by residual seasoning on the inner wall of the target discharge pipe, ensuring the cleanliness and hygiene of the target discharge pipe, and improving the safety and reliability of the feeding apparatus.

Next, each step shown in FIG. 21 and specific implementation methods that may be used in practical applications will be described in detail.

In some embodiments of the present application, if the weight change between the current weight value and the weight value at the previous moment is less than a preset change threshold, then determining that the cleaning of the target discharge pipe is completed may further include:
if the weight change between the current weight value and the weight value at the previous moment is less than the change threshold, maintaining the target driving unit corresponding to the target discharge pipe in operation;
when the time for maintaining the operation of the target driving unit reaches a preset time limit, turning off the target driving unit and determining that the cleaning of the target discharge pipe is completed.

Since the target discharge pipe is used to discharge the cleaning liquid in the target material box, when the cleaning liquid in the target material box is just emptied, there is still cleaning liquid flowing in the target discharge pipe. If the target driving unit is immediately shut down at this moment, the cleaning liquid will remain in the target discharge pipe.

Therefore, when it is determined that the weight change between the current weight value and the weight value at the previous moment is less than the change threshold, the operating state of the target driving unit can be maintained. At this time, since the cleaning liquid in the target material box has been completely discharged into the target discharge pipe, the target driving unit will pump the air in the target material box into the target discharge pipe, thereby pushing the cleaning liquid remaining in the target discharge pipe out of the target discharge pipe by pumping the air into the target discharge pipe, until the cleaning liquid in the target discharge pipe is completely discharged, and then it can be determined that the cleaning of the target discharge pipe is completed.

It can be understood that due to the different installation positions of different material boxes, the directions of the discharge pipes are different. Therefore, the lengths of the discharge pipes corresponding to the material boxes are also different. For the shorter discharge pipes, after the weight change between the current weight value measured by the weighing component and the weight value at the previous moment is less than the change threshold, the corresponding driving unit is maintained to work for a short time, which can ensure that all the cleaning liquid remaining in the discharge pipe is discharged; and for the longer discharge pipes, after the weight change between the current weight value measured by the weighing component and the weight value at the previous moment is less than the change threshold, the corresponding driving unit needs to be maintained to work for a long time to ensure that all the cleaning liquid remaining in the discharge pipe is discharged.

Therefore, the preset time limit for maintaining the corresponding driving unit to continue operating for different discharge pipes may be different. For example, the preset time limit corresponding to a shorter discharge pipe can be set to 3s, 5s, etc., and the preset time limit corresponding to a longer discharge pipe can be set to 10s, 15s, etc. The specific selection can be made according to the length of the discharge pipe, which is not limited here.

In some embodiments of the present application, determining a target discharge pipe to be cleaned may further include:
obtaining a cleaning instruction, and determining a target material box according to the cleaning instruction; and according to the target material box, determining a discharge pipe connected to the target material box as a target discharge pipe to be cleaned.

It can be understood that the cleaning instruction can be an instruction automatically sent by the cooking device to the pipe cleaning apparatus after cooking is completed, or it can be an instruction sent by the user through a terminal device that is communicatively connected to the pipe cleaning apparatus. If the pipe cleaning apparatus is integrated in the cooking device, the cleaning instruction can also be an instruction automatically issued by the pipe cleaning apparatus after detecting that cooking is completed.

When cleaning the target discharge pipe, the target material box should be stored with cleaning liquid. Therefore, if the target material box also stores the target seasoning, the cleaning liquid discharged into the target material box will contaminate the original target seasoning in the target material box, resulting in waste of the target seasoning. Therefore, in the embodiment of the present application, the target material box may be a material box from which the stored seasonings have been emptied or a material box with less stored seasonings.

According to the description in the above embodiments, it can be known that there is a one-to-one correspondence between the material box and the discharge pipe. Therefore, after the target material box is determined, the discharge pipe corresponding to the target material box can be determined as the target discharge pipe.

In some application scenarios, the feeding apparatus of the present application may further include a liquid level detection unit corresponding to each material box, and determine the target material box according to the cleaning instruction, which may further include:
in response to a cleaning instruction, a liquid level detection signal of each liquid level detection unit detecting the seasoning liquid level in the corresponding material box is obtained; for each liquid level detection unit, if the liquid level detection signal of the liquid level detection unit indicates that the seasoning liquid level in the corresponding material box is lower than a preset material shortage warning line, the material box corresponding to the liquid level detection unit is determined as the target material box.

In the embodiment of the present application, the liquid level detection unit can be any existing liquid level meter, liquid level detector, liquid level detection sensor or other device or structure that can be used to detect the liquid level, and is not specifically limited here.

For each material box, a material shortage warning line can be pre-configured for it, and the material shortage warning line can be used to indicate whether the pipe cleaning apparatus cleans the discharge pipe corresponding to the material box. For example, the material shortage warning line can be located near the bottom of the material box. If the seasoning liquid level is lower than the material shortage warning line, it can be determined that the seasoning liquid level in the material box is low, and the stored seasoning is small. Even if cleaning liquid is discharged therein, it will not cause too much waste of seasoning. Therefore, the material box can be determined as the target material box; and if the seasoning liquid level is not lower than the material shortage warning line, it can be determined that the seasoning liquid level in the material box is not low, and the stored seasoning is not small. If cleaning liquid is discharged therein, not only the cleaning effect will be poor, but also more seasoning will be wasted. Therefore, the material box may not be determined as the target material box.

It can be understood that the purpose of setting the material shortage warning line is to avoid wasting seasonings. Therefore, the material shortage warning line can also be level with the bottom of the inner cavity of the material box. In this scenario, the liquid level detection unit can detect whether there is seasoning in the material box. Only when there is no seasoning in the material box, the material box is determined as the target material box, and then the corresponding target discharge pipe is cleaned.

In the embodiment of the present application, the material shortage warning lines corresponding to each material box may be the same or different, and the height or position of each material shortage warning line may be determined according to the seasoning cost, seasoning source and actual application scenario, which will not be elaborated here.

When the cooking device finishes cooking, a cleaning instruction can be automatically sent to the pipe cleaning apparatus. When the pipe cleaning apparatus obtains the cleaning instruction, the liquid level detection signal of each liquid level detection unit for detecting the seasoning liquid level in the corresponding material box in response to the cleaning instruction can be obtained. For each liquid level detection unit, if the liquid level detection signal output indicates that the seasoning liquid level in the corresponding material box is lower than the material shortage warning line, it can be considered that the seasoning liquid level in the material box is low, and then the material box can be determined as the target material box; on the contrary, if the liquid level detection signal indicates that the seasoning liquid level in the corresponding material box is not lower than the material shortage warning line, it can be considered that the seasoning liquid level in the material box is not low, and the material box is not determined as the target material box, that is, the discharge pipe corresponding to the material box will not be cleaned during this cleaning.

In a specific implementation, when the seasoning liquid level in the material box is lower than the material shortage warning line, the liquid level detection unit outputs a high-level liquid level detection signal, and when the seasoning liquid level in the material box is not lower than the material shortage warning line, the liquid level detection unit outputs a low-level liquid level detection signal. Therefore, if the liquid level detection signal obtained by the pipe cleaning apparatus is a high-level signal, it can be confirmed that the seasoning liquid level in the material box is lower than the material shortage warning line. If the liquid level detection signal obtained by the pipe cleaning apparatus is a low-level signal, it can be confirmed that the seasoning liquid level in the material box is not lower than the material shortage warning line. Therefore, the target material box can be determined according to the liquid level detection signal, and then the target discharge pipe is determined according to the target material box.

In other application scenarios, a low-level liquid level detection signal can also be used to indicate that the seasoning liquid level in the material box is lower than the material shortage warning line. At this time, a high-level liquid level detection signal is used to indicate that the seasoning liquid level in the material box is not lower than the material shortage warning line. No further details will be given here.

In some other embodiments of the present application, determining the target material box according to the cleaning instruction may further include:
the cleaning instruction is parsed to extract the target material box identification code carried in the cleaning instruction; each material box is associated with a unique material box identification code; according to the target material box identification code, the material box associated with the target material box identification code is determined as the target material box.

In an embodiment of the present application, when the cooking device completes cooking, the user may be prompted to choose whether to clean the discharge pipe. Specifically, the cooking device may be configured with an interactive interface, which may display a cleaning selection button and buttons corresponding to each material box. The user may use the buttons on the interactive interface to choose whether to clean the discharge pipe and which specific discharge pipes to clean, so that the cooking device can send the cleaning instruction carrying the user's selection to the pipe cleaning apparatus.

In another implementation, the pipe cleaning apparatus can also be communicatively connected to a terminal device, which can be an existing smart terminal such as a mobile phone, a tablet computer, or a laptop computer. Network communication can be achieved between the terminal device and the cooking device through any communication method, including but not limited to mobile communications according to the 3rd Generation Partnership Project (3GPP), Long Term Evolution (LTE), and Worldwide Interoperability for Microwave Access (WiMAX), computer network communications according to the TCP/IP Protocol Suite (TCP/IP), User Datagram Protocol (UDP), or wireless network communications according to Bluetooth, Wi-Fi, and Zigbee.

The user can choose whether to clean the discharge pipe and which discharge pipes to clean in the corresponding program configured in the terminal device, and then the terminal device sends a cleaning instruction to the pipe cleaning apparatus to transmit the information selected by the user on whether to clean the discharge pipe and which discharge pipes to clean to the pipe cleaning apparatus.

In the embodiment of the present application, each material box is associated with a material box identification code that uniquely identifies its identity. After the user chooses to clean the discharge pipe and determines the target discharge pipe to be cleaned, the user can select the button of the target material box corresponding to the target discharge pipe, thereby configuring the target material box identification code corresponding to the target material box in the cleaning instruction, so that the cleaning instruction carries the target material box identification code of the target material box. When the pipe cleaning apparatus obtains the cleaning instruction, it parses the cleaning instruction and can extract the target material box identification code from the cleaning instruction, thereby determining the material box associated with the target material box identification code as the target material box.

For example, an identification code association table can be configured in the pipe cleaning apparatus. After the pipe cleaning apparatus extracts the target material box identification code from the cleaning instruction, the identification code association table can be called to search the material box corresponding to the target material box identification code in the identification code association table, thereby determining the material box as the target material box, and then determining the target discharge pipe to be cleaned according to the target material box, and then controlling the driving unit corresponding to the target discharge pipe to operate, and discharge the cleaning water in the target material box through the target discharge pipe, thereby cleaning the target discharge pipe.

In some embodiments of the present application, after determining the target material box according to the cleaning instruction, the method may further include:
detecting whether the target seasoning exists in the target material box;
if it is detected that the target seasoning exists in the target material box, issuing a discharge prompt indicating emptying the target seasoning, or controlling the target material box to discharge the target seasoning.

In the embodiment of the present application, it is also possible to determine whether there is still target seasoning in the target material box according to the liquid level detection signal of the target seasoning liquid level in the target material box detected by the liquid level detection unit. If there is still target seasoning in the target material box, the pipe cleaning apparatus can control the driving unit to operate so as to discharge the target seasoning in the target material box through the discharge pipe through the driving unit.

Alternatively, the pipe cleaning apparatus may also issue a discharge prompt for indicating emptying the target seasoning, so as to prompt the user to empty the target seasoning in the target material box, thereby avoiding waste of the original seasoning in the target material box.

It can be understood that the discharge prompt can be displayed through the interactive interface or speaker, indicator light of the cooking device, and can also be displayed on a terminal device that is communicatively connected to the pipe cleaning apparatus. In some embodiments of the present application, each material box can be connected to a liquid storage container for storing cleaning liquid, and the cleaning liquid in the target material box corresponding to the target discharge pipe is controlled to be discharged through the target discharge pipe. Before that, the method can further include:
obtaining an initial weight value measured by the weighing component; controlling the cleaning liquid in the liquid storage container to be discharged into a target material box; obtaining a real-time weight value measured by the weighing component in the process of discharge the cleaning liquid into the target material box; if the difference between the real-time weight value and the target weight value is less than a preset error threshold, controlling the cleaning liquid in the liquid storage container to stop discharge into the target material box; the target weight value is the sum of the initial weight value and the preset weight threshold corresponding to the target material box.

In the embodiment of the present application, the circulation of the cleaning liquid can be controlled according to the change in weight, and the initial weight value weighed by the weighing unit can be the total weight of each material box before cleaning.

In order to prevent the cleaning liquid delivered to the target box from exceeding the maximum volume of the target box, the weight of the cleaning liquid used when filling the inner cavity capacity of the target box can be calculated according to the maximum volume of the target box. The weight of the cleaning liquid calculated at this time can be set as a preset weight threshold, that is, under the premise that the target in the target box has been emptied, when the weight of the cleaning liquid flowing into the target box is less than the preset weight threshold, it can be determined that the target box is not full, and the liquid storage container can be controlled to continue to discharge the cleaning liquid into the target box; when the weight of the cleaning liquid flowing into the target box is equal to or greater than the preset weight threshold, it can be determined that the target box is full, and the discharge of cleaning liquid into the target box is stopped.

Since the initial weight value measured by the weighing unit is the total weight of each material box before the cleaning liquid is discharged into the target material box, in order to clarify the weight change in the process of discharging the cleaning liquid into the target material box, the real-time weight value measured by the weighing unit can be obtained in real time in the process of discharging the cleaning liquid into the target material box. It can be understood that as the cleaning liquid is discharged into the target material box, the weight of the target material box gradually increases, the weight value weighed by the weighing unit gradually increases, and the increased weight is the weight of the cleaning liquid discharged into the target material box.

Therefore, the real-time weight value minus the initial weight value is the weight value of the cleaning liquid discharged into the target material box. When the difference between the real-time weight value and the initial weight value reaches the preset weight threshold, the cleaning liquid in the liquid storage container can be controlled to stop being discharged into the target material box.

However, in this process, after each weighing, the real-time weight value needs to be subtracted from the initial weight value and then compared with the preset weight threshold, which is time-consuming and may affect the weight accuracy of the cleaning liquid discharged into the target material box.

Based on this problem, in this embodiment, when the difference between the real-time weight value and the target weight value is less than a preset error threshold, the cleaning liquid in the liquid storage container can be controlled to stop being discharged into the target material box.

It can be understood that the weight value obtained by adding the initial weight value weighed by the weighing unit to the preset weight threshold is the target weight value that the weighing unit should weigh after the cleaning liquid is discharged. Therefore, in the embodiment of the present application, the real-time weight value obtained each time can be compared with the target weight value. When the real-time weight value is consistent with the target weight value, it can be considered that the cleaning liquid discharged into the target material box just fills the target material box, thereby stopping the further discharge of the cleaning liquid. In this scenario, it is only necessary to add the initial weight value and the preset weight threshold once to obtain the target weight value before starting to discharge the cleaning liquid. In the process of discharging the cleaning liquid, the real-time weight value obtained each time can be directly compared with the target weight value, so as to ensure the weight accuracy of the cleaning liquid discharged into the target material box.

For example, the preset weight threshold for the target seasoning to fill the target material box is 200g, and the initial weight value is 800g. The target weight value when the cleaning liquid is discharged should be 1000g. Therefore, in the process of discharging the cleaning liquid, when the real-time weight value measured by the weighing unit is 1000g, the pipe cleaning apparatus can send a stop signal to the liquid storage container to stop the liquid storage container from discharging the cleaning liquid into the target material box.

In some other application scenarios, in order to avoid weighing interference caused by device delays, a preset error threshold can be set in advance, and the difference between the real-time weight value and the target weight value can be compared with the preset error threshold. When the difference between the real-time weight value and the target weight value is not less than the preset error threshold, it can be considered that the discharged cleaning liquid has not yet filled the target material box, and the liquid storage container can be controlled to continue to transport the cleaning liquid to the target material box. When the difference between the real-time weight value and the target weight value is less than the preset error threshold, it can be considered that the cleaning liquid has filled the target material box, and the liquid storage container can be controlled to stop discharging the cleaning liquid into the target material box.

It can be understood that the preset error threshold can be any value such as 0.01g, 0.1g, 1g, etc., which can be determined according to past experience or multiple experiments. In different application scenarios, the preset error threshold may also be different, which will not be elaborated here.

In some embodiments of the present application, the feeding apparatus may further include a liquid level detection unit corresponding to each material box, each material box is respectively connected to a liquid storage container storing a cleaning liquid, and controls the cleaning liquid in the target material box corresponding to the target discharge pipe to be discharged through the target discharge pipe. Before that, the method may further include:
controlling the cleaning liquid in the liquid storage container to discharge into the target material box; obtaining the target liquid level detection unit corresponding to the target material box to detect the liquid level of the cleaning liquid in the target material box; if the liquid level detection signal indicates that the liquid level of the cleaning liquid is not lower than the preset liquid level upper limit line, controlling the cleaning liquid in the liquid storage container to stop discharging into the target material box.

Since the volume of the target material box is limited, in the process of discharging the cleaning liquid into the target material box, in order to prevent the cleaning liquid discharged into the target material box from overflowing from the target material box, in an embodiment of the present application, a liquid level detection unit can be configured for each material box, and the liquid level height in the target material box in the process of discharging the cleaning liquid is detected by the liquid level detection unit.

In the embodiment of the present application, the liquid level detection unit can be any existing liquid level meter, liquid level detector, liquid level detection sensor or other device or structure that can be used to detect the liquid level, and is not specifically limited here.

For each material box, a liquid level upper limit line can be pre-configured, and the liquid level upper limit line can be used to indicate whether the liquid level in the material box has reached the highest liquid level that the material box can withstand. For example, the liquid level upper limit line can be located near the top of the material box. If the liquid level is lower than the liquid level upper limit line, it can be determined that the liquid level in the material box is low and the cleaning liquid can continue to be accommodated; if the liquid level is not lower than the liquid level upper limit line, it can be determined that the liquid level in the material box is high, and the stored cleaning liquid will almost fill the volume of the material box. If the cleaning liquid continues to be discharged into it, it may cause liquid overflow.

It can be understood that the purpose of setting the upper limit of the liquid level is to prevent the cleaning liquid in the target material box from overflowing. Therefore, in some application scenarios, the upper limit of the liquid level can also be level with the top of the inner cavity of the target material box. In this scenario, the liquid level detection signal output by the liquid level detection unit can determine whether the inner cavity of the target material box is full. When the target material box is not full, the cleaning liquid can continue to be discharged into the target material box. When the target material box is full, the discharge of the cleaning liquid needs to be stopped.

In the embodiment of the present application, the liquid level upper limit lines corresponding to each material box may be the same or different, and the specific height or position of each liquid level upper limit line may be determined according to the actual application scenario, which will not be elaborated here.

In a specific implementation, when the cleaning liquid level in the target material box is lower than the liquid level upper limit line, the liquid level detection unit outputs a high-level liquid level detection signal, and when the cleaning liquid level in the target material box is not lower than the liquid level upper limit line, the liquid level detection unit outputs a low-level liquid level detection signal. Therefore, if the liquid level detection signal obtained by the pipe cleaning apparatus is a high-level signal, it can be confirmed that the cleaning liquid level in the target material box is lower than the liquid level upper limit line, and the liquid storage container can be controlled to continue to discharge the cleaning liquid into the target material box; if the liquid level detection signal obtained by the pipe cleaning apparatus is a low-level signal, it can be confirmed that the cleaning liquid level in the target material box is not lower than the liquid level upper limit line. At this time, it can be considered that the target material box has been filled, so that the liquid storage container can be controlled to stop discharging the cleaning liquid into the target material box.

In other application scenarios, a low-level liquid level detection signal can also be used to indicate that the cleaning liquid level in the target material box is lower than the upper limit of the liquid level. At this time, a high-level liquid level detection signal is used to indicate that the cleaning liquid level in the target material box is not lower than the upper limit of the liquid level. No further details will be given here.

**In** order to better implement the pipe cleaning method of the present application, the present application also provides a pipe cleaning apparatus, which can be used to clean the discharge pipe of the feeding apparatus, the feeding apparatus includes a weighing component and at least one material box, each material box is equipped with a corresponding discharge pipe, and the weighing component is used to weigh the total weight of each material box, as shown in FIG. 22, FIG. 22 is a functional module schematic diagram of the pipe cleaning apparatus provided in an embodiment of the present application, and the pipe cleaning apparatus 4300 may include:
a determining unit 4301, used to determine a target discharge pipe to be cleaned;
a controlling unit 4302, used to control the cleaning liquid in the target material box corresponding to the target discharge pipe to be discharged through the target discharge pipe;
an obtaining unit 4303, used to obtain a current weight value measured by the weighing component in the process of the target discharge pipe discharging the cleaning liquid in the target material box; and
a judging unit 4304, used to determine that the cleaning of the target discharge pipe is completed if the weight change between the current weight value and the weight value at the previous moment is less than a preset change threshold.

**In** the embodiment of the present application, the controlling unit 4302 controls the cleaning liquid in the target material box corresponding to the target discharge pipe to be discharged through the target discharge pipe. In the process of conveying the cleaning liquid in the target discharge pipe, the cleaning liquid can be flushed to the inner wall of the target discharge pipe, thereby cleaning the target discharge pipe, avoiding contamination of the target discharge pipe by residual seasoning on the inner wall of the target discharge pipe, ensuring the cleanliness and hygiene of the target discharge pipe, and improving the safety and reliability of the feeding apparatus.

In some embodiments of the present application, each discharge pipe is respectively connected to a driving unit, and each driving unit is used to discharge the liquid in the corresponding material box through the corresponding discharge pipe. The judging unit 4304 can be specifically used to:
if the weight change between the current weight value and the weight value at the previous moment is less than the change threshold, the target driving unit corresponding to the target discharge pipe is maintained in operation;
when the time for maintaining the operation of the target driving unit reaches a preset time limit, the target driving unit is turned off to determine that the cleaning of the target discharge pipe is completed.

In some embodiments of the present application, the determining unit 4301 may be specifically used to:
obtain a cleaning instruction and determine the target material box according to the cleaning instruction; and
determine the discharge pipe connected with the target material box as the target discharge pipe to be cleaned according to the target material box.

In some embodiments of the present application, the feeding apparatus further includes a liquid level detection unit corresponding to each material box, and the determining unit 4301 can also be specifically used to:
in response to the cleaning instruction, obtain a liquid level detection signal of each liquid level detection unit detecting a corresponding seasoning liquid level in the material box;
for each liquid level detection unit, if the liquid level detection signal of the liquid level detection unit indicates that the seasoning liquid level in the corresponding material box is lower than a preset material shortage warning line, the material box corresponding to the liquid level detection unit is determined as the target material box.

In some embodiments of the present application, the determining unit 4301 may also be specifically used to:
parse the cleaning instruction and extract the target material box identification code carried in the cleaning instruction; each material box is associated with a unique material box identification code;
according to the target material box identification code, a material box associated with the target material box identification code is determined as the target material box.

In some embodiments of the present application, the determining unit 4301 determines the target material box according to the cleaning instruction, and then the controlling unit 4302 can be specifically used to:
detect whether a target seasoning exists in a target material box;
if it is detected that the target seasoning exists in the target material box, a discharge prompt indicating emptying the target seasoning is issued, or the target material box is controlled to discharge the target seasoning.

In some embodiments of the present application, each material box is respectively connected to a liquid storage container for storing a cleaning liquid, and the controlling unit 4302 controls the cleaning liquid in the target material box corresponding to the target discharge pipe to be discharged through the target discharge pipe. Before, it can also be used to:
obtain the initial weight value of the weighing component;
control the cleaning liquid in the liquid storage container to be discharged into the target material box;
obtain the real-time weight value weighed by the weighing component in the process of discharging the cleaning liquid in the target material box;
if the difference between the real-time weight value and the target weight value is less than the preset error threshold, the cleaning liquid in the liquid storage container is controlled to stop being discharged into the target material box; the target weight value is the sum of the initial weight value and the preset weight threshold corresponding to the target material box.

In some embodiments of the present application, the feeding apparatus further includes a liquid level detection unit corresponding to each material box, each material box is respectively connected to a liquid storage container for storing a cleaning liquid, and the controlling unit 4302 controls the cleaning liquid in the target material box corresponding to the target discharge pipe to be discharged through the target discharge pipe. Before, it can also be used to:
control the cleaning liquid in the liquid storage container to be discharged into the target material box;
obtain a liquid level detection signal of a target liquid level detection unit corresponding to a target material box to detect a liquid level of a cleaning liquid in the target material box;
if the liquid level detection signal indicates that the cleaning liquid level is not lower than the preset liquid level upper limit, the cleaning liquid in the liquid storage container is controlled to stop being discharged into the target material box.

It should be noted that in the present application, the relevant contents of the determining unit 4301, the controlling unit 4302, the obtaining unit 4303 and the judging unit 4304 correspond one to one with the above, and technical personnel in the relevant field can clearly understand that, for the convenience and conciseness of description, the specific working process of the pipe cleaning apparatus described above and its corresponding unit modules can refer to the description of the pipe cleaning method in any embodiment corresponding to FIG. 21, and the details will not be repeated here.

Based on the pipe cleaning method in the above embodiment, the present application further provides a feeding apparatus, which includes a weighing component and at least one material box, each material box is equipped with a corresponding discharge pipe, and the weighing component is used to weigh the total weight of each material box;
The feeding apparatus may further include a processor 4401 and a memory 4402. The memory 4402 may be used to store a computer program. When the computer program is executed by the processor 4401, it may be used to implement the following functions: determining the target discharge pipe to be cleaned;
controlling the cleaning liquid in the target material box corresponding to the target discharge pipe to be discharged through the target discharge pipe;
obtaining the current weight value weighed by the weighing component in the process of the target discharge pipe discharging the cleaning liquid in the target material box;
if the weight change between the current weight value and the weight value at the previous moment is less than a preset change threshold, determining that the cleaning of the target discharge pipe is completed.

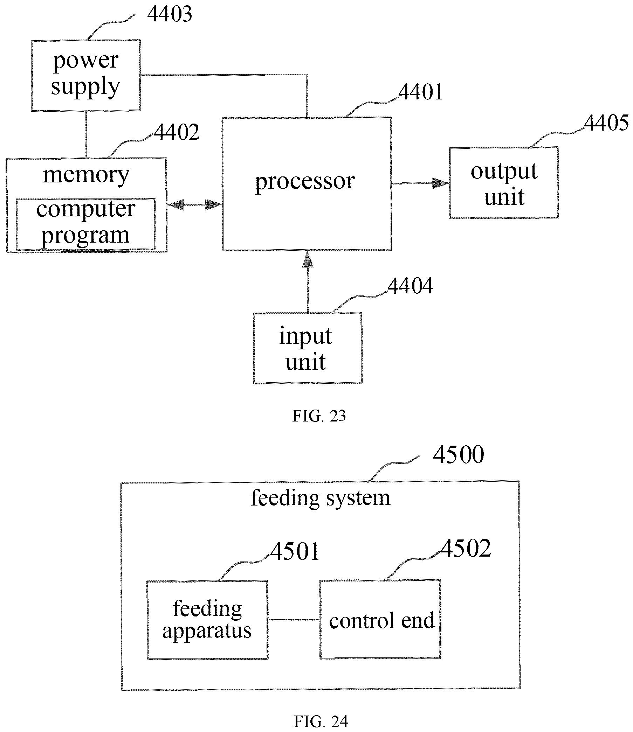

As shown in FIG. 23, another structural schematic diagram of the feeding apparatus involved in the present application is shown. Specifically:
the feeding apparatus may include components such as a processor 4401 of one or more processing cores, a memory 4402 of one or more computer-readable storage media, a power supply 4403 and an input unit 4404. Those skilled in the art will appreciate that the structure shown in FIG. 23 does not constitute a limitation on the feeding apparatus, and the feeding apparatus may also include more or fewer components than shown in the drawings, or a combination of certain components, or a different arrangement of components. Where,
the processor 4401 is the control center of the feeding apparatus, which uses various interfaces and lines to connect the various parts of the entire feeding apparatus, and performs various functions of the feeding apparatus and processes data by running or executing software programs and/or unit modules stored in memory 4402, and calling data stored in memory 4402, thereby monitoring the feeding apparatus as a whole. Optionally, processor 4401 may include one or more processing cores; processor 4401 may be a central processing unit (CPU), or other general-purpose processors, digital signal processors (DSP), application-specific integrated circuits (ASIC), field-programmable gate arrays (FPGA) or other programmable logic devices, discrete gate or transistor logic devices, discrete hardware components, etc. The general-purpose processor can be a microprocessor or any conventional processor, etc. Preferably, the processor 4401 can integrate an application processor and a modem processor, wherein the application processor mainly processes the operating system, user interface, and application programs, etc., and the modem processor mainly processes wireless communications. It is understandable that the above-mentioned modem processor may not be integrated into the processor 4401.

The memory 4402 may be used to store software programs and modules. The processor 4401 executes various functional applications and data processing by running the software programs and modules stored in the memory 4402. The memory 4402 may mainly include a program storage area and a data storage area, wherein the program storage area may store an operating system, an application required for at least one function, etc.; the data storage area may store data created according to the use of the cooking device, etc. In addition, the memory 4402 may include a high-speed random access memory and may also include a non-volatile memory, such as at least one disk storage device, a flash memory device, or other volatile solid-state storage devices. Accordingly, the memory 4402 may also include a memory controller to provide the processor 4401 with access to the memory 4402.

The feeding apparatus may also include a power supply 4403 for supplying power to each component. Preferably, the power supply 4403 may be logically connected to the processor 4401 through a power management system, thereby implementing functions such as charging, discharging, and power consumption management through the power management system. The power supply 4403 may also include one or more DC or AC power supplies, recharging systems, power failure detection circuits, power converters or inverters, power status indicators, and other components.

The feeding apparatus may further include an input unit 4404 and an output unit 4405. The input unit 4404 may be used to receive input digital or character information and generate keyboard, mouse, joystick, optical or trackball signal input related to user settings and function control.

Although not shown, the feeding apparatus may also include a display unit or the like for displaying relevant information such as cleaning progress to the user, which will not be described in detail here. Specifically in the present application, the processor 4401 in the feeding apparatus will load the executable files corresponding to the processes of one or more applications into the memory 4402 according to the following instructions, and the processor 4401 will run the application stored in the memory 4402 to achieve various functions, as follows:
determining the target discharge pipe to be cleaned;
controlling the cleaning liquid in the target material box corresponding to the target discharge pipe to be discharged through the target discharge pipe;
obtaining the current weight value weighed by the weighing component in the process of the target discharge pipe discharging the cleaning liquid in the target material box;
if the weight change between the current weight value and the weight value at the previous moment is less than a preset change threshold, determining that the cleaning of the target discharge pipe is completed.

A person of ordinary skill in the art will appreciate that all or part of the steps in the various methods described above may be accomplished by instructions, or by controlling related hardware through instructions. The instructions may be stored in a computer-readable storage medium and loaded and executed by processor 4401.

To this end, the present application provides a computer-readable storage medium, which may include: a read-only memory (ROM), a random access memory (RAM), a disk or an optical disk, etc. Computer instructions are stored thereon, and the computer instructions are loaded by the processor 4401 to execute the steps in any one of the pipe cleaning methods provided in the present application. For example, when the computer instructions are executed by the processor 4401, the following functions are implemented:
determining the target discharge pipe to be cleaned;
controlling the cleaning liquid in the target material box corresponding to the target discharge pipe to be discharged through the target discharge pipe;
obtaining the current weight value weighed by the weighing component in the process of the target discharge pipe discharging the cleaning liquid in the target material box;
if the weight change between the current weight value and the weight value at the previous moment is less than a preset change threshold, determining that the cleaning of the target discharge pipe is completed.

The computer instructions stored in the computer-readable storage medium can execute the steps of the pipe cleaning method in any embodiment corresponding to FIG. 21 of the present application. Therefore, the beneficial effects that can be achieved by the pipe cleaning method in any embodiment corresponding to FIG. 21 of the present application can be achieved. Please see the previous description for details, which will not be repeated here.

Please refer to FIG. 24, which is a system structure diagram of a feeding system provided in an embodiment of the present application. The present application also provides a feeding system 4500, which may include a feeding apparatus 4501 and a control end 4502. The feeding apparatus 4501 may include a weighing component and at least one material box, each material box is configured with a corresponding discharge pipe, and the weighing component is used to weigh the total weight of each material box.

The control end 4502 is in communication connection with the feeding apparatus 4501, and is used to control the feeding apparatus 4501 to perform the feeding operation and implement the pipe cleaning method corresponding to any embodiment of FIG. 21.

The control end 4502 can control the feeding apparatus 4501 to implement the pipe cleaning method of any embodiment corresponding to FIG. 21 of the present application. Therefore, the beneficial effects that can be achieved by the pipe cleaning method of any embodiment corresponding to FIG. 21 of the present application can be achieved. Please see the previous description for details and will not be repeated here.

The present application also provides a cooking device, which may include a cooking container, a feeding apparatus and a feeding pipe component; wherein the feeding apparatus includes a weighing component and at least one material box, each material box is equipped with a corresponding discharge pipe, the weighing component is used to weigh the total weight of each material box, and each discharge pipe is respectively connected to the feeding pipe component to add the seasoning required for cooking to the cooking container through the feeding pipe component.

The feeding apparatus may further include a memory and a processor, wherein the memory is used to store a computer program, and when the computer program is executed by the processor, it may be used to implement the following functions: determining the target discharge pipe to be cleaned;
controlling the cleaning liquid in the target material box corresponding to the target discharge pipe to be discharged through the target discharge pipe;
obtaining the current weight value weighed by the weighing component in the process of the target discharge pipe discharging the cleaning liquid in the target material box;
if the weight change between the current weight value and the weight value at the previous moment is less than a preset change threshold, determining that the cleaning of the target discharge pipe is completed.

The feeding apparatus can implement the pipe cleaning method in any embodiment corresponding to FIG. 21 of the present application. Therefore, the beneficial effects that can be achieved by the pipe cleaning method in any embodiment corresponding to FIG. 21 of the present application can be achieved. Please see the previous description for details and will not be repeated here.

The technical solution of the present application is described below in conjunction with specific application scenarios to facilitate understanding.

### Application scenario 3

After the current cooking program of the cooking device is completed, a cleaning instruction is automatically triggered and sent to the feeding apparatus. The feeding apparatus responds to the cleaning instruction, obtains the liquid level detection signal output by the liquid level detection unit corresponding to each material box, and determines the material box whose seasoning liquid level is lower than the material shortage warning line as the target material box according to each liquid level detection signal, and then determines the discharge pipe corresponding to the target material box as the target discharge pipe.

The storage container is controlled to discharge the cleaning liquid into the target material box. When the cleaning liquid level in the target material box reaches the upper limit of the liquid level, the cleaning liquid in the storage container is controlled to stop being discharged into the target material box, and the target driving unit is controlled to drive the cleaning liquid in the target material box to be discharged through the target discharge pipe, and the inner wall of the target discharge pipe is flushed with the cleaning liquid to take away the target seasoning remaining on the inner wall of the target discharge pipe.

The current weight value of the weighing component during the discharge process is obtained, and the timing is started when the current weight value is equal to the weight value at the previous moment. If the current weight value is always equal to the weight value at the previous moment within 45 seconds, the target driving unit is turned off and the cleaning of the target discharge pipe being completed is determine.

### Application scenario 4

After the current cooking program of the cooking device is finished, a prompt is given to the user whether to clean the pipe. If the user chooses to clean the pipe, the discharge pipe corresponding to the target material box selected by the user is determined as the target discharge pipe.

The user is prompted to empty the target seasoning in the target material box, and the user is prompted to pour cleaning liquid into the target material box. After the user clicks the cleaning button, the target driving unit is controlled to drive the cleaning liquid in the target material box to be discharged through the target discharge pipe, and the inner wall of the target discharge pipe is flushed with the cleaning liquid to take away the target seasoning remaining on the inner wall of the target discharge pipe. The current weight value of the weighing component during the discharge process is obtained, and the timing is started when the current weight value is equal to the weight value at the previous moment. If the current weight value is always equal to the weight value at the previous moment within 410s, the target driving unit is turned off to determine that the cleaning of the target discharge pipe is completed.

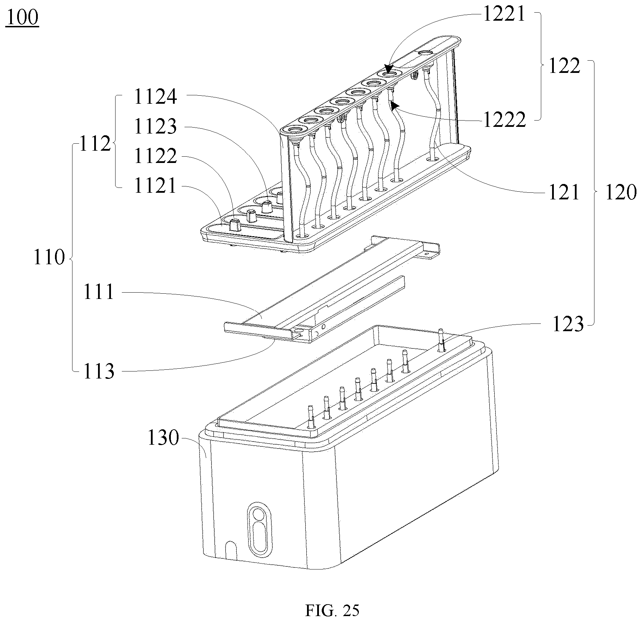

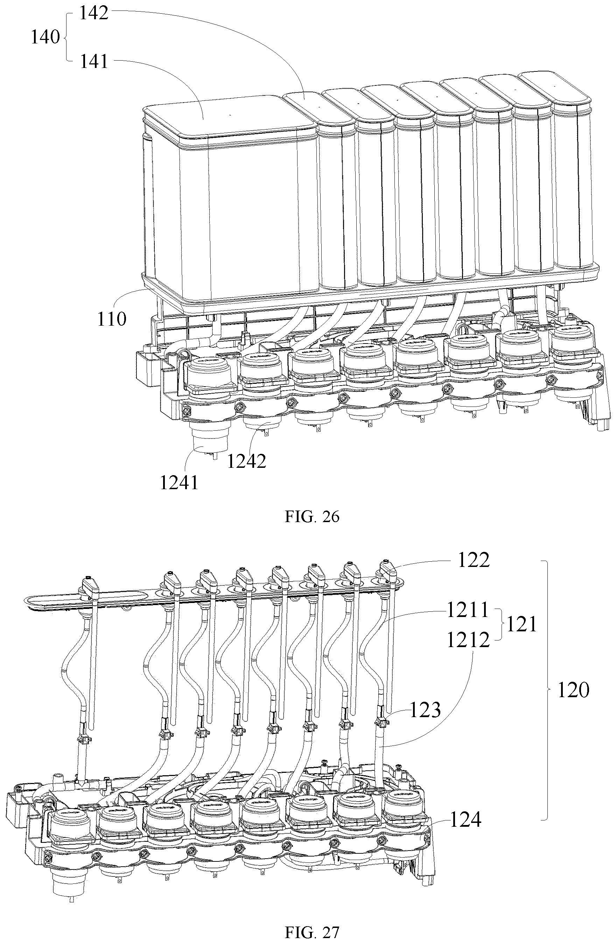

Please refer to FIG. 25, and an embodiment of the present application provides a feeding apparatus 5100 for providing seasoning to a cooking container. The feeding apparatus 5100 includes a material box 5140 (see FIG. 26), a weighing component 5110 and a feeding component 5120.

Please refer to FIG. 26, the material box 5140 is used to store seasonings for cooking, where the seasonings include but are not limited to water, oil, salt or brine, soy sauce, dark soy sauce, light soy sauce, chili oil, vinegar and mixtures thereof. The number of the material boxes 5140 is set to at least two, one of which is used to store oil, and the remaining material boxes 5140 are used to store other seasonings. This is because oil and other seasonings usually need to be put in separately to avoid the problem of liquid splashing that may be caused by adding oil and liquid in other seasonings into the cooking container at the same time. On this basis, the specific number of the material boxes 5140 can be set as needed, for example, set to 2, 3, 5, 8, etc. corresponding to the number of required seasonings, and this embodiment does not limit it. Furthermore, the volume and capacity of each of the material boxes 5140 can be set as needed. For example, there are provided one first material box 5141 and seven second material boxes 5142, where the first material box 5141 is used to store water, and the seven second material boxes 5142 are used to store other seasonings. Since the amount of water used during the cooking process is greater than that of other seasonings, the volume and capacity of the first material box 5141 are greater than the volume and capacity of the second material box 5142 to reduce the number and frequency of water replenishment during the cooking process. Of course, in other embodiments, the volume and capacity of each of the material boxes 5140 may be different from the above examples, and this embodiment does not limit them.

The material box 5140 is provided on the weighing component 5110, and the weighing component 5110 is used to weigh the material box 5140, thereby weighing the seasoning stored in the material box 5140, so as to obtain the usage and/or storage information of the seasoning, thereby facilitating corresponding operations. In one example, the weighing component 5110 weighs the material box 5140 once and performs a peeling process to obtain the weight of the seasoning in the material box 5140. In another example, the weighing component 5110 measures the material box 5140 twice, and the difference between the two measurements is the amount of the seasoning.

In some embodiments, please refer to FIG. 25 again, the weighing component 5110 includes a weighing sensor 5111 and a loading platform 5112. The weighing sensor 5111 may be a weight sensor, the loading platform 5112 is provided on the weighing sensor 5111, and the loading platform 5112 is used to carry the material box 5140 (see FIG. 26). Exemplarily, the feeding apparatus 5100 includes a base 5130, and the weighing component 5110 further includes a connecting bracket 5113. The connecting bracket 5113 is connected to the base 5130, and the weighing sensor 5111 is provided on the connecting bracket 5113, that is, the weighing sensor 5111 is installed on the base 5130 through the connecting bracket 5113. The loading platform 5112 is fixed on the weighing sensor 5111, and the material box 5140 is detachably connected to the loading platform 5112, so that the weight of the seasoning in the material box 5140 can be weighed by the weighing sensor 5111. At the same time, here, the material box 5140 and the loading platform 5112 are connected to each other in a detachable manner, and the user can remove the material box 5140 from the loading platform 5112 for operations such as cleaning and changing seasonings.

As mentioned above, at least two material boxes 5140 are provided on the loading platform 5112. The weighing sensor 5111 may be provided corresponding to the number and position of the material boxes 5140, so as to weigh the weight of each material box 5140. Alternatively, only one weighing sensor 5111 may be provided, and the weighing sensor 5111 is used to weigh the total weight of all the material boxes 5140, and to determine the amount of seasoning through the change in the total weight of all the material boxes 5140. Exemplarily, after taking a certain seasoning, the amount of the seasoning is determined according to the reduction in total weight.

Furthermore, in order to facilitate taking out of the seasoning in the material box 5140 during actual use, the material box 5140 storing a specific type of seasoning is usually loaded at a specific position on the loading platform 5112. Exemplarily, a plurality of loading positions is sequentially provided on the loading platform 5112, and the loading positions are used to load the material box 5140. Specifically, please refer to FIG. 25, which shows a first loading position 51121 and a second loading position 51122, where the first loading position 51121 is configured to load a material box 5140 storing soy sauce, and the second loading position 51122 is configured to load a material box 5140 storing vinegar. The user may misplace the material box 5140 during use, for example, loading the material box 5140 storing vinegar onto the first loading position 51121, which may cause errors in taking the seasoning during subsequent use.

Therefore, in the embodiment of the present application, a connecting portion 51123 is provided on each loading position of the loading platform 5112. The connecting portion 51123 is specifically an alignment protrusion and each alignment protrusion has a different shape. Correspondingly, the material box 5140 is provided corresponding to the connecting portion 51123, and each material box 5140 is respectively provided with a matching portion (not shown) for matching with the corresponding connecting portion 51123. The matching portion is a positioning recess. The corresponding connecting portion 51123 and the matching portion can be docked with each other so that the material box 5140 can be detachably assembled on the loading platform 5112, and the non-corresponding connecting portion 51123 and matching portion have different shapes and cannot be docked to form a fool-proof fit, which helps prevent the user from installing the liquid storage container to the wrong position. Of course, it is understandable that in other embodiments, the connecting portion 51123 may be a positioning protrusion, and correspondingly, the matching portion may be a positioning depression, which is not limited in this embodiment.

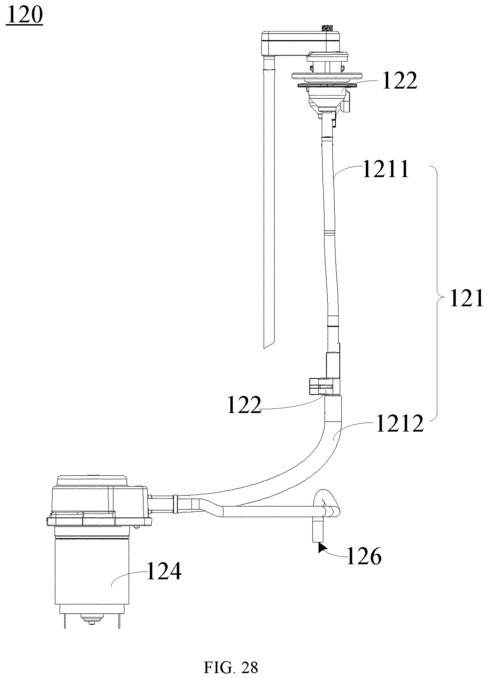

As mentioned above, the number of the material boxes 5140 is set to at least two. The number of the feeding components 5120 is also set to at least two, and the number of the feeding components 5120 is set one by one corresponding to the number of the material boxes 5140, and each of the feeding components 5120 is connected to the correspondingly set material box 5140. Exemplarily, referring to FIG. 26, in this embodiment, the number of the material boxes 5140 is set to 8. Please refer to FIG. 27 at the same time, correspondingly, the number of the feeding components 5120 is also set to 8, and each of the feeding components is connected to the corresponding material box 5140 to output the seasoning in the corresponding material box 5140 to the cooking container. Of course, as mentioned above, the number of the material boxes 5140 can be set to other numbers, and correspondingly the number of the material feeding components can also be set to other numbers, which is not limited in this embodiment. Please refer to FIG. 28, each of the material delivery components 5120 includes a feeding pipe 5121, a first pipe segment connecting piece 5122, a second pipe segment connecting piece 5123 and a driving piece 5124.

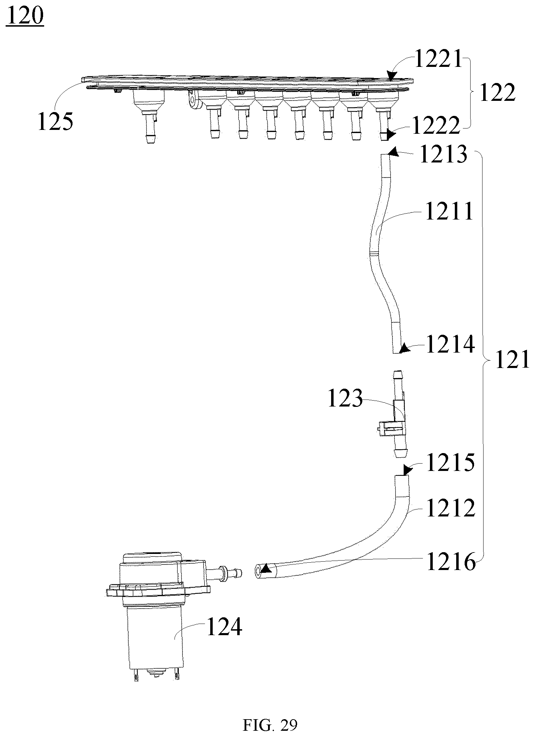

Please refer to FIG. 29, the feeding pipe 5121 includes a first pipe segment 51211 and a second pipe segment 51212. The first pipe segment 51211 has a first end 51213 and a second end 51214, the first end 51213 is connected to the first pipe segment connecting piece 5122, and the second end 51214 is connected to the second pipe segment connecting piece 5123, that is, the first pipe segment 51211 connects the first pipe segment connecting piece 5122 and the second pipe segment connecting piece 5123. The second pipe segment 51212 has a third end 51215 and a fourth end 51216, the third end 51215 is connected to the second pipe segment connecting piece 5123, and the fourth end 51216 is connected to the driving piece 5124, that is, the second pipe segment 51212 connects the second pipe segment connecting piece 5123 and the driving piece 5124, and the first pipe segment 51211 and the second pipe segment 51212 are connected via the second pipe segment connecting piece 5123.

The first pipe segment connecting piece 5122 is used to connect the material box 5140 (see FIG. 26) and the first pipe segment 51211, and to form a passage for supplying seasoning between the material box 5140 and the first pipe segment 51211. Exemplarily, referring to FIG. 25, the loading platform 5112 may include a side extension portion 51124 extending away from the base 5130, and when in use, the side extension portion 51124 is located on one side of the material box 5140 to provide lateral support to the material box 5140. The first pipe segment connecting piece 5122 is provided on the side extension portion 51124 of the loading platform 5112. The first pipe segment connecting piece 5122 is provided on the side extension portion 51124. The feeding component 5120 may include a loading member 5125. The loading member 5125 is roughly plate-shaped and is provided on the top of the side extension portion 51124. Of course, this embodiment does not limit its structure and specific position. The first pipe segment connecting pieces 5122 of at least two of the material conveying components 5120 are both provided on the loading member 5125 and are fixed to the side extension portion 51124 of the loading platform 5112 through the loading member 5125. Of course, in other embodiments, the first pipe segment connecting piece 5122 of each of the feeding components 5120 may also be respectively connected to the loading platform 5112, which is not limited in this embodiment.

Please refer to FIG. 29 again, the first pipe segment connecting piece 5122 has a first interface 51221 and a second interface 51222 that are in communication with each other. The first interface 51221 is used to be detachably connected to the material box 5140 (see FIG. 26), for example, connected to the material box 5140 through a pipe, etc. When the material box 5140 needs to be removed from the loading platform 5112, the connection between the material box 5140 and the first interface 51221 can be released so as to move the material box 5140. The second interface 51222 is used to connect the feeding component 5120. The spacing between the connecting members 5122 and the shape of the connecting members 5122 can be set as needed, for example, according to the size of the corresponding liquid storage container 5140, and this embodiment does not limit it.

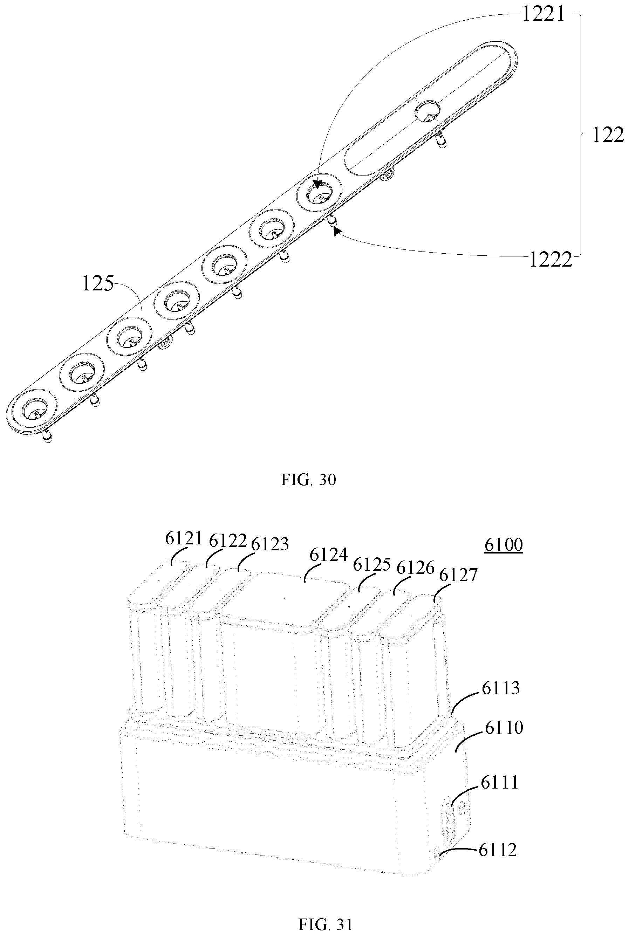

Please refer to FIG. 30, in some embodiments, the first interface 51221 is configured to be in a funnel shape with an inner diameter gradually decreasing in a direction approaching the second interface 51222. Specifically, in the state shown in FIG. 25, the first interface 51221 and the second interface 51222 are provided opposite to each other in the vertical direction, and the first interface 51221 is located at the upper side. After use, some residual seasoning may be located at the first interface 51221. Since the first interface 51221 is in the shape of a funnel with a gradually decreasing inner diameter, the residual seasoning can easily flow to the inside of the first interface 51221, that is, it is not easy for seasoning to remain on the surface of the first interface 51221, and the user is not likely to come into contact with the residual seasoning when disassembling and installing the material box 5140, so as to avoid the user's hands being contaminated by the seasoning.

In addition, in some embodiments, a one-way valve (not shown) may be further provided in the first pipe segment connecting piece 5122, and the seasoning may flow from the first pipe segment connecting piece 5122 in a direction away from the material box 5140 but may not flow in the opposite direction, so as to prevent the seasoning from flowing back into the material box 5140.

The second pipe segment connecting piece 5123 is provided on the base 5130 to be fixed to the driving piece 5124. The driving piece 5124 may be a pump or other structure. Please refer to FIG. 28, the feeding pipe 5121 also has a discharge port 5126 connected to the cooking container, and the discharge port 5126 can be set downstream of the driving piece 5124 or at other positions. The driving piece 5124 is configured in the feeding pipe 5121 to drive the seasoning to move along the feeding pipe 5121 and be supplied to the cooking container. In some preferred embodiments, the driving piece 5124 is specifically a peristaltic pump. The peristaltic pump has the advantage of high precision. The flow rate of the feeding pipe 5121 can be conveniently and accurately adjusted by adjusting the rotation speed of the peristaltic pump.

The driving piece 5124 will generate vibration when it is in operation. Usually, the vibration will be transmitted from the feeding pipe 5121 to the material box 5140, and then transmitted to the weighing component 5110 through the material box 5140, and affect the weighing of the material box 5140 by the weighing component 5110. As a result, the amount of seasoning used in cooking will deviate and the taste of the food will be affected. Especially when the driving piece 5124 is a peristaltic pump, since the peristaltic pump achieves the pumping out of the seasoning by squeezing the feeding pipe 5121, it is more likely to cause the vibration of the feeding pipe 5121 and affect the accuracy of the seasoning weighing.

To this end, in an embodiment of the present application, the feeding pipe 5121 is configured as two parts, namely a first pipe segment 51211 and a second pipe segment 51212. The first pipe segment 51211 and the second pipe segment 51212 are not directly connected but are connected via a fixedly provided second pipe segment connecting piece 5123. Compared with the solution of configuring the first pipe segment 51211 and the second pipe segment 51212 as one pipe, the vibration of the first pipe segment 51211 needs to be transmitted to the second pipe segment connecting piece 5123 provided between the first pipe segment 51211 and the second pipe segment 51212 before it can be transmitted to the second pipe segment 51212. The fixedly provided second pipe segment connecting piece 5123 helps to increase the attenuation of the vibration in the process of being transmitted to the second pipe segment 51212, thereby reducing the transmission of the vibration to the second pipe segment 51212. Thus, the vibration of the driving piece 5124 is mainly transmitted to the second pipe segment 51212, and the vibration transmitted to the first pipe segment 51211 connected to the material box 5140 is relatively small, which helps to reduce the weighing error caused by vibration.

Furthermore, in some embodiments, the first pipe segment 51211 is configured as a hose, and the two ends of the first pipe segment 51211 are respectively fixed by a first pipe segment connecting piece 5122 and a second pipe segment connecting piece 5123. When the vibration generated by the operation of the driving piece 5124 is transmitted to the first pipe segment 51211, since the first pipe segment 51211 is a flexible structure, the first pipe segment 51211 will swing and absorb the vibration, which helps to further reduce the impact of the vibration on the symmetry. It can be understood that the length of the first pipe segment 51211 is longer than the distance between the second pipe segment connecting piece 5123 and the first pipe segment connecting piece 5122. When the first pipe segment 51211 is not subjected to external force, the first pipe segment 51211 is in a relaxed state, that is, the first pipe segment 51211 is not in a taut state, otherwise the first pipe segment 51211 will not be able to swing and effectively absorb vibration. Of course, in other embodiments, the first pipe segment 51211 may also be only partially configured as a hose to form a flexible structure and achieve vibration absorption. Alternatively, the first pipe segment 51211 may also be provided with other flexible structures. For example, the surface of the first pipe segment 51211 may be provided with a spiral corrugated structure to form a bellows shape, and then when subjected to vibration, the corrugated structure may expand or contract to absorb the vibration. That is, at least a portion of the first pipe segment 51211 is configured to be flexible, and the flexible portion can absorb vibrations through displacement or deformation to reduce the vibrations transmitted to the material box 5140 and thereby improve the accuracy of weighing.

In a further embodiment, at least a portion of the second pipe segment 51212 may also be configured to be flexible to reduce the transmission of vibration. Exemplarily, the second pipe segment 51212 is also configured as a hose, and thus, the second pipe segment 51212 can generate displacement to absorb the vibration caused by the operation of the driving piece 5124, and the vibration transmitted to the first pipe segment 51211 will be reduced, and then the vibration transmitted to the weighing component will also be reduced. The setting using the hose is more convenient and has a lower cost. The hose is easy to bend, which helps to adapt to different environmental spaces and realize the connection of various component brackets. Of course, in other embodiments, the second pipe segment 51212 may also be configured as a hard pipe, etc., which is not limited in this embodiment.

In some embodiments, the base 5130 has an accommodating chamber (not shown), and the driving piece 5124 is provided in the accommodating chamber, which helps to protect the driving piece 5124 and also makes rational use of the space in the base 5130.

Please refer to FIG. 25 again, the weighing component 5110 and the second pipe segment connecting piece 5123 are provided on one side of the base 5130. The plane where the outer wall of one side of the base 5130 is located is the first plane. At least part of the projections of the weighing component 5110, the material box 5140 and the feeding component 5120 on the first plane are all located within the projection of the base 5130 on the first plane. Generally, one side of the base 5130 refers to the upper side of the base 5130 along the vertical direction, and the first plane is a horizontal plane. When configured in this way, the weighing component 5110, the material box 5140 and the feeding component 5120 occupy less space on the horizontal plane, which helps to be used in an environment with smaller countertop space.

**In** some embodiments, along the vertical direction, the driving piece 5124 is provided on the lower side of the material box 5140.The driving piece 5124 with a relatively large weight is provided on the lower side to achieve a counterweight effect. This arrangement helps to improve the overall structural stability of the feeding apparatus 5100 and reduce the risk of tipping over due to excessive weight on the upper side.

**In** some embodiments, the feeding apparatus 5100 further includes a collecting piece (not shown), and the discharge ports 5126 of several feeding components 5120 provided corresponding to the material box 5140 are all connected to the collecting piece, and the collecting piece is used to be connected to a cooking container. The feeding apparatus 5100 may further include an emptying component (not shown), which may be an air pump, etc., which is connected to the collecting piece for pressurizing the collecting piece to empty the seasoning in the collecting piece into the cooking container, thereby avoiding the seasoning from remaining in the collecting piece and affecting the actual amount of seasoning fed, and reducing the risk of the seasoning remaining in the collecting piece for a long time.

**In** some embodiments, the weighing component 5110 overlaps with at least a part of the projection of the second pipe segment 51212 on the base 5130. This arrangement helps to shorten the second pipe segment 51212 as much as possible, making it easier to pump out the seasoning, and also helps to reduce the volume of the base 5130. Exemplarily, the base 5130 is placed on a roughly horizontal plane, and the projections of the weighing sensor 5111 and the second pipe segment 51212 of the weighing component 5110 on the base 5130 are the projections of the two on the horizontal plane. The weighing sensor 5111 and the second pipe segment 51212 occupy less space on the horizontal plane, and thus, the base 5130 also occupies less space on the horizontal plane, which helps make the feeding apparatus 5100 more suitable for environments with smaller countertop space.

In some embodiments, the amount of different seasonings used during the cooking process varies greatly, but it is difficult to achieve a balance between the feeding accuracy and the feeding time using a drive member 5124 with the same flow rate. The feeding accuracy of the driving element 5124 with a larger flow rate will be difficult to control, but the driving element 5124 with a smaller flow rate will increase the feeding time and may not be able to feed seasoning in time, thereby affecting the quality of the dish. Therefore, in the embodiment of the present application, as mentioned above, the material box 5140 with different volumes and capacities can be provided. For example, please refer to FIG. 26, a first material box 5141 with a larger capacity and a second material box 5142 with a smaller capacity are provided. The first material box 5141 with a larger capacity is used to store a larger amount of seasoning. Correspondingly, the present embodiment further provides a first driving piece 51241 and a second driving piece 51242 with different flow rates, the flow rate of the first driving piece 51241 is greater than the flow rate of the second driving piece 51242. The first driving piece 51241 is correspondingly connected to the first material box 5141, and the second driving piece 51242 is correspondingly connected to the second material box 5142. Furthermore, for the first material box 5141 storing a large amount of seasoning, a first driving piece 51241 with a large flow rate is used, and for the second material box 5142 storing a small amount of seasoning, a second driving piece 51242 with a small flow rate is used, so as to achieve a balance between the feeding accuracy and the feeding time through the different flow rates of the driving piece 5120.

In the above embodiments, the description is mainly according to the embodiments in which the feeding component 5120 is provided corresponding to the material box 5140. Of course, it can be understood that in other embodiments, only one feeding component 5120 may be provided, and the first pipe segment connecting piece 5122 of the feeding component 5120 can be selectively connected to each of the material boxes 5140 through a valve group or the like to realize the supply of seasoning.

Moreover, in other embodiments, the first pipe segment connecting piece 5122 may not be provided, and the first pipe segment 51211 of the feeding pipe 5121 may be directly connected to the material box 5140.

Usually, the feeding apparatus 5100 is a component of a cooking device such as a cooking machine. Therefore, accordingly, an embodiment of the present application further provides a cooking device, which includes a feeding apparatus 5100 and a cooking container (not shown).

The feeding apparatus 5100 includes a weighing component 5110, a material box 5140 and a feeding component 5120. The material box 5140 is provided on the weighing component 5110, and the material delivery component 5120 includes a feeding pipe 5121, a first pipe segment connecting piece 5122, a second pipe segment connecting piece 5123 and a driving piece 5124. The feeding pipe 5121 includes a first pipe segment 51211 and a second pipe segment 51212. The first pipe segment 51211 connects the first pipe segment connecting piece 5122 and the second pipe segment connecting piece 5123, the first pipe segment connecting piece 5122 is fixed to the weighing component 5110, the second pipe segment 51212 connects the second pipe segment connecting piece 5123 and the driving piece 5124, and the second pipe segment connecting piece 5123 is fixed to the driving piece 5124.

The feeding apparatus 5100 is used to provide seasoning to the cooking container. Exemplarily, the cooking container includes a pot, a heating apparatus, a stir-frying device, and the like. When in use, the feeding apparatus 5100 can be provided on one side of the cookware and connected to the cookware through the feeding component 5120 to supply seasoning to the cookware. The heating apparatus can heat the food materials put into the pot, and the stir-frying device can stir-fry the food materials in the pot.

**In** some embodiments, at least a portion of the first pipe segment 51211 is flexible to absorb vibrations generated when the driving piece 5124 is in operation.

**In** some embodiments, the first pipe segment 51211 is a hose.

**In** some embodiments, the second pipe segment 51212 is a hose.

**In** some embodiments, the weighing component 5110 includes a weighing sensor 5111 and a loading platform 5112. The loading platform 5112 is provided on the weighing sensor 5111, and the first pipe segment connecting piece 5122 is provided on the loading platform 5112.

**In** some embodiments, the projections of the weighing sensor 5111 and the second pipe segment 51212 on the horizontal plane at least partially overlap.

Correspondingly, an embodiment of the present application also provides a feeding structure, including a weighing component 5110 and a feeding component 5120, the feeding component 5120 including a feeding pipe 5121, a first pipe segment connecting piece 5122, a second pipe segment connecting piece 5123 and a driving piece 5124, the feeding pipe 5121 including a first pipe segment 51211 and a second pipe segment 51212, the first pipe segment 51211 is used to receive seasoning and is connected to the second pipe segment connecting piece 5123, the second pipe segment 51212 connects the second pipe segment connecting piece 5123 and the driving piece 5124, and the second pipe segment connecting piece 5123 is fixed to the driving piece 5124.

### Application Scenario 5

**In** application scenario 5, a feeding apparatus 5100 is provided, which includes a base 5130, a feeding pipe 5121, a second pipe segment connecting piece 5123 and a driving piece 5124, the feeding pipe 5121 is divided into a first pipe segment 51211 and a second pipe segment 51212, the second pipe segment connecting piece 5123 is connected between the first pipe segment 51211 and the second pipe segment 51212, the driving piece 5124 is connected to the second pipe segment 51212, and the second pipe segment connecting piece 5123 and the second pipe segment 51212 are fixed on the base 5130.

### Application Scenario 6

In application scenario 6, a feeding apparatus 5100 is provided, and its structure is substantially the same as that in application example one. The difference is that the first pipe segment 51211 is configured as a hose, and the driving piece 5124 is configured as a peristaltic pump. The peristaltic pump will generate vibration when it is in operation. When the vibration is transmitted to the first pipe segment 51211, the first pipe segment 51211 swings to absorb the vibration.

### Application Scenario 7

In application scenario 7, a feeding apparatus 5100 is provided, and its structure is substantially the same as that in application example two. The difference is that it also includes a first pipe segment connecting piece 5122. The first pipe segment connecting piece 5122 is fixed to the weighing component 5110. The first pipe segment connecting piece 5122 is used to connect between the material box 5140 and the first pipe segment 51211. Here, since the first pipe segment connecting piece 5122 is fixedly provided, it fixes the end of the first pipe segment 51211 connected to it, thereby reducing the transmission of vibration to the material box 5140 and the weighing component 5110 in contact with the material box 5140.

### Application Scenario 8

In application scenario 8, a feeding apparatus 5100 is provided, and its structure is substantially the same as that in application example three. The difference is that the second pipe segment 51212 is also configured as a hose.

### Application Scenario 9

In application scenario 9, a cooking device is provided, which includes a cooking container and a feeding apparatus 5100 shown in any of the aforementioned application examples.

### Application Scenario 10

In application scenario 10, a method for using a cooking device is provided. During cooking, a controller controls the peristaltic pump corresponding to the material box 5140 to operate, so as to drive the seasoning in the corresponding material box 5140 to be input into the cooking container through the material feeding component 5120. The weighing component 5110 determines the amount by the weight change of the material box 5140. When the preset amount is reached, the controller controls the peristaltic pump to stop working. At this point, a preset amount of seasoning has been fed to the material box 5140.

In this process, since both ends of the first pipe segment 51211 are fixed and the first pipe segment 51211 is a hose, the first pipe segment 51211 absorbs the vibration of the peristaltic pump by swinging, reduces the transmission of vibration to the material box 5140 and the weighing component 5110, and improves the accuracy of weighing. Due to diners' sensitivity to taste, slight changes in seasonings can have a significant impact on the cooking effect. Therefore, the amount of seasoning fed to each material box in the feeding apparatus can be accurately measured, which has a significant impact on the final cooking effect. However, in the process of measuring the seasoning addition, various occasional environmental factors will affect the measurement accuracy. For this reason, the embodiment of the present application provides a technical solution that can isolate the environmental factors for precise measurement of seasoning addition in the feeding apparatus.

FIG. 31 is a schematic structural diagram of a feeding apparatus. The feeding apparatus 6100 can be used in a cooking device.

The feeding apparatus 6100 includes a base 6110, a loading platform 6113, and a plurality of material boxes 6121 to 6127. The upper surface of the loading platform is exposed above the base 6110. A plurality of material boxes 6121 to 6127 are placed on the loading platform 6113.

The user puts a variety of seasonings into each material box 6121 to 6127 respectively; in the specific scenario of this embodiment, each of the above-mentioned material boxes stores seasonings, and is stored in liquid form; the specific seasonings stored in each material box can be stored according to pre-set storage requirements, or can be selected by the user and marked through the operation interface of the cooking device. In order to feed the seasoning in the material box into the cooking container of the cooking device, a corresponding pump is provided in the base 6110 corresponding to each material box. Each pump is used to extract the seasoning from its corresponding material box.

The base 6110 is provided with a material output interface 6111 and an electrical interface 6112. The seasoning extracted from the material box can be transported to the cooking container of the cooking device through the material output interface 6111 via the feeding pipe; the motor port 6112 is connected to the relevant power line.

The cooking container may be located in the main machine of the cooking device; the main machine may supply power to the feeding apparatus 6100 and perform signal communication via the electrical interface 6112.

Information can be exchanged between the main machine of the cooking device and the feeding apparatus 6100 of the cooking device; the main machine and the feeding apparatus 6100 can communicate in a wired or wireless manner. The wireless communication method may be, but is not limited to, Bluetooth, ZigBee, wireless-fidelity (Wi-Fi), etc.

Various corresponding functions can be realized through information interaction between the main machine and the feeding apparatus 6100. For example, the processor installed on the main machine can control the feeding apparatus 6100 to automatically add seasoning to the cooking container 621 located in the main machine, and receive the detection results of the feeding apparatus 6100 on whether there is no material in the material box according to the information interaction between the main machine and the feeding apparatus.

The feeding apparatus may be provided with a weighing sensor to detect the discharge amount of each material box. Exemplarily, a weighing sensor may be provided under each of the material boxes 6121 to 6127. In the discharging process of a material box, the discharge amount of the material box can be determined according to the detection result of the weighing sensor. According to the discharge amount, it can also be determined whether the material box is in a material shortage, and if so, the user can be reminded to feed material. For example, the user can be reminded to feed seasoning by flashing an abnormal indicator light, beeping a buzzer, or making a voice announcement through a speaker.

Alternatively, a weighing sensor in the feeding apparatus can be used to detect the total weight of plurality of material boxes 6121 to 6127.

The weighing sensor need to be in a static environment to achieve accurate weight detection. If the user accidentally touches the material box, or if the material box is affected by wind due to air flow, the accuracy of the detection results of the weighing sensor will be affected. As a result, the amount of seasoning fed by the feeding apparatus to the cooking container is inaccurate.

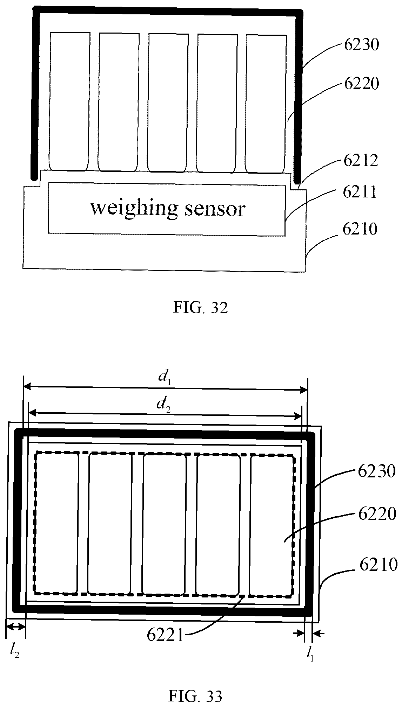

The amount of certain seasonings required in a dish may be very small, and the amount of these seasonings added has a great impact on the taste of the dish. If the amount of seasoning fed by the feeding device to the cooking container is inaccurate, the dishes prepared by the cooking device may have a poor taste and affect the user experience. In order to solve the above problems, an embodiment of the present application provides a feeding apparatus. The feeding apparatus provided in the embodiment of the present application is described below in conjunction with FIGs. 32 to 36.

FIG. 32 is a schematic structural diagram of a base of a feeding apparatus provided in an embodiment of the present application. The base of the feeding apparatus may be located in the feeding apparatus. The feeding apparatus may be a part of a cooking device used to realize automated cooking, and may specifically be a cooking robot.

The base 6210 includes a weighting sensor 6211 and a limiting portion 6212.

The base 6210 can be used to place the material box 6220.

The material box 6220 can be used to carry seasonings.

A weighing sensor 6211 is provided in the base 6210, and the weighing sensor 6211 is used to detect the weight of the material box 6220.

The number of the material boxes 6220 placed on the base 6210 can be one or more, and the number of the weighing sensors 6211 can also be one or more. Each weighing sensor can be used to detect the weight of one or more material boxes. Exemplarily, the weighing sensor 6211 is used to detect the total weight of the plurality of material boxes 6220.

The base 6210 is used to support the protective cover 6230. The protective cover 6230 covers the material box 6220. The limiting portion 6212 is used to limit the positional relationship between the protective cover 6230 and the base 6210 so that there is a gap between the protective cover 6230 and the covered material box 6220.

By setting a limit portion 6212 on the base 6210, a gap is created between the protective cover 6230 covering the material box 6220 and the material box 6220, so that the protective cover 6230 will not contact the material box 6220, and can prevent the user from accidentally touching the material box 6220, and prevent the external environment from affecting the material box 6220, thereby reducing the influence of external factors on the weighing result of the weighing sensor 6211, and improving the accuracy of the weight detection result of the material box 6220 by the weighing sensor 6211.

A transmission pipe may also be provided in the base 6210. The transmission pipe is used to transmit the material output by the material box 6220.

The transmission pipe can correspond one-to-one to the material box 6220. Each transmission pipe can transmit the material contained in the corresponding material box. Each transmission pipe 6213 may be provided with a power apparatus to provide power for the transmission of materials in the transmission pipe. The power apparatus may be, for example, a peristaltic pump.

The material in the material box 6220 can be discharged from the feeding apparatus through the transmission pipe.

Alternatively, the base 6210 may further include a material collecting apparatus. The material in the material box 6220 can be transmitted to the material collecting apparatus through the transmission pipe, and the material contained in the material collecting apparatus can be discharged from the feeding apparatus through the feeding pipe.

The limiting portion 6212 may be implemented in a variety of ways; generally, the limiting portion 6212 is a structure provided on the side wall or upper surface of the base 6210. Three possible implementations of the limiting portion 6212 are introduced below.

In implementation 1, the limiting portion 6212 may be an annular protrusion provided on the side wall of the base 6210. The upper surface of the annular protrusion can support the side wall of the protective cover 6230. The limiting portion 6212 cooperates with the side wall of the base 6210 to limit the position of the side wall of the protective cover 6230, thereby limiting the positional relationship with the base 6210.

In implementation 2, the limiting portion 6212 may also be a groove provided on the upper surface of the base 6210. The bottom of the groove can support the side wall of the protective cover 6230. That is, if the protective cover 6230 is placed on the base 6210, the bottom of the side wall of the protective cover 6230 may be located in the groove. The side wall of the groove can limit the position of the bottom of the side wall of the protective cover 6230, thereby limiting the positional relationship between the protective cover 6230 and the base 6210.

In implementation 3, the limiting portion 6212 is a sunken annular step surface located on the outer edge of the upper surface of the base 6210. The step surface can support the side wall of the protective cover 6230, that is, the side wall of the protective cover 6230 is supported on the step surface. Thus, the step facade formed by the height difference between the inner edge of the step surface and the upper surface of the base can limit the position of the bottom of the side wall of the protective cover 6230, thereby limiting the positional relationship between the protective cover 6230 and the base 6210. Compared with the annular protrusion method adopted in implementation 1, the limiting portion 6212 is designed as an annular groove or a sunken annular step surface on the upper surface of the base 6210, so that the structure of the base 6210 and the protective cover 6230 is simpler, which can effectively reduce the process complexity of the base 6210 and the protective cover 6230.

Compared with the limiting portion 6212 in implementation 2, namely the annular groove of method 2 and the sunken annular step surface of method 3, setting the limiting portion 6212 as a sunken annular step surface allows the limiting portion 6212 to be cleaned along the outer edge, thereby making the cleaning process of the base 6210 easier.

The above-mentioned groove and the sunken annular step surface can surround outside the area 6221 where the material box 6220 is located. That is, as shown in FIG. 33, the inner edges of the groove and the step surface may surround the outside of the area 6221 where the material box 6220 is located. That is to say, the groove and the step surface surround the material box 6220 and have a first set distance from the area 6221 where the material box 6220 is located, and do not contact the area 6221.

Obviously, the groove (obviously opening upward) and the sunken annular step surface are located on the upper surface of the base 6210. The area 6221 where the material box 6220 is located can be understood as the projection area of the material box 6220 on the upper surface of the base 6210. The inner edges of the groove and the step surface surround the area 6221 where the material box 6220 is located. The protective cover 6230 can adopt a simpler structure to achieve a gap between the protective cover 6230 and the material box 6220, thereby reducing the manufacturing cost of the protective cover 6230.

It should be understood that the side close to the center of the projection area of the material box 6220 on the upper surface of the base 6210 can be understood as the inner side, and the side away from the center of the projection area of the material box 6220 on the upper surface of the base 6210 can be understood as the outer side. Exemplarily, the base 6210 may be configured to be in the shape of a cuboid or a cylinder having a vertical central axis. The side close to the central axis in the vertical direction can be understood as the inner side, and the side far from the central axis can be understood as the outer side.

The side wall of the protective cover 6230 may be inclined inward from bottom to top. Therefore, the manufacturing process of the protective cover is relatively simple and the manufacturing cost is low.

When the side wall of the protective cover 6230 can be tilted inward from bottom to top, in order to avoid contact between the protective cover 6230 and the material box 6220, the position of the groove and the sunken annular step surface can be reasonably set according to the inclination degree of the side wall of the protective cover 6230 to avoid contact between the protective cover 6230 and the material box.

The specific arrangement way is that the inclined distance between the top and bottom ends of the side wall of the protective cover 6230 is smaller than the distance between the inner edge of the step surface or the groove and the area 6221 where the material box 6220 is located. With the above arrangement, the projection of the side wall of the protective cover 6230 on the upper surface of the base 6210 can be prevented from falling into the area 6221 where the material box 6220 is located, so that there is a gap between the protective cover 6230 and the material box 6220, thereby preventing the protective cover 6230 from contacting the material box 6220.

When the limiting portion 6212 is a sunken annular step surface located at the outer edge of the upper surface of the base 6210, the bottom of the side wall of the protective cover 6230 does not exceed the outer edge of the step surface, which can make the overall shape of the feeding apparatus including the base 6210, the material box 6220 and the protective cover 6230 more beautiful, and enable the protective cover 6230 to provide better sealing for the material box 6220 to avoid the wind force generated by the air flow from acting on the material box 6220, thereby improving the accuracy of the detection result of the weighing sensor 6211.

The width of the step surface can be set so that the bottom of the side wall of the protective cover 6230 does not exceed the side wall of the base 6210, that is, the bottom of the side wall of the protective cover 6230 does not exceed the outer edge of the step surface.

Exemplarily, the step surface and the bottom of the side wall of the protective cover 6230 can both be circular rings, and the width of the step surface can be greater than or equal to the sum of the difference between the inner diameter of the bottom of the side wall of the protective cover 6230 minus the inner diameter of the step surface and the difference between the inner and outer radii of the bottom of the side wall of the protective cover 6230.

As shown in FIG. 33, the cross-sections of the step surface and the bottom of the side wall of the protective cover 6230 can also be rectangular. The first direction is a direction perpendicular to one side of the step surface. The width of the one side of the step surface, *l* ₂ , can be greater than or equal to the sum of the difference between the first inner distance *d* ₁ of the annular bottom of the side wall of the protective cover 6230 along the first direction and the second inner distance *d*₂ of the annular step surface along the first direction and the thickness*l*₁ of the rectangular ring at the bottom of the side wall of the protective cover 6230. The thickness of the rectangular ring at the bottom of the side wall of the protective cover 6230 located on each side may be equal.

The difference between the first inner distance *d* ₁ and the second inner distance *d*₂ can be understood as the maximum moving distance of the protective cover 6230 along the first direction. The maximum moving distance along the first direction can also be understood as the maximum movable range along the first direction. The sum of the maximum moving distance and the thickness *l*₁ of the rectangular ring at the bottom of the side wall of the protective cover 6230 can be understood as the maximum distance between the outermost end of the bottom of the side wall of the protective cover 6230 and the inner edge of the step surface along the first direction.

If the width *l* ₂ of the step surface is greater than or equal to the maximum distance between the outermost end of the bottom of the side wall of the protective cover 6230 and the inner edge of the step surface, the bottom of the side wall of the protective cover 6230 will not exceed the side wall of the base 6210.

That is to say, when the width of the step surface along any direction is greater than or equal to the difference between the first inner edge distance of the bottom of the side wall of the protective cover 6230 along any direction minus the second inner edge distance of the step surface along any direction, and the sum of the width of the bottom of the side wall of the protective cover 6230 along any direction, the bottom of the side wall of the protective cover 6230 does not exceed the outer edge of the step surface.

It should be understood that the protective cover 6230 is placed on the step surface so that the first inner edge distance is greater than the second inner edge distance.

The base 6210 may also include a loading platform. The loading platform may be exposed from the upper surface of the base 6210. The loading platform can be used to carry the material box 6220, and the weighing sensor 6211 can be used to detect the weight of the object carried by the loading platform. The protective cover 6230 can cover the loading platform. The limiting portion 6212 allows a gap to exist between the side wall of the protective cover 6230 and the loading platform.

By providing a loading platform, the material box 6220 can be placed on the loading platform, and the weighing sensor 6211 can be used to detect the weight of the material box 6220 carried by the loading platform. The setting of the loading platform makes it easier to detect the total weight of the material box 6220 and can make the placement of the material box 6220 more stable.

The limiting portion 6212 allows a gap to exist between the side wall of the protective cover 6230 and the loading platform, thereby preventing the protective cover 6230 from contacting the loading platform, thereby preventing the protective cover 6230 from affecting the detection result of the weighing sensor 6211. The protective cover 6230 covers the loading platform to prevent the user from accidentally touching the loading platform, thereby reducing the impact of external factors on the weighing result of the weighing sensor 6211 and improving the accuracy of the weight detection result of the material box 6220 by the weighing sensor 6211.

The outer edge of the loading platform surrounds the area where the material box 6220 is located and has a second set distance from the area. Thus, the loading platform can provide more stable support for the material box 6220.

The limiting portion 6212 can be provided on the upper surface of the base 6210 and surround the area outside the loading platform.

The inner edges of the groove and the step surface surround outside the area where the loading platform is located, and the protective cover 6230 can adopt a simpler structure to achieve a gap between the loading platform and reduce the manufacturing cost of the protective cover 6230.

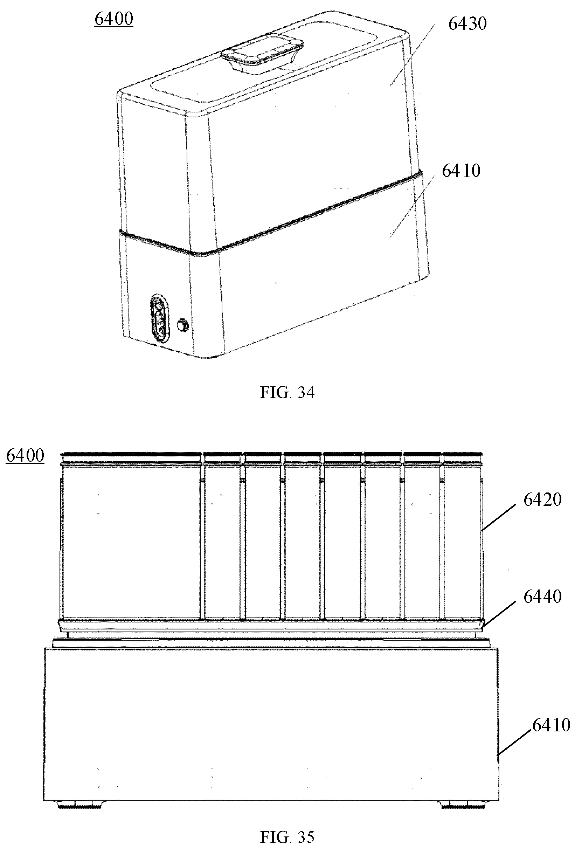

FIG. 34 is a schematic three-dimensional structural diagram of a feeding apparatus provided in an embodiment of the present application.

**In** the feeding apparatus 6400 shown in FIG. 34, the protective cover 6430 may be placed on the base 6410. The outer shell of the protective cover 6430 and the base 6410 can be made of plastic or other materials. The protective cover 6430 may have a planar or grid structure. The surface structure is adopted, that is, the protective cover 6430 has a certain degree of airtightness, which can not only prevent the user from accidentally touching the material box and the loading platform, but also prevent the material box and the loading platform from being affected by wind or other forces. For example, the protective cover 6430 may be made of a transparent plastic material with a planar structure.

FIG. 35 is a schematic diagram of the feeding apparatus shown in FIG. 34 with the protective cover 6430 removed.

After the protective cover 6430 is lifted, as shown in FIG. 35, a plurality of material boxes 6420 can be placed on the base of the feeding apparatus 6400. The plurality of material boxes 6420 may be placed on a loading platform 6440. The loading platform 6440 is exposed on the upper surface of the base 6410.

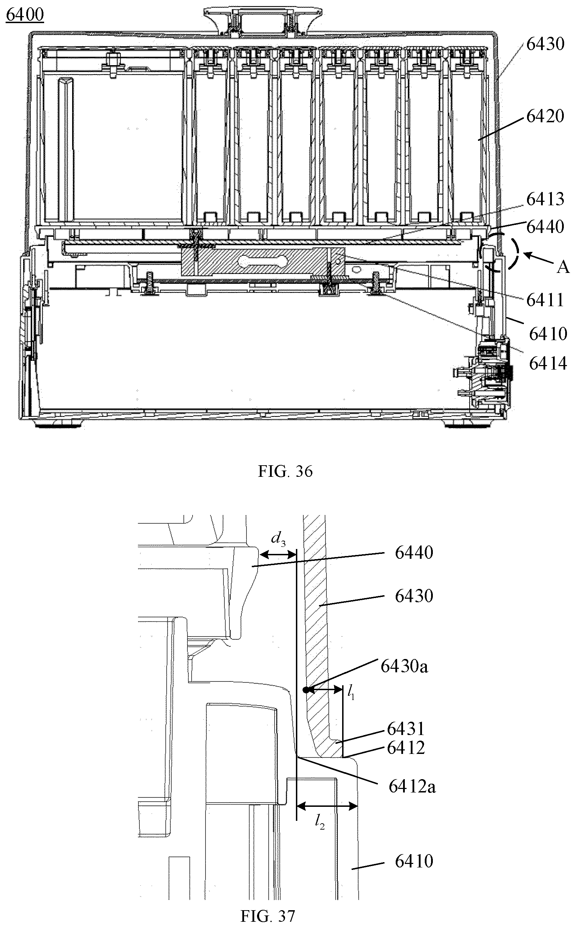

FIG. 36 is a schematic cross-sectional view of the feeding apparatus shown in FIG. 34. An upper fixing frame 6413 and a lower fixing frame 6414 are provided in the base 6410, and the lower fixing frame 6414 can be fixed in the base 6410. A weighing sensor 6411 is also provided in the base 6410 and is located between the upper fixing frame 6413 and the lower fixing frame 6414. The loading platform 6440 can be fixed on the upper fixing frame 6413.

That is to say, the loading platform 6440 and the upper fixing frame 6413 can be assembled integrally, and the lower fixing frame 6414 and the base 6410 can be assembled integrally.

The weighing sensor 6411 can be used to detect the weight of the object carried on the loading platform 6440. A plurality of material boxes 6420 are placed on the loading platform 6440, that is, the weighing sensor 6411 can be used to measure the total weight of the plurality of material boxes 6420.

When the protective cover 6430 is placed above the base 6410, the protective cover 6430 covers the loading platform 6440 and the plurality of material boxes 6420. By making reasonable structural arrangements for the protective cover 6430 and the base 6410, there are gaps between the protective cover 6430 and the loading platform 6440, and between the protective cover 6430 and the plurality of material boxes 6420, so that the protective cover 6430 will not touch the loading platform 6440 and the plurality of material boxes 6420. Thus, the loading platform 6440 and the plurality of material boxes 6420 are in a relatively static environment, and the detection of the total weight of the plurality of material boxes 6420 by the weighing sensor 6411 will not be affected by external interference, thereby improving the precision and accuracy of the weighing results.

A transmission pipe (not shown) may also be provided in the base 6410. The transmission pipe is used to transmit materials output from a plurality of material boxes 6420. The materials contained in the plurality of material boxes 6420 can be discharged from the feeding apparatus through the transmission pipe.

FIG. 37 is an enlarged view of area A in the feeding apparatus shown in FIG. 36.

The outer edge of the upper surface of the base 6410 is provided with a sunken annular step surface 6412. The step surface 6412 supports the side wall of the protective cover 6430.

The step surface 6412 is used to limit the relative position of the protective cover 6430 and the base, and the step surface 6412 is relatively simple to clean, which reduces the time and cost required for the user to clean the feeding apparatus 6400.

There is a height difference between the step surface 6412 and the upper surface of the base 6110. The inner edge of the step surface 6412 may be connected to the upper surface of the base 6110 via a connecting surface in a planar shape or a curved shape. Exemplarily, the connection surface may be inclined inward from bottom to top.

The inner edge 6412a of the step surface 6412 surrounds the outside of the area where the loading platform 6440 is located. The outer edge of the loading platform 6440 surrounds the outside of the area where the plurality of material boxes 6420 are located. There may be a set distance between the outer edge of the loading platform 6440 and the area where the plurality of material boxes 6420 are located. The loading platform 6440 can provide stable support for plurality of material boxes 6420.

Therefore, the bottom of the side wall of the protective cover 6430 does not need to extend to below the loading platform 6440 and the plurality of material boxes 6420, and can have a simpler structure with lower manufacturing costs.

The side wall of the protective cover 6430 may be provided in a vertical direction or a nearly vertical direction. In order to reduce the process cost, the side wall of the protective cover 6430 may be inclined inward from bottom to top.

In order to prevent the protective cover 6430 from contacting the plurality of material boxes 6420 or the loading platform 6440, the side wall of the protective cover 6430 may be located outside the area where the loading platform 6440 is located.

That is to say, when the protective cover is placed on the base 6410, the horizontal projection of the side wall of the protective cover 6430 can surround the area outside the loading platform 6440. The area where the loading platform 6440 is located can be understood as the projection of the loading platform 6440 in the horizontal direction.

Exemplarily, the inclined distance between the top and bottom ends of the side wall of the protective cover 6430 can be smaller than the distance *d* ₃ between the inner edge 6412a of the step surface 6412 and the area where the loading platform 6440 is located. The outer edge of the loading platform 6440 surrounds the outside of the area where the plurality of material boxes 6420 are located, that is, the area where the loading platform 6440 is located includes the area where the plurality of material boxes 6420 are located. Therefore, the inclined distance between the top and bottom ends of the side wall of the protective cover 6430 is also smaller than the distance between the inner edge 6412a of the step surface 6412 and the area where the plurality of material boxes 6420 are located.

The position of the inner edge 6412a of the step surface 6412 is determined according to the inclination of the side wall of the protective cover 6430, so that the manufacturing cost of the protective cover 6430 can be reduced.

The bottom of the side wall of the protective cover 6430 may be provided with a protruding portion 6431 extending outward. Providing the protruding portion 6431 can improve the strength of the protective cover 6430 and reduce the possibility of deformation or damage of the protective cover 6430.

For the overall aesthetics and ease of use of the feeding apparatus 6400, the width of the step surface 6412 may be reasonably set to prevent the protruding portion 6431 of the protective cover 6430 from exceeding the side wall of the base 6410.

The width *l* ₂ of the step surface 6412 may be greater than the thickness *l*₁ of the bottom of the side wall of the protective cover 6430.

The thickness *l*₁ of the bottom of the side wall of the protective cover 6430 can be understood as the horizontal distance between the outermost end of the protruding portion 6431 and the inner position 6430a of the side wall of the protective cover 6430 at the height where the upper surface of the base 6410 is located.

The step surface 6412 and the bottom of the side wall of the protective cover 6430 are also rectangular, and the width *l* ₂ of the step surface can be greater than or equal to the sum of the difference between the first inner distance *d* ₁ of the bottom of the side wall of the protective cover 6430 and the second inner distance *d*₂ of the step surface 6412 and the thickness *l*₁ of the rectangular ring at the bottom of the side wall of the protective cover 6430. The thickness of the rectangular ring at the bottom of the side wall of the protective cover 6230 located on each side may be equal.

The first inner distance *d* ₁ may be understood as the distance between two opposite inner side walls of the protective cover 6430 at the height of the position 6430a. The second inner distance *d*₂ can be understood as the distance between the inner edges of the two opposite step surfaces 6412 of the two opposite inner side walls used to support the protective cover 6430.

The difference between the first inner distance *d* ₁ and the second inner distance d₂ can be understood as the maximum movement distance of the protective cover 6430 along a direction of a certain side of the rectangle. The sum of the maximum moving distance and the thickness *l*₁ of the rectangular ring at the bottom of the side wall of the protective cover 6430 can be understood as the maximum distance between the outermost end of the protruding portion 6431 and the inner edge of the step surface along this direction.

If the width *l* ₂ of the step surface is greater than or equal to the maximum distance between the outermost end of the protruding portion 6431 and the inner edge of the step surface, the protruding portion 6431 will not extend beyond the side wall of the base 6410.

An embodiment of the present application also provides a feeding apparatus, including a protective cover, a material box and the base described above.

An embodiment of the present application further provides a cooking device, which includes a cooking container and the aforementioned feeding apparatus.

The technical solution provided in the embodiment of the present application is explained in conjunction with specific application scenarios.

### Application Scenario 11

The cooking device is activated to start cooking a dish. During the cooking process, the controller of the cooking device outputs discharge indication information so that two material boxes containing salt water and sugar water in the plurality of material boxes of the feeding apparatus discharge materials in sequence. The weighing sensor periodically detects the total weight of the plurality of material boxes, and the processor determines the actual discharge amount of the material boxes according to the detection result of the weighing sensor. Thereby, the discharge amount of the material box can be monitored. The protective cover of the feeding apparatus covers the plurality of material boxes, and there is a gap between the protective cover and the plurality of material boxes. When the user touches the feeding apparatus during the discharge process of the two material boxes containing salt water and sugar water, it will not affect the detection result of the weighing sensor, thereby improving the accuracy of the detection of the discharge amount of the material box.

The introduction provided in the above steps is only used to help understand the method, structure and core idea of this application. For ordinary technicians in this technical field, several improvements and modifications can be made to the present application without departing from the principles of the present application. These improvements and modifications also fall within the scope of protection of the claims of the present application.

## Claims

1. A feeding control method, for controlling a feeding apparatus to feed seasoning to a cooking container of a cooking device, wherein the feeding apparatus comprises a plurality of material boxes, and the method comprises:
obtaining discharge indication information, wherein the discharge indication information is used to indicate that a target material box is a material box currently discharge material in the plurality of material boxes; and
calculating a current actual discharge amount of the target material box according to a detection result of a weighing sensor for detecting a total weight of the plurality of material boxes and the discharge indication information.

2. The method according to claim 1, wherein the method further comprises:
determining whether the target material box is short of material according to the current actual discharge amount of the target material box and a discharge amount theoretical value of the target material box.

3. The method according to claim 1, wherein the feeding apparatus further comprises a discharge pipe corresponding to each material box, each discharge pipe is respectively connected with a driving unit, each driving unit is used to drive the seasoning in the corresponding material box to be discharged into the cooking container through a corresponding discharge pipe, each driving unit is respectively provided with a turning number detector, each turning number detector is used to detect a turning number of a corresponding driving unit in a process of driving the seasoning in the corresponding material box to be discharged through the corresponding discharge pipe, each material box is also respectively connected with a corresponding material supplement device, each material supplement device stores same type of seasoning as the seasoning in the corresponding material box; and the method further comprises:
determining a target material box of a seasoning to be fed, a target demand amount of a target seasoning in the target material box, and a target feeding amount of the target seasoning to be fed; wherein the target feeding amount is not greater than the target demand amount;
if the target demand amount is not less than a preset reference feeding amount, determining a total turning number of a target driving unit corresponding to the target discharge pipe of the target material box according to the target feeding amount;
controlling a target material supplement device corresponding to the target material box to feed target seasoning into the target material box;
controlling the target driving unit to drive the target seasoning fed in the target material box to be discharged through the target discharge pipe, and obtaining a current turning number of a target turning number detector corresponding to the target driving unit in a process of the target driving unit discharging the target seasoning fed in the target material box; and
controlling an operation of the target driving unit according to the current turning number and the total turning number.

4. The method according to claim 1, the feeding apparatus further comprises a weighing component and a discharge pipe corresponding to each material box, the weighing component is used to weigh a total weight of each material box, each discharge pipe is used to transmit the seasoning in the corresponding material box, each discharge pipe is respectively provided with a flow rate detection unit, each flow rate detection unit is used to detect a seasoning flow rate transmitted in the corresponding discharge pipe, and the method further comprises:
determining a target material box of a target seasoning to be fed, a target feeding amount of the target seasoning, and a target seasoning flow rate corresponding to the target feeding amount;
controlling the target seasoning in the target material box to be discharged through a target discharge pipe corresponding to the target material box, and obtaining a current weight value weighed by the weighing component in a process of the target seasoning in the target material box being discharged through the target discharge pipe;
if a change between the current weight value and the weight value at a previous moment is greater than a preset change threshold, obtaining a current seasoning flow rate detected by a target flow rate detection unit corresponding to the target discharge pipe a process of the target seasoning in the target material box being discharged through the target discharge pipe; and
controlling the target seasoning in the target material box to be discharged through the target discharge pipe according to the current seasoning flow rate and the target seasoning flow rate.

5. The method according to claim 1, wherein the feeding apparatus further comprises a weighing component, each material box is respectively provided with a corresponding discharge pipe, and the weighing component is used to weigh a total weight of each material box, and the method further comprises:
determining a target discharge pipe to be cleaned;
controlling cleaning liquid in the target material box corresponding to the target discharge pipe to be discharged through the target discharge pipe;
obtaining a current weight value weighted by the weighing component in a process of the target discharge pipe discharging the cleaning liquid in the target material box; and
if a weight change between the current weight value and a weight value at a previous moment is less than a preset change threshold, determining a cleaning of the target discharge pipe is completed.

6. A feeding apparatus, for feeding seasoning to a cooking container of a cooking device, and the feeding apparatus comprises:
a plurality of material boxes;
an obtaining unit, configured to obtain discharge indication information, wherein the discharge indication information is used to indicate that a target material box in the plurality of material boxes, and to start a discharging process; and
a calculating unit, configured to calculate a current actual discharge amount of the target material box according to a detection result of a weighing sensor for detecting a total weight of the plurality of material boxes and the discharge indication information.

7. A feeding apparatus, comprising: a processor and a memory;
the memory is used to store a program, and the processor calls the program stored in the memory to execute the method according to any one of claims 1 to 5.

8. A computer-readable storage medium, wherein the computer-readable storage medium stores a program and data, and the program is executed by a processor to implement the method according to any one of claims 1 to 5.

9. A feeding system, comprising a feeding apparatus and a control end, wherein the control end is communicatively connected with the feeding apparatus and is used to control the feeding apparatus to perform a feeding operation and implement the feeding control method according to any one of claims 1 to 5.

10. A cooking device, comprising a cooking container, a feeding system and a feeding pipe component; wherein,
the feeding system comprises a feeding apparatus and a control end, the feeding apparatus comprises a plurality of material boxes and a discharge pipe corresponding to each material box, each discharge pipe is respectively connected with the feeding pipe component, so as to fed seasoning required for cooking to the cooking container through the feeding pipe component;
the feeding apparatus further comprises a memory and a processor, the memory is used to store a computer program, and when the computer program is executed by the processor, to implement the feeding control method according to any one of claims 1 to 5.

11. A feeding apparatus, comprising: a material amount detection unit, a weighing sensor and a plurality of material boxes; wherein,
the weighing sensor is used to detect a total weight of the plurality of material boxes;
the material amount detection unit is used to obtain discharge indication information, and calculate a current actual discharge amount of the target material box according to the discharge indication information and a detection result of the weighing sensor; the target material box is a material box currently discharge material in the plurality of material boxes indicated by the discharge indication information.

12. A cooking device, comprising the feeding apparatus according to claim 11.

13. A cooking device, comprising a feeding apparatus and a cooking container; wherein,
the feeding apparatus comprises:
a weighing component, comprising weighing sensor;
a plurality of material boxes, provided on the weighing component, and the weighing sensor is used to detect a total weight of the plurality of material boxes;
a material amount detection unit, used to obtain discharge indication information, and calculate a current actual discharge amount of a target material box according to the discharge indication information and a detection result of the weighing sensor; the target material box is a material box currently discharge material in the plurality of material boxes indicated by the discharge indication information; and
at least two feeding components, the feeding component one-to-one corresponds to the material box, each feeding component comprises a feeding pipe, a first pipe segment connecting piece, a second pipe segment connecting piece and a driving piece, the feeding pipe comprises a first pipe segment and a second pipe segment, the first pipe segment connecting piece is fixed with the weighing component, a corresponding material box is connected to the first pipe segment connecting piece, the first pipe segment connects the first pipe segment connecting piece and the second pipe segment connecting piece, the second pipe segment connects the second pipe segment connecting piece and the driving piece, a downstream of the driving piece is connected to the cooking container, and the second pipe segment connecting piece is fixed with the driving piece.

14. The cooking device according to claim 13, wherein at least part of the first pipe segment is flexible; the first pipe segment is a hose; the second pipe segment is a hose; the weighing component comprises a weighing sensor, and the weighing sensor at least partially overlaps with a projection of the second pipe segment on a horizontal plane.

15. A feeding structure, comprising:
a weighing component, comprising a weighing sensor, wherein the weighing sensor is used to detect a total weight of a plurality of material boxes provided on the weighing component;
a material amount detection unit, used to obtain discharge indication information, and calculate a current actual discharge amount of a target material box according to the discharge indication information and a detection result of the weighing sensor; the target material box is a material box currently discharge material in the plurality of material boxes indicated by the discharge indication information;
at least two groups of feeding components, the feeding component comprises a feeding pipe, a first pipe segment connecting piece, a second pipe segment connecting piece and a driving piece, the feeding pipe comprises a first pipe segment and a second pipe segment, the first pipe segment connecting piece is used to connect seasoning, the first pipe segment connects the first pipe segment connecting piece and the second pipe segment connecting piece, the second pipe segment connects the second pipe segment connecting piece and the driving piece, a downstream of the driving piece is used to connect to a cooking container, the first pipe segment connecting piece is fixed with the weighing component, and the second pipe segment connecting piece is fixed with the driving piece.
